(19) **Europäisches Patentamt / European Patent Office / Office européen des brevets**

(11) **EP 2 595 221 A1**

(12) **EUROPEAN PATENT APPLICATION**
published in accordance with Art. 153(4) EPC

(43) Date of publication:
**22.05.2013 Bulletin 2013/21**

(21) Application number: **11806862.6**

(22) Date of filing: **14.07.2011**

(51) Int Cl.:
*H01M 4/131* (2010.01)   *H01M 4/13* (2010.01)
*H01M 4/36* (2006.01)   *H01M 4/505* (2010.01)
*H01M 4/525* (2010.01)   *H01M 4/62* (2006.01)

(86) International application number:
**PCT/JP2011/066109**

(87) International publication number:
**WO 2012/008532 (19.01.2012 Gazette 2012/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2010 JP 2010161815**

(71) Applicant: **Mitsubishi Chemical Corporation Chiyoda-ku Tokyo 100-8251 (JP)**

(72) Inventors:
• **TAKANO, Shoji**
  **Inashiki-gun**
  **Ibaraki 300-0332 (JP)**

• **SHIZUKA, Kenji**
  **Inashiki-gun**
  **Ibaraki 300-0332 (JP)**
• **KIM, Jungmin**
  **Inashiki-gun**
  **Ibaraki 300-0332 (JP)**
• **KUSANO, Tomohiro**
  **Inashiki-gun**
  **Ibaraki 300-0332 (JP)**
• **KIJIMA, Masato**
  **Inashiki-gun**
  **Ibaraki 300-0332 (JP)**

(74) Representative: **Vossius & Partner Siebertstrasse 4 81675 München (DE)**

(54) **POSITIVE ELECTRODE FOR LITHIUM SECONDARY BATTERIES AND LITHIUM SECONDARY BATTERY USING SAME**

(57)    The invention is to provide a positive electrode for lithium secondary battery which is capable of attaining both increases in the capacity and output of lithium secondary batteries and a prolongation of the life thereof, and to further provide a lithium secondary battery which employs this positive electrode for lithium secondary battery. The invention relates to positive electrode for lithium secondary battery which comprises an active material and a conductive material, wherein the active material comprises a lithium-transition metal compound which has a function of being capable of insertion and desorption of lithium ion, the lithium-transition metal compound gives a surface-enhanced Raman spectrum which has a peak at 800-1,000 cm$^{-1}$, and the conductive material comprises carbon black which has a nitrogen adsorption specific surface area ($N_2SA$) of 70-300 m$^2$/g and an average particles diameter of 10-35 nm, and a lithium secondary battery which employs the same.

EP 2 595 221 A1

**Description**

Technical Field

The present invention relates to a positive electrode for use in lithium secondary battery or the like and to lithium secondary battery which employs the positive electrode for lithium secondary battery.

Background Art

In recent years, with the trend toward size and weight reductions and function advancement in electronic appliances, lithium secondary batteries for use in the appliances are being developed. The positive electrodes to be used in these lithium secondary batteries usually necessitate an active material which has the function of being capable of holding and releasing electrons. However, since this active material does not always have high electronic conductivity or decreases in electronic conductivity during use, there are often cases where this active material, when used alone, does not function satisfactorily. Consequently, a mixture of such an active material and a conductive material having the function of transferring electrons is usually used in order to form conduction paths between particles of the active material and between the active material and the current collector.

As the conductive material, use is generally made of a satisfactorily electrically conductive carbonaceous material obtained by firing or burning an organic substance at a high temperature. It is, however, known that the properties of this conductive material considerably affect the performance of the positive electrode and hence the performance of the lithium secondary battery.

Although the following explanation is made on lithium secondary batteries as an example, the lithium secondary batteries of the invention should not be construed as being limited in the kind of the conductive material unless the effects thereof are impaired.

Among Lithium secondary batteries, the secondary batteries which are called lithium secondary batteries or lithium ion secondary batteries are excellent in terms of energy density, output density, etc. and are capable of being reduced in size and weight. These secondary batteries hence are being used as power sources for portable appliances, such as, for example, notebook type personal computers, portable telephones, and handy video cameras, and for hybrid electric vehicles, and investigations for further enhancing the performance are being made enthusiastically.

As positive active materials for lithium secondary batteries, compounds which are capable of occluding and releasing lithium are used. More specifically, lithium-transition metal oxides such as lithium-manganese oxides having a spinel structure and lithium-cobalt oxides having a lamellar structure are usually used as the positive active materials.

As positive electrodes, use is made of electrodes obtained by adhering any of those active materials to a current collector together with a conductive material and a binder. The positive electrodes, in particular, necessitate incorporation of a conductive material, because the active material shows low electronic conductivity and, hence, the positive electrodes do not work sufficiently in the absence of a conductive material.

Extensively used as the conductive material is carbon black such as, for example, acetylene black or Ketjen Black. In particular, acetylene black is in main use.

In recent years, however, electronic appliances are required to be further reduced in weight and to have higher performance, e.g., a longer operation period, and lithium secondary batteries also are hence required to be further increased in capacity and output and to have a longer life. Accordingly, improvements in the active materials and conductive materials which are to be used in the positive electrodes have become necessary.

An increase in the capacity of a battery means that when a positive electrode for the battery is produced, a positive active material, a conductive material, and a binder are loaded as densely as possible on the electrode. For attaining this, it is necessary to render the deposited layer less apt to crack during the step of producing the positive electrode or when the positive electrode is wound. Consequently, it is important, for obtaining such an electrode, to select a specific positive active material and a specific conductive material to thereby enhance the strength of the electrode.

An increase in the output of a battery means to improve the battery so that even when the battery is charged and discharged at a current higher than conventional currents, the battery suffers little polarization and can have a high capacity. For attaining this, it is important that the conductive material should form effective conduction paths in the positive electrode to enable the performance inherent in the active material to be sufficiently exhibited.

Meanwhile, a life prolongation of a battery means to improve the battery so that even when the number of repetitions of charge/discharge cycling is increased beyond conventional values, the battery performance is inhibited from deteriorating. For attaining this, it is important that the positive active material and the conductive material should efficiently constitute conduction paths. Consequently, it is important that, when the electrode is produced, a specific positive active material and a specific conductive material should be selected to thereby enhance close contact between the surface of the positive electrode and the conductive material.

The present applicant diligently made investigations for improving bulk density and optimizing specific surface area in order to accomplish the subject of improving powder properties while improving load characteristics such as rate/output characteristics, as described in patent document 1. As a result, it was found that a lithium-containing transition metal compound powder which is easy to handle and facilitates positive-electrode preparation can be obtained, without impairing the improving effect described above, by adding one or more compounds which contain at least one element selected from B and Bi and one or more compounds which contain at least one element selected from Mo and W, in combination in a specific proportion, and burning the mixture, and that it is possible to obtain a lithium-transition metal compound powder which, when used as a positive-electrode material for lithium secondary batteries, shows excellent powder properties, high load characteristics, high high-voltage resistance, and high safety and which renders a cost reduction possible. It was also found that such a lithium-transition metal compound powder gives a surface-enhanced Raman spectrum which has a characteristic peak.

Patent document 2 describes that a positive electrode for lithium secondary battery which, when used to produce a lithium secondary battery, enables the battery to combine an increased output and a prolonged life can be produced by using specific carbon black and a positive active material for the production.

Patent documents 3 and 4 describe that a binder having a low molecular weight is used when a positive electrode is produced.

Patent document 5 describes that initial discharge capacity and cycle characteristics can be improved with lithium cobalt oxide having an angle of repose of 70 degrees or less.

Patent document 6 describes a highly efficient technique for classifying positive active materials, and includes a statement to the effect that a positive active material having an angle of repose which is within the range according to the present invention is obtained as a result.

Prior-Art Documents

Patent Documents

Patent Document 1: JP-A-2008-270161
Patent Document 2: JP-A-2006-210007
Patent Document 3: JP-A-2009-37937
Patent Document 4: JP-A-2005-268206
Patent Document 5: JP-A-2001-307729
Patent Document 6: JP-A-2006-278031

Summary of the Invention

Problems that the Invention is to Solve

As stated above, recent lithium secondary batteries are required to have a further increased capacity, increased output, or prolonged life or required to be simultaneously improved in all these properties. The positive active material as described in patent document 1 shows increased electronic resistance in the positive electrode produced therewith, and it is therefore important to maintain conduction paths. There has hence been a desire for a further improvement in cycle characteristics. Meanwhile, in the case where a positive active material in which the surface is not basic is used to produce a positive electrode for lithium secondary battery as described in patent document 2, there has been an unsolved problem concerning safety.

In this connection, when the conductive material as described in patent document 2 is used in combination with the positive active material as described in patent document 1, then the shape of the conductive material renders the conductive material apt to be in contact with the surface of the positive active material and this contact is apt to be maintained. It is presumed that the power of maintaining conduction paths has hence been improved.

Patent documents 3 and 4 describe that a binder having a low molecular weight is used when a positive electrode is produced. However, the documents include no statement at all concerning, for example, the stability of the positive-electrode slurry, which may be problematic when a specific conductive material characterized, for example, by having a large nitrogen adsorption specific surface area, a small average particle diameter, or a high volatile content is used. There also is no statement therein which suggests such a technical idea.

Furthermore, although patent document 5 and patent document 6 include a statement concerning the angle of repose according to the invention, the material has not undergone a surface treatment and has a low volume resistivity. Consequently, an improvement in battery characteristics in the case of using a material having a high volume resistivity, such as the material described in patent document 1, is not taken into account therein.

An object of a first aspect of the invention is to provide, in order to satisfy both an output increase and a life prolongation which are required of lithium secondary batteries: a positive electrode for lithium secondary battery which enables a lithium secondary battery to combine an increased output and a prolonged life, because the positive electrode employs carbon black selected on the basis of designs of properties of carbon blacks suitable for use in the positive electrode; and a lithium secondary battery which employs the positive electrode for lithium secondary battery.

An object of a second aspect of the invention is to provide, in order to satisfy both an output increase and a life prolongation which are required of lithium secondary batteries: a positive electrode for lithium secondary battery which employs a specific conductive material and with which a lithium secondary battery can be made to combine an increased output and a prolonged life by selecting the kind of binder; and a lithium secondary battery which employs this positive electrode for lithium secondary battery.

An object of a third aspect of the invention is to provide, in order to satisfy both an output increase and a life prolongation which are required of lithium secondary batteries: a positive electrode for lithium secondary battery which, even when having a high volume resistivity, is capable of giving a lithium secondary battery that combines an increased output and a prolonged life, because the positive electrode employs a positive active material having a specific surface state and, hence, has enhanced close contact between the positive active material and the conductive material; and a lithium secondary battery which employs this positive electrode for lithium secondary battery. Means for Solving the Problems

First, in order to attain an output increase and a life prolongation in lithium secondary batteries, the present inventors made investigations on correlations between a specific active material, carbon black for use as a conductive material for positive electrodes for lithium secondary batteries, and the electrochemical characteristics of a lithium secondary battery employing these materials. As a result, the inventors found that the powder properties, among the properties of the carbon black used as a conductive material in combination with the specific active material, exert a considerable influence on an improvement in output and an improvement in cycle life, and that carbon black which has specific values of these properties is capable of simultaneously attaining improvements in the output and life of a lithium secondary battery. The invention has been thus accomplished.

Secondly, in order to attain an output increase and a life prolongation in lithium secondary batteries, the present inventors made investigations on correlations between use of a specific conductive material, selection of the kind of binder, and the electrochemical characteristics of a lithium secondary battery employing these materials. As a result, the inventors found that when the specific conductive material is used, when the specific conductive material is used, the pot life of the slurry which is used when a positive electrode is produced can be improved by selecting the kind of binder. The invention has been thus accomplished.

Thirdly, in order to attain an output increase and a life prolongation in lithium secondary batteries, the present inventors used a positive active material having a specific surface state to thereby enhance close contact between the positive active material and a conductive material, and made investigations on correlations between the positive active material and the electrochemical characteristics of a lithium secondary battery employing the material. As a result, the inventors found that when a positive electrode in which the active-material powder has a volume resistivity not lower than a given value is used, the angle of repose of the active-material powder exerts a considerable influence on an improvement in output and an improvement in cycle life, and that when the angle of repose thereof is not less than a given value, improvements in the output and life of the lithium secondary battery can be simultaneously attained. The invention has been thus accomplished.

The carbon black to be used in the invention is not limited in processes for production thereof, etc., so long as the carbon black satisfies the powder properties specified herein. However, an example thereof is carbon black based on the carbon black which will be described later. Namely, the present inventors found that when oil-furnace carbon black, which will be described later, is used as the conductive material of a positive electrode for lithium secondary battery, this positive electrode shows excellent properties.

Essential points of the invention reside in the following.

[A1] A positive electrode for lithium secondary battery which comprises an active material and a conductive material, wherein

the active material comprises a lithium-transition metal compound which has a function of being capable of insertion and desorption of lithium ion,

the lithium-transition metal compound gives a surface-enhanced Raman spectrum which has a peak at 800-1,000 cm$^{-1}$, and

the conductive material comprises carbon black which has a nitrogen adsorption specific surface area ($N_2SA$) of 70-300 m$^2$/g and an average particle diameter of 10-35 nm.

[A2] The positive electrode for lithium secondary battery according to the [A1] above, wherein in the surface-enhanced Raman spectrum of the lithium-transition metal compound, the peak at 800-1,000 cm$^{-1}$ has a half-value width of 30

cm$^{-1}$ or larger.

[A3] The positive electrode for lithium secondary battery according to the [A1] or [A2] above, wherein in the surface-enhanced Raman spectrum of the lithium-transition metal compound, a ratio of an intensity of the peak at 800-1,000 cm$^{-1}$ to an intensity of a peak at around 600±50 cm$^{-1}$ is 0.04 or greater.

[A4] A positive electrode for lithium secondary battery which includes an active material and a conductive material, wherein

the active material comprises: a lithium-transition metal compound having a function of being capable of insertion and desorption of lithium ion; at least one element, as additive element 1, selected from B and Bi; and at least one element, as additive element 2, selected from Mo and W, wherein a molar ratio of a sum of the additive element 1 to a sum of metallic elements other than the lithium and the additive element I and additive element 2 in surface part of primary particles of the active material is at least 20 times the molar ratio in the whole particles, and

the conductive material comprises carbon black which has a nitrogen adsorption specific surface area (N$_2$SA) of 70-300 m$^2$/g and an average particle diameter of 10-35 nm.

[A5] The positive electrode for lithium secondary battery according to any one of the [A1 to [A4] above, wherein a molar ratio of a sum of the additive element 2 to a sum of metallic elements other than the lithium and the additive element 1 and additive element 2 in surface part of primary particles of the active material is at least 3 times the molar ratio in the whole particles.

[A6] A positive electrode for lithium secondary battery which comprises an active material and a conductive material, wherein

the active material is a lithium-transition metal compound powder obtained by adding both one or more compounds, as additive 1, that contain at least one element selected from B and Bi and one or more compounds, as additive 2, that contain at least one element selected from Mo and W to a raw material which comprises a lithium-transition metal compound having a function of being capable of insertion and desorption of lithium ion, in such a proportion that the total amount of the additive 1 and the additive 2 is 0.01% by mole or more but less than 2% by mole based on the total amount of the transition metal element(s) contained in the raw material, and then burning the mixture, and

the conductive material comprises carbon black which has a nitrogen adsorption specific surface area (N$_2$SA) of 70-300 m$^2$/g and an average particle diameter of 10-35 nm.

[A7] The positive electrode for lithium secondary battery according to any one of the [A1] to [A6] above, which is obtained by subjecting the active material and the conductive material to a mechanochemical treatment.

[A8] The positive electrode for lithium secondary battery according to any one of the [A1] to [A7] above, wherein the carbon black has a crystallite size Lc of 10-40 angstrom.

[A9] The positive electrode for lithium secondary battery according to any one of the [A1] to [A8] above, wherein the proportion of the conductive material to the weight of the active material is 0.5-15% by weight.

[A10] The positive electrode for lithium secondary battery according to any one of the [A1] to [A9] above, wherein the active material comprises a lithium-nickel-manganese-cobalt composite oxide which includes crystal structure that belongs to a lamellar structure.

[A11] The positive electrode for lithium secondary battery according to any one of [A1] to [A10] above, wherein the carbon black is oil-furnace carbon black.

[A12] A lithium secondary battery which comprises a positive electrode, a negative electrode, and a nonaqueous electrolyte that contains a lithium salt, wherein

the positive electrode is the positive electrode for lithium secondary battery according to any one of the [A1] to [A11] above.

[B1] A positive electrode for lithium secondary battery which comprises an active material, a conductive material, and a binder, wherein

the conductive material has a nitrogen adsorption specific surface area (N$_2$SA) of 70 m$^2$/g or larger, and

when the nitrogen adsorption specific surface area (N$_2$SA, unit: m$^2$/g) of the conductive material is expressed by S and a weight-average molecular weight of the binder is expressed by M, the S and the M satisfy the following expression (1).

$$(S \times M)/10,000 \le 7,500 \qquad (1)$$

[B2] A positive electrode for lithium secondary battery which comprises an active material, a conductive material, and a binder, wherein

the conductive material has an average particle diameter of 35 nm or less, and
when the nitrogen adsorption specific surface area (N$_2$SA, unit: m$^2$/g) of the conductive material is expressed by S and the weight-average molecular weight of the binder is expressed by M, the S and the M satisfy the following expression (1).

$$(S \times M)/10,000 \leq 7,500 \qquad (1)$$

[B3] A positive electrode for lithium secondary battery which comprises an active material, a conductive material, and a binder, wherein
the conductive material has a volatile content of 0.8% or higher, and
when the nitrogen adsorption specific surface area (N$_2$SA, unit: m$^2$/g) of the conductive material is expressed by S and the weight-average molecular weight of the binder is expressed by M, the S and the M satisfy the following expression (1).

$$(S \times M)/10,000 \leq 7,500 \qquad (1)$$

[B4] The positive electrode for lithium secondary battery according to any one of the [B1] to [B3] above, wherein the binder has a weight-average molecular weight of 600,000 or less.
[B5] The positive electrode for lithium secondary battery according to any one of the [B1] to [B4] above, wherein the binder is PVdF.
[B6] The positive electrode for lithium secondary battery according to any one of the [B1] to [B5] above, wherein the conductive material has a nitrogen adsorption specific surface area (N$_2$SA) of 70 m$^2$/g or larger.
[B7] The positive electrode for lithium secondary battery according to any one of the [B1] to [B6] above, wherein the conductive material has an average particle diameter of 35 nm or less.
[B8] The positive electrode for lithium secondary battery according to any one of the [B1] to [B7] above, wherein the conductive material has a volatile content of 0.8% or higher.
[B9] The positive electrode for lithium secondary battery according to any one of the [B1] to [B8] above, wherein the conductive material is oil-furnace carbon black.
[B10] The positive electrode for lithium secondary battery according to any one of the [B1] to [B9] above, wherein the proportion of the conductive material to the weight of the active material is 0.5-15% by weight.
[B11] The positive electrode for lithium secondary battery according to any one of the [B1] to [B10] above, wherein the active material comprises a lithium-transition metal composite oxide.
[B12] The positive electrode for lithium secondary battery according to anyone of the [B1] to [B11] above, wherein the active material gives a surface-enhanced Raman spectrum which has a peak at 800-1,000 cm$^{-1}$.
[B13] A lithium secondary battery which comprises a positive electrode, a negative electrode, and a nonaqueous electrolyte that contains a lithium salt, wherein
the positive electrode is the positive electrode for lithium secondary battery according to any one of the [B1] to [B12].

[C1] A positive electrode for lithium secondary battery which comprises an active material and a conductive material, wherein
the active material is a compound which is capable of occluding and releasing lithium,
the active material, when compacted at a pressure of 40 MPa, has a volume resistivity of $5 \times 10^5$ Ω·cm or higher,
the active material has an angle of repose of 50° or larger and has a bulk density of 1.2 g/cc or higher, and
the conductive material has a nitrogen adsorption specific surface area (N$_2$SA) of 20-300 m$^2$/g.
[C2] The positive electrode for lithium secondary battery according to the [C1] above, wherein the active material has a median diameter of 2 μm or larger.
[C3] The positive electrode for lithium secondary battery according to the [C1] or [C2] above, wherein the active material has a BET specific surface area of 0.6-3 m$^2$/g.
[C4] The positive electrode for lithium secondary battery according to any one of the [C1] to [C3] above, wherein the active material gives a surface-enhanced Raman spectrum which has a peak at 800-1,000 cm$^{-1}$.
[C5] The positive electrode for lithium secondary battery according to any one of the [C1] to [C4] above, wherein the conductive material comprises carbon black which has an average particle diameter of 10-35 nm.
[C6] The positive electrode for lithium secondary battery according to any one of the [C1] to [C5] above, wherein the carbon black has a crystallite size Lc of 10-40 angstrom.

[C7] The positive electrode for lithium secondary battery according to any one of the [C1] to [C6] above, wherein the proportion of the conductive material to the weight of the active material is 0.5-15% by weight.

[C8] The positive electrode for lithium secondary battery according to any one of the [C1] to [C7], which contains a lithium-nickel-manganese-cobalt composite oxide which includes a crystal structure that belongs to a lamellar structure.

[C9] The positive electrode for lithium secondary battery according to any one of [C1] to [C8] above, wherein the carbon black is at least one of acetylene black and oil-furnace carbon black.

[C10] A lithium secondary battery which comprises a positive electrode, a negative electrode, and a nonaqueous electrolyte that contains a lithium salt, wherein

the positive electrode is the positive electrode for lithium secondary battery according to any one of the [C1] to [C9].

Effects of the Invention

According to the invention, when an active material having specific properties is used in a positive electrode for lithium secondary battery, the performance of this positive electrode can be improved by controlling the properties of the carbon black used therein as a conductive material, and this improvement, in turn, can bring about performance advancement in the lithium secondary batteries. Especially when this positive electrode for lithium secondary battery is used as the positive electrode of a lithium secondary battery, this lithium secondary battery can have both an increased output and a prolonged life, which have hitherto been regarded as difficult to attain simultaneously.

Modes for Carrying Out the Invention

Modes for carrying out the invention will be explained below in detail. However, the following explanations on constituent elements are for embodiments (representative embodiments) of the invention, and the invention should not be construed as being limited to the following embodiments unless the invention departs from the spirit thereof.

[Lithium Secondary Batteries]

Examples of the lithium secondary batteries in the invention include small lithium secondary batteries mainly for use in electronic appliances or the like and automotive lithium secondary batteries, on which investigations are coming to be enthusiastically made recently.

As stated above, the positive electrodes for use in these lithium secondary batteries usually necessitate an active material which has the function of being capable of holding and releasing electrons. However, since this active material does not always have high electronic conductivity or decreases in electronic conductivity during use, there are often cases where this active material, when used alone, does not function satisfactorily. Consequently, a mixture of such an active material and a conductive material having the function of transferring electrons is generally used in order to form conduction paths between particles of the active material and between the active material and the current collector.

In the invention, the properties of this conductive material to be incorporated into a positive electrode are designed and controlled, thereby providing positive electrodes having higher performance and, hence, lithium secondary batteries having higher performance.

[Positive Electrodes for Lithium Secondary Batteries]

The positive electrodes for lithium secondary batteries according to the first aspect of the invention include an active material and carbon black, as a conductive material, that has specific properties such as those described above. Since the conductive material is electrochemically stable and has high electrical conductivity, suitable performance can be obtained.

More specifically, the positive electrodes according to the first aspect are the following three positive electrodes.

(1) A positive electrode for lithium secondary battery which includes an active material and a conductive material, characterized in that

the active material comprises a lithium-transition metal compound which has the function of being capable of insertion and desorption of lithium ion,

the lithium-transition metal compound gives a surface-enhanced Raman spectrum which has a peak at 800-1,000 $cm^{-1}$, and

the conductive material comprises carbon black which has a nitrogen adsorption specific surface area ($N_2SA$) of 70-300 $m^2/g$ and an average particle diameter of 10-35 nm.

(2) A positive electrode for lithium secondary battery which includes an active material and a conductive material, characterized in that

the active material comprises a lithium-transition metal compound having the function of being capable of insertion and desorption of lithium ion and contains both at least one element (hereinafter referred to as "additive element 1") selected from B and Bi and at least one element (hereinafter referred to as "additive element 2") selected from Mo and W, wherein the molar ratio of the sum of the additive element 1 to the sum of the metallic elements other than the lithium and the additive element 1 and additive element 2 in surface parts of the primary particles of the active material is at least 20 times the molar ratio in the whole particles, and

the conductive material comprises carbon black which has a nitrogen adsorption specific surface area ($N_2SA$) of 70-300 $m^2$/g and an average particles diameter of 10-35 nm.

(3) A positive electrode for lithium secondary battery which includes an active material and a conductive material, characterized in that

the active material is a lithium-transition metal compound powder for use as a positive-electrode material for lithium secondary batteries, the powder being obtained by adding both one or more compounds (hereinafter referred to as "additive 1") that contain at least one element selected from B and Bi (hereinafter referred to as "additive element 1") and one or more compounds (hereinafter referred to as "additive 2") that contain at least one element selected from Mo and W (hereinafter referred to as "additive element 2") to a raw material which comprises a lithium-transition metal compound having the function of being capable of insertion and desorption of lithium ion, in such a proportion that the total amount of the additive 1 and the additive 2 is 0.0 1 % by mole or more but less than 2% by mole based on the total molar amount of the transition metal element(s) contained in the raw material, and then burning the mixture, and

the conductive material comprises carbon black which has a Nitrogen adsorption specific surface area ($N_2SA$) of 70-300 $m^2$/g and an average particle diameter of 10-35 nm.

In the positive electrodes of the invention for lithium secondary batteries, one carbon black having properties within the ranges specified in the invention, among the carbon blacks which will be described later, may be used alone as the conductive material or two or more such carbon blacks may be used in combination as the conductive material.

with respect to the positive electrodes for lithium secondary batteries according to the second aspect of the invention, it is possible to obtain a suitable slurry for positive-electrode production, because the kind of binder is selected when a specific conductive material is used.

More specifically, the positive electrodes according to the second aspect are the following three positive electrodes.

(1) A positive electrode for lithium secondary battery which includes an active material, a conductive material, and a binder, characterized in that

the conductive material has a nitrogen adsorption specific surface area ($N_2SA$) of 70 $m^2$/g or larger, and

when the nitrogen adsorption specific surface area ($N_2SA$; unit, $m^2$/g) of the conductive material is expressed by S and the weight-average molecular weight of the binder is expressed by M, the S and the M satisfy the following expression (1).

$$(S \times M)/10,000 \leq 7,500 \qquad (1)$$

(2) A positive electrode for lithium secondary battery which includes an active material, a conductive material, and a binder, characterized in that

the conductive material has an average particle diameter of 35 nm or less, and

when the nitrogen adsorption specific surface area ($N_2SA$; unit, $m^2$/g) of the conductive material is expressed by S and the weight-average molecular weight of the binder is expressed by M, the S and the M satisfy the following expression (1).

$$(S \times M)/10,000 \leq 7,500 \qquad (1)$$

(3) A positive electrode for lithium secondary battery which includes an active material, a conductive material, and a binder, characterized in that

the conductive material has a volatile content of 0.8% or higher, and

when the nitrogen adsorption specific surface area ($N_2SA$; unit, $m^2$/g) of the conductive material is expressed by S and the weight-average molecular weight of the binder is expressed by M, the S and the M satisfy the following expression (1).

$$(S \times M)/10,000 \leq 7,500 \qquad\qquad (1)$$

In the positive electrodes of the invention for lithium secondary batteries, one of the carbon blacks which will be described later may be used alone as the conductive material or two or more thereof may be used in combination as the conductive material.

In the positive electrode for lithium secondary battery according to the third aspect of the invention, enhanced close contact between the positive active material and the conductive material is attained by using, as the positive active material, an active material having a specific surface state. It is therefore possible to obtain suitable performance using the positive active material which has a high volume resistivity.

More specifically, the positive electrode according to the third aspect is the following positive electrode.

(1) A positive electrode for lithium secondary battery which includes an active material and a conductive material, characterized in that
the active material is a compound which is capable of occluding and releasing lithium,
the active material, when compacted at a pressure of 40 MPa, has a volume resistivity of $5 \times 10^5$ $\Omega \cdot$cm or higher,
the active material has an angle of repose of 50° or larger and has a bulk density of 1.2 g/cc or higher, and
the conductive material has a nitrogen adsorption specific surface area ($N_2$SA) of 20-300 $m^2$/g.

In the positive electrode for lithium secondary battery of the invention, one of the carbon blacks which will be described later may be used alone as the conductive material or two or more thereof may be used in combination as the conductive material.

[Positive Electrodes for Lithium Secondary Batteries according to First Aspect]

The positive electrodes for lithium secondary batteries according to the first aspect of the invention are explained next.

The positive electrodes for lithium secondary batteries according to the invention each are a positive electrode obtained by forming a positive active layer which includes specific carbon black as a conductive material according to the invention, an active material, and a binder on a current collector.

The positive active layer is usually formed by mixing a conductive material, a positive active material, a binder, and optional ingredients, e.g., a thickener, by a dry process, forming the mixture into a sheet, and press-bonding the sheet to a positive current collector, or by dissolving or dispersing those materials in a liquid medium to obtain a slurry, applying the slurry to a positive current collector, and drying the slurry applied.

It is preferred that the positive active layer obtained through slurry application and drying should be pressed and densified with a handpress, roller press, or the like in order to heighten the loading density of the positive active material.

The thickness of the positive active layer is usually about 10-200 $\mu$m.

[Active Material]

[Lithium-transition Metal Compound Powder]

It is preferred, as shown above, that the lithium-transition metal compound powder according to the invention for use as a positive-electrode material for lithium secondary batteries (hereinafter, the powder is often referred to as "positive active material of the invention") should give a surface-enhanced Raman spectrum which has a peak at 800-1,000 cm$^{-1}$ (hereinafter referred to as peak A).

Surface-enhanced Raman spectroscopy (hereinafter abbreviated to SERS) is a technique in which a Raman spectrum assigned to molecular vibration occurring in the outermost surface of a sample is selectively enhanced by extremely thinly vapor-depositing a noble metal, e.g., silver, on the sample surface in a sea-island arrangement. Although detection depths in ordinary Raman spectroscopy are about 0.1-1 $\mu$m, most of the signals obtained by SERS are signals assigned to the surface-layer parts which are in contact with the noble-metal particles.

In the invention, the SERS spectrum has a peak at 800-1,000 cm$^{-1}$ (hereinafter referred to as peak A). The position of peak A is generally 800 cm$^{-1}$ or above, preferably 810 cm$^{-1}$ or above, more preferably 820 cm$^{-1}$ or above, even more preferably 830 cm$^{-1}$ or above, most preferably 840 cm$^{-1}$ or above, and is generally 1,000 cm$^{-1}$ or less,

preferably 980 cm$^{-1}$ or less, more preferably 960 cm$^{-1}$ or less, most preferably 940 cm$^{-1}$ or less. In case where the position thereof is outside the range, there is a possibility that the effects of the invention might not be sufficiently obtained.

It is preferred in the positive active material of the invention that the peak A in SERS should have a half-value width of 30 cm$^{-1}$ or larger, as shown above. The half-value width thereof is more preferably 60 cm$^{-1}$ or larger. The broad peak having such a half-value width is presumed to be assigned to an additive element which has undergone a chemical change due to an interaction with an element contained in the positive active material. In case where the half-value width of peak A is outside that range, namely, in case where the interaction between the additive element and an element contained in the positive active material is weak, there is a possibility that the effects of the invention might not be sufficiently obtained. The term "additive element" used here has the same meaning as the additive elements which will be described later.

Furthermore, it is preferred that the positive active material of the invention should satisfy the following. In SERS, the ratio of the intensity of peak A to the intensity of a peak appearing at 600±50 cm$^{-1}$ (hereinafter referred to as peak B) is 0.04 or greater, as shown above. The ratio thereof is more preferably 0.05 or greater. Peak B, which appears at 600±50 cm$^{-1}$, is a peak assigned to the stretching vibration of M"O$_6$ (M" is a metallic element contained in the positive active material). In case where the intensity of peak A relative to the intensity of peak B is low, there is a possibility that the effects of the invention might not be sufficiently obtained.

It is preferred that the lithium-transition metal compound powder to be used in the invention should be a powder in which at least one element selected from elements (additive elements) derived from additives, i.e., B and Bi (additive element 1) and Mo and W (additive element 2), has concentrated in surface parts of the primary particles thereof. It is preferred that the active material of the invention should be an active material which contains a lithium-transition metal compound as the main component and contains at least one element selected from B and Bi (hereinafter referred to as "additive element 1") and at least one element selected from Mo and W (hereinafter referred to as "additive element 2"), and in which the molar ratio (atomic ratio) of the sum of the additive element 1 to the sum of the metallic elements other than the lithium and the additive element 1 and additive element 2 in surface parts of the primary particles of the active material is at least 20 times the molar ratio in the whole particles. The lower limit of this proportion is preferably 25 times or more, more preferably 30 times or more, even more preferably 40 times or more, especially preferably 50 times or more. There is no particular upper limit on the proportion. However, the proportion is preferably 500 times or less, more preferably 400 times or less, especially preferably 300 times or less, most preferably 200 times or less. In case where the proportion is too small, the effect of improving powder properties is slow. Conversely, too high proportions may result in impaired battery performance.

The molar ratio of the sum of the additive element 2 to the sum of the metallic elements other than the lithium and the additive element 1 and additive element 2 (i.e., the metallic elements other than the lithium and the additive element 1 and additive element 2) in the surface parts of the primary particles is usually at least 3 times the molar ratio in the whole particles. The lower limit of this proportion is preferably 4 times or more, more preferably 5 times or more, especially preferably 6 times or more. There usually is no particular upper limit on the proportion. However, the proportion is preferably 150 times or less, more preferably 100 times or less, especially preferably 50 times or less, most preferably 30 times or less. In case where the proportion is too low, the effect of improving battery performance is low. Conversely, too high proportions may result in impaired battery performance.

The surface parts of the primary particles of the lithium-transition metal compound powder are analyzed for composition by X-ray photoelectron spectroscopy (XPS) using monochromatic AlKα as an X-ray source under the conditions of an analysis area of 0.8 mm in diameter and a pickup angle of 65°. The range (depth) in which analysis is possible varies depending on the composition of the primary particles, but the depth is generally 0.1-50 nm. Especially in the case of the positive active material, the depth is generally 1-1 nm. Consequently, in the invention, the expression "surface parts of the primary particles of a lithium-transition metal compound powder" means a range where analysis is possible under those conditions.

It is preferred that the positive active material to be used in the invention should be an active material obtained by adding both one or more compounds (hereinafter referred to as "additive 1") that contain at least one element selected from B and Bi (hereinafter referred to as "additive element 1'") and one or more compounds (hereinafter referred to as "additive 2") that contain at least one element selected from Mo and W (hereinafter referred to as "additive element 2'") to a raw material which includes as the main component a lithium-transition metal compound having the function of being capable of insertion and release of lithium ions, in such a proportion that the total amount of the additive 1 and the additive 2 is 0.01% by mole or more but less than 2% by mole based on the total molar amount of the transition metal element(s) contained in the raw material, and then burning the mixture.

<Lithium-containing Transition Metal Compound>

The lithium-transition metal compound according to the invention is a compound which has a structure capable of insertion and release of lithium ions. Examples thereof include sulfides, phosphoric acid salt compounds, and lithium-transition metal composite oxides. Examples of the sulfides include compounds having a two-dimensional lamellar structure, such as $TiS_2$ and $MoS_2$, and Chevrel compounds having a strong three-dimensional framework structure represented by the general formula $Me_xMo_6S_8$ (Me is any of various transition metals including Pb, Ag, and Cu). Examples of the phosphoric acid salt compounds include ones belonging to the olivine structure, which are generally represented by $LiMePO_4$ (Me is at least one transition metal), and specific examples thereof include $LiFePO_4$, $LiCoPO_4$, $LiNiPO_4$, and $LiMnPO_4$. Examples of the lithium-transition metal composite oxides include ones belonging to the spinel structure capable of three-dimensional diffusion and ones belonging to the lamellar structure which render two-dimensional diffusion of lithium ions possible. The composite oxides having a spinel structure are generally represented by $LiMe_2O_4$ (Me is at least one transition metal), and specific examples thereof include $LiMn_2O_4$, $LiCoMnO_4$, $LiNi_{0.5}Mn_{1.5}O_4$, and $LiCoVO_4$. The composite oxides having a lamellar structure are generally represented by $LiMeO_2$ (Me is at least one transition metal), and specific examples thereof include $LiCoO_2$, $LiNiO_2$, $LiNi_{1-x}Co_xO_2$, $LiNi_{1-x-y}Co_xMn_yO_2$, $LiNi_{0.5}Mn_{0.5}O_2$. $Li_{1.2}Cr_{0.4}Mn_{0.4}O_2$, $Li_{1.2}Cr_{0.4}Ti_{0.4}O_2$ and $LiMnO_2$.

It is preferred from the standpoint of diffusion of lithium ions that the lithium-transition metal compound powder according to the invention should be a powder which has an olivine structure, spinel structure, or lamellar structure. Preferred of such powders is the powder having a lamellar structure or spinel structure, because the crystal lattice in this powder undergoes sufficient contraction/expansion with charge/discharge to enable the effects of the invention to be produced remarkably. Especially preferred is the powder having a lamellar structure.

The lithium-transition metal compound powder according to the invention may contain one or more different elements incorporated thereinto. The different elements are selected from any one or more of B, Na, Mg, Al, K, Ca, Ti, V, Cr, Fe, Cu, Zn, Sr, Y, Zr, Nb, Ru, Rh, Pd, Ag, In, Sb, Te, Ba, Ta, Mo, W, Re, Os, Ir, Pt, Au, Pb, La, Ce, Pr, Nd, Sm, Eu, Gd, Tb, Dy, Ho, Er, Tm, Yb, Lu, Bi, N, F, S, Cl, Br, and I. These different elements may have been incorporated into the crystal structure of the lithium-transition metal compound, or may localize in the surface of the particles or at the crystal grain boundaries, etc., in the form of a simple substance or compound without being incorporated into the crystal structure of the lithium-transition metal compound.

The invention is characterized in that at least one element selected from B and Bi is used as additive element 1. It is preferred that additive element 1 should be B, of these elements usable as additive element 1, from the standpoint that B is inexpensively available as an industrial raw material and is a light element.

There are no particular limitations on the kind of the compound (additive 1) which contains additive element 1, so long as the compound brings about the effects of the invention. Usually, however, use is made of boric acid, a salt of an oxoacid, an oxide, a hydroxide, or the like. It is preferred that additive 1 should be boric acid or an oxide, among those compounds usable as additive 1, from the standpoint that these compounds are available at low cost as industrial raw materials. It is especially preferred that additive 1 should be boric acid.

Examples of compounds usable as additive 1 include $BO$, $B_2O_2$, $B_2O_3$, $B_4O_5$, $B_6O$, $B_7O$, $B_{13}O_2$, $LiBO_2$, $LiB_5O_8$, $L_2B_4O_7$, $HBO_2$, $H_3BO_3$. $B(OH)_3$, $B(OH)_4$, $BiBO_3$, $Bi_2O_3$, $Bi_2O_5$, and $Bi(OH)_3$. Preferred examples thereof include $B_2O_3$, $H_3BO_3$, and $Bi_2O_3$ from the standpoint that these compounds are relatively inexpensively and easily available as industrial raw materials. Especially preferred examples thereof include $H_3BO_3$. One of these compounds usable as additive 1 may be used alone, or two or more thereof may be used as a mixture thereof.

The invention is characterized in that at least one element selected from Mo and W is used as additive element 2. It is preferred that additive element 2 should be W, of these elements usable as additive element 2, from the standpoint that W is highly effective.

There are no particular limitations on the kind of the compound (additive 2) which contains additive element 2, so long as the compound brings about the effects of the invention. Usually, however, an oxide is used.

Examples of compounds usable as additive 2 include $MoO$, $MoO_2$, $MoO_3$, $MoO_x$, $Mo_2O_3$, $Mo_2O_5$, $Li_2MoO_4$, $WO$, $WO_2$, $WO_3$, $WO_x$, $W_2O_3$, $W_2O_5$, $W_{18}O_{49}$, $W_{20}O_{58}$, $W_{24}O_{70}$, $W_{25}O_{73}$, $W_{40}O_{118}$, and $Li_2WO_4$. Preferred examples thereof include $MoO_3$, $Li_2MoO_4$, $WO_3$, and $Li_2WO_4$ from the standpoint that these compounds are relatively easily available as industrial raw materials or contain lithium. Especially preferred examples thereof include $WO_3$. One of these compounds usable as additive 2 may be used alone, or two or more thereof may be used as a mixture thereof.

The range of the total addition amount of additive 1 and additive 2, based on the total molar amount of the transition metal element(s) constituting the main component, is generally from 0.01% by mole to less than 2% by mole, preferably from 0.03% by mole to 1.8% by mole, more preferably from 0.04% by mole to 1.6% by mole, especially preferably from 0.05% by mole to 1.5% by mole. In case where the total addition amount thereof is less than the lower limit, there is a possibility that the effects might not be obtained. In case where the total addition amount thereof exceeds the upper limit, there is the possibility of resulting in a decrease in battery performance.

The range of the proportion of additive 1, to additive 2, in terms of molar ratio, is generally from 10:1 to 1:2a, preferably from 5:1 to 1:15, more preferably from 2:1 to 1:10, especially preferably from 1:1 to 1:5. In case where the proportion thereof is outside the range, there is a possibility that the effects of the invention might be difficult to obtain.

In addition, it is preferred that when the positive active material of the invention is examined by time-of-flight type secondary-ion mass spectrometry (hereinafter abbreviated to ToF-SIMS), a peak assigned to a fragment formed by bonding between additive elements or between an additive element and an element which is a component of the positive active material should be observed.

ToF-SIMS is a technique in which an ion beam is irradiated upon a sample and the resultant secondary ions are detected with a time-of-flight type mass spectrometer to presume the chemical species present in the outermost surface of the sample. By this technique, the state in which additive elements present in the vicinity of the surface layer are distributed can be inferred. In case where the spectrum has no peak assigned to a fragment formed by bonding between additive elements or between an additive element and an element contained in the positive active material, there is a possibility that the additive elements might be in an insufficiently dispersed state and the effects of the invention might not be sufficiently obtained.

Incidentally, it is preferred that when B and W were used as additive elements in the lithium-transition metal compound powder for use as the positive-electrode material of the invention for lithium secondary batteries, peaks assigned to $BWO_5^-$ and $M'BWO_6^-$ (M' is an element capable of being in a divalent state) or to $BWO_5^-$ and $Li_2BWO_6^-$ should be observed in ToF-SIMS. In case where those peaks are not observed, there is a possibility that the additive elements might be in an insufficiently dispersed state and the effects of the invention might not be sufficiently obtained.

<Average Primary-particle Diameter>

The average diameter (average primary-particle diameter) of the lithium lithium-transition metal compound powder according to the invention is not particularly limited. However, the lower limit thereof is preferably 0.1 $\mu$m or larger, more preferably 0.2 $\mu$m or larger, most preferably 0.3 $\mu$m or larger, and the upper limit thereof is preferably 2 $\mu$m or less, more preferably 1.8 $\mu$m or less, even more preferably 1.5 $\mu$m or less, most preferably 1.2 $\mu$m or less. In case where the average primary-particle diameter thereof exceeds the upper limit, such a large particle diameter adversely affects powder loading characteristics or results in a reduced specific surface area. There is hence a high possibility that battery performance such as, for example, rate characteristics or output characteristics might decrease. In case where the average primary-particle diameter thereof is less than the lower limit, the crystals are in an insufficiently grown state and, hence, there is the possibility of posing problems, e.g., poor charge/discharge reversibility.

Incidentally, the average primary-particle diameter in the invention is an average diameter obtained through an examination with a scanning electron microscope (SEM), an can be determined as the average of the particle diameters of about 10-30 primary particles using an SEM image having a magnification of 30,000 diameters.

<Median Diameter, Total Content of Particles of 5 $\mu$m and smaller>

The median diameter (50%-cumulative diameter ($D_{50}$)) of the lithium-transition metal compound powder according to the invention is generally 2 $\mu$m or larger, preferably 2.5 $\mu$m or larger, more preferably 3 $\mu$m or larger, even more preferably 3.5 $\mu$m or larger, most preferably 4 $\mu$m or larger, and is generally 20 $\mu$m or less, preferably 19 $\mu$m or less, more preferably 18 $\mu$m or less, even more preferably 17 $\mu$m or less, most preferably 15 $\mu$m or less. In case where the median diameter thereof is less than the lower limit, there is the possibility of posing a problem concerning applicability which is required when a positive active layer is formed. In case where the median diameter thereof exceeds the upper limit, there is the possibility of resulting in a decrease in battery performance.

The total content of particles of 5 $\mu$m and smaller in the lithium lithium-transition metal compound powder according to the invention is generally 70% or less, preferably 50% or less, more preferably 40% or less, most preferably 30% or less. In case where the total content of particles of 5 $\mu$m and smaller exceeds the upper limit, there is a possibility that fluid preparation and application failures might occur in electrode production.

In the invention, the median diameter and the 50%-cumulative diameter ($D_{50}$) which are used as an average particle diameter are a volume-average particle diameter determined through an examination with a known laser diffraction/scattering type particle size distribution analyzer using a refractive index set at 1.60a-0.10i. In the invention, a 0.1% by weight aqueous solution of sodium hexametaphosphate was used as the dispersion medium for the measurement, and the sample was examined after having undergone a 5-minute ultrasonic dispersion treatment (output, 30 W; frequency, 22.5 kHz). Incidentally, no ultrasonic dispersion treatment was conducted.

<BET Specific Surface Area>

The lithium lithium-transition metal compound powder according to the invention has a BET specific surface area which is generally 0.2 m$^2$/g or larger, preferable 0.25 m$^2$/g or larger, more preferably 0.3 m$^2$/g or larger, most preferably 0.4 m$^2$/g or larger, and is generally 3 m$^2$/g or less, preferably 2.8 m$^2$/g or less, more preferably 2.5 m$^2$/g or less, most preferably 2.0 m$^2$/g or less. In case where the BET specific surface area thereof is smaller than that range, battery performance is apt to decrease. In case where the BET specific surface area thereof is larger than the upper limit, this powder is less apt to have a high bulk density and there is a possibility that this powder might be apt to pose a problem concerning applicability required for forming a positive active material.

BET specific surface area can be determined with a known BET specific surface area measuring apparatus for powders. In the invention, fully automatic specific surface area measuring apparatus for powders Type AMS 8000, manufactured by Ohkura Riken Co., Ltd., was used to conduct a measurement by the continuous-flow BET one-point method using nitrogen as an adsorbate gas and helium as a carrier gas. Specifically, a powder sample was degassed by heating to a temperature of 150°C with a mixture gas and subsequently cooled to a liquid-nitrogen temperature to adsorb the mixture gas. Thereafter, this sample was heated to room temperature with water to desorb the adsorbed nitrogen gas. The amount of the nitrogen gas thus desorbed was measured with a thermal conductivity detector, and the specific surface area of the sample was calculated therefrom.

<Bulk Density>

The lithium-transition metal compound powder according to the invention has a bulk density which is generally 1.2 g/cc or higher, preferably 1.3 g/cc or higher, more preferably 1.4 g/cc or higher, most preferably 1.5 g/cc or higher, and is generally 3.0 g/cc or less, preferably 2.9 g/cc or less, more preferably 2.8 g/cc or less, most preferably 2.7 g/cc or less. Bulk densities higher than the upper limit are preferred from the standpoint of improving powder loading and electrode density. However, in such a case, there is a possibility that the powder might have too small a specific surface area and a decrease in battery performance might result. In case where the bulk density thereof is less than the lower limit, there is a possibility that such a bulk density might exert an adverse influence on powder loading and positive-electrode preparation.

In the invention, the bulk density of a lithium-transition metal compound powder is determined by placing 5-10 g of the powder in a 10-mL measuring cylinder made of glass, tapping the measuring cylinder 200 times over a stroke length of about 20 mm, and calculating the density of the densified powder (tap density) in g/cc as the bulk density.

<Volume Resistivity>

The volume resistivity of the lithium-transition metal compound powder according to the invention which is in the state of being compacted at a pressure of 40 MPa, is as follows. The lower limit thereof is more preferably $1 \times 10^5$ $\Omega \cdot$cm or higher, more preferably $3 \times 10^5 \Omega \cdot$cm or higher, most preferably $5 \times 10^5$ $\Omega \cdot$cm or higher. The upper limit thereof is preferably $1 \times 10^7$ $\Omega \cdot$cm or less, more preferably $8 \times 10^6$ $\Omega \cdot$cm or less, even more preferably $5 \times 10^6$ $\Omega \cdot$cm or less, most preferably $3 \times 10^6 \Omega \cdot$cm or less. In case where the volume resistivity thereof exceeds the upper limit, there is a possibility that the battery obtained using this powder might have reduced load characteristics. On the other hand, in case where the volume resistivity thereof is less than the lower limit, there is a possibility that the battery obtained using this powder might be reduced in safety, etc.

In the invention, the volume resistivity of a lithium-transition metal compound powder is the volume resistivity measured while keeping the lithium-transition metal compound powder in the state of being compacted at a pressure of 40 MPa, using a four-probe ring electrode under the conditions of an electrode spacing of 5.0 mm, electrode radius of 1.0 mm, and sample radius of 12.5 mm and using an applied-voltage limiter set at 90 V. For example, a volume resistivity measurement can be made with a powder resistivity meter (e.g., powder resistivity measurement system Roresta GP, manufactured by DIA Instruments Co., Ltd.) by examining the powder kept under a given pressure, by means of the probe unit for powders.

<Pore Characteristics by Mercury Intrusion Method>

It is preferred that the lithium-transition metal compound powder according to the invention for use as a positive-electrode material for lithium secondary batteries should satisfy specific requirements in a measurement made by the mercury intrusion method.

The mercury intrusion method which is employed for evaluating the lithium-transition metal compound powder according to the invention is explained below.

The mercury intrusion method is a technique in which mercury is intruded into the pores of a sample, e.g., porous particles, while applying a pressure, and information on specific surface area, pore diameter distribution, etc. is obtained from the relationship between the pressure and the amount of mercury intruded.

Specifically, a vessel in which a sample has been placed is first evacuated to a vacuum, and the inside of this vessel is thereafter filled with mercury. Since mercury has a high surface tension, no mercury intrudes into the surface pores of the sample when the system is kept as such. However, when a pressure is applied to the mercury and the pressure is gradually elevated, the pores undergo gradual mercury intrusion thereinto in descending order of pore diameter. By detecting the change of the mercury surface level (i.e., the amount of mercury intruded into pores) while continuously elevating the pressure, a mercury intrusion curve which indicates a relationship between the pressure applied to the mercury and the amount of mercury intruded is obtained.

When the shape of a pore is assumed to be cylindrical and when the radius thereof is expressed by r and the surface tension and contact angle of mercury are expressed by $\delta$ and $\theta$, respectively, then the magnitude of force necessary for forcing out the mercury from the pore is expressed by $-2\pi r\delta(\cos\theta)$ (this value is positive when $\theta>90°$). Furthermore, the magnitude of force necessary for forcing mercury into the pore at a pressure of P is expressed by $\pi r^2 P$. Consequently, the following mathematical expressions (1) and (2) are derived from a balance between these forces.

$$-2\pi r\delta(\cos\theta) = \pi r^2 P \qquad (1)$$

$$Pr = -2\delta(\cos\theta) \qquad (2)$$

In the case of mercury, a surface tension $\delta$ of about 480 dyn/cm and a contact angle $\theta$ of about 140° are generally used frequently. When these values are used, the radius of the pore into which mercury is intruded at the pressure P is expressed by the following mathematical expression (3).

[Math. 1]

$$r \ (nm) = \frac{7.5 \times 10^8}{P \ (Pa)} \quad \cdots(3)$$

Namely, there is a correlation between the pressure P applied to the mercury and the radius r of the pore into which the mercury intrudes. Consequently, a pore distribution curve which shows a relationship between the dimensions of pore radii of the sample and the volume of the pores can be obtained on the basis of the mercury intrusion curve obtained. For example, when the pressure P is changed from 0.1 MPa to 100 MPa, a measurement can be made with respect to pores ranging from about 7,500 nm to about 7.5 nm.

Incidentally, rough measuring limits in pore radius measurements by the mercury intrusion method are as follows. The lower limit is about 2 nm or larger, and the upper limit is about 200 $\mu$m or less. The mercury intrusion method can be regarded as suitable for the analysis of pore distributions in which the pore radii are relatively large, as compared with the nitrogen adsorption method which will be described later. A measurement by the mercury intrusion method can be made using an apparatus such as, for example, a mercury porosimeter. Examples of the mercury porosimeter include AutoPore, manufactured by Micromeritics Instrument Corp., and PoreMaster, manufactured by Quantachrome Instruments.

It is preferred that the lithium-transition metal compound powder according to the invention, when analyzed by the mercury intrusion method, should give a mercury intrusion curve in which the mercury intrusion amount during the pressure rising period from a pressure of 3.86 kPa to 413 MPa is 0.1-1.5 cm³/g. The mercury intrusion amount is more preferably 0.15 cm³/g or more, most preferably 0.2 cm³/g or more, and is more preferably 1.4 cm³/g or less, even more preferably 1.3 cm³/g or less, most preferably 1.2 cm³/g or less. In case where the mercury intrusion amount exceeds the upper limit of that range, the particles have too large an amount of interstices. Consequently, when this lithium-transition metal compound powder according to the invention is used as a positive-electrode material, the degree of loading of this positive active material onto the positive electrode is low disadvantageously, resulting in a limited battery capacity. On the other hand, in case where the mercury intrusion amount is less than the lower limit of that range, this powder has too small an amount of interparticle interstices. Consequently, when this lithium-transition metal compound powder according to the invention is used as a positive-electrode material to produce a battery, lithium diffusion between the particles is inhibited, resulting in a decrease in load characteristics.

When the lithium-transition metal compound powder according to the invention is examined for pore distribution curve by the mercury intrusion method described above, the specific main peak which will be explained below appears. In this description, the term "pore distribution curve" means a curve in which the radius of each pore has been plotted as abscissa and the value obtained by differentiating the total volume per unit weight (usually 1 g) of the pores each having a radius not less than that radius by the logarithm of that pore radius has been plotted as ordinate. Usually, the curve is given in terms of a graph obtained by connecting the points resulting from the plotting. In particular, a pore distribution curve obtained by examining the lithium-transition metal compound powder according to the invention by the mercury intrusion method is suitably referred to as "pore distribution curve according to the invention" in the following description.

In this description, the term "main peak" means the peak which is the largest among the peaks possessed by the pore distribution curve, while the term "sub-peak" means any of the peaks other than the main peak which are possessed by the pore distribution curve.

In this description, "peak top" means that point on each peak of the pore distribution curve at which the ordinate has the maximum value.

<Main Peak>

The main peak possessed by the pore distribution curve according to the invention has a peak top located at a pore radius which is generally 1,600 nm or larger, more preferably 1,700 nm or larger, most preferably 1,800 nm or larger, and is generally 3,000 nm or less, preferably 2,900 nm or less, more preferably 2,800 nm or less, even more preferably 2,700 nm or less, most preferably 2,600 nm or less. In case where the position of the peak top thereof is above the upper limit of that range, there is a possibility that when this lithium-transition metal compound powder according to the invention is used as a positive-electrode material to produce a battery, lithium diffusion within the positive-electrode material might be inhibited or the amount of conduction paths might be insufficient, resulting in a decrease in load characteristics. On the other hand, in case where the position of the peak top thereof is below the lower limit of that range, there is a possibility that when this lithium-transition metal compound powder according to the invention is used to produce a positive electrode, it might be necessary to use a conductive material and a binder in larger amounts, resulting in a limited degree of loading of the active material onto the positive electrode (current collector of the positive electrode) and hence in a limited battery capacity. In addition, since such a powder is composed of finer particles, a coating fluid prepared therefrom gives a coating film which is mechanically rigid or brittle. There is hence a possibility that the coating film might be apt to peel off in a winding step during battery assembly.

The peak which is possessed by the pore distribution curve according to the invention and in which the peak top is present at a pore radius of 1,600-3,000 nm preferably has a pore volume that is generally 0.10 $cm^3/g$ or larger, preferably 0.15 $cm^3/g$ or larger, more preferably 0.18 $cm^3/g$ or larger, most preferably 0.20 $cm^3/g$ or larger, and is generally 0.8 $cm^3/g$ or less, preferably 0.7 $cm^3/g$ or less, more preferably 0.6 $cm^3/g$ or less, most preferably 0.5 $cm^3/g$ or less. In case where the pore volume thereof exceeds the upper limit of that range, the amount of interstices is too large. Consequently, there is a possibility that when this lithium-transition metal compound powder according to the invention is used as a positive-electrode material, the degree of loading of this positive active material onto the positive electrode might be low disadvantageously, resulting in a limited battery capacity. On the other hand, in case where the pore volume thereof is less than the lower limit of that range, the amount of interstices present among the particles is too small disadvantageously. Consequently, there is a possibility that when this lithium-transition metal compound powder according to the invention is used as a positive-electrode material to produce a battery, lithium diffusion between the secondary particles might be inhibited, resulting in a decrease in load characteristics.

<Sub-peaks>

The pore distribution curve according to the invention may have a plurality of sub-peaks besides the main peak described above. In particular, it is preferred that the pore distribution curve should have a sub-peak in which the peak top is present in a pore radius range from 80 nm to less than 1,600 nm. The peak top of this sub-peak is present at a pore radius which is generally 80 nm or larger, more preferably 100 nm or larger, most preferably 120 nm or larger, and is generally less than 1,600 nm, preferably 1,400 nm or less, more preferably 1,200 nm or less, even more preferably 1,000 nm or less, most preferably 800 nm or less. So long as the position of the peak top thereof is within that range, the electrolytic solution infiltrates into the particles, resulting in an improvement in rate characteristics. In case where the pore radius corresponding thereto is larger than the upper limit, there is a possibility that the pores might have an increased volume, resulting in a decrease in tap density.

The sub-peak which is possessed by the pore distribution curve according to the invention and in which the peak top is present at a pore radius of 80 nm or larger but less than 1,600 nm preferably has a pore volume that is generally 0.001 $cm^3/g$ or larger, preferably 0.003 $cm^3/g$ or larger, more preferably 0.005 $cm^3/g$ or larger, most preferably 0.007 $cm^3/g$ or larger, and is generally 0.3 $cm^3/g$ or less, preferably 0.25 $cm^3/g$ or less, more preferably 0.20 $cm^3/g$ or less, most preferably 0.18 $cm^3/g$ or less. In case where the pore volume thereof exceeds the upper limit of that range, the amount of interstices present among the secondary particles is too large. Consequently, there is a possibility that when this lithium-transition metal compound powder according to the invention is used as a positive-electrode material, the degree of loading of this positive active material onto the positive electrode might be low disadvantageously, resulting in a limited battery capacity. On the other hand, in case where the pore volume thereof is less than the lower limit of that range, the amount of interstices present among the secondary particles is too small disadvantageously. Consequently, there is a possibility that when this lithium-transition metal compound powder according to the invention is used as a positive-electrode material to produce a battery, lithium diffusion between the secondary particles might be inhibited, resulting in a decrease in load characteristics.

In the invention, preferred examples of the lithium-transition metal compound powder for use as a positive-electrode material for lithium secondary batteries include a lithium-transition metal compound powder which, when analyzed by the mercury intrusion method, gives a pore distribution curve that has at least one main peak in which the peak top is present at a pore radius of 1,600-3,000 nm and that has a sub-peak in which the peak top is present at a pore radius of 80 nm or larger but less than 1,600 nm.

<Crystal Structure>

It is preferred that the lithium-transition metal compound powder according to the invention should at least contain a lithium-nickel-manganese-cobalt composite oxide having a lamellar structure and/or a lithium-manganese composite oxide having a spinel structure as the main component. More preferred of such powders is a powder which contains a lithium-nickel-manganese-cobalt composite oxide having a lamellar structure as the main component, because the crystal lattice thereof undergoes sufficient expansion/contraction to enable the effects of the invention to be produced remarkably. In the invention, the term "lithium-nickel-manganese-cobalt composite oxide" means any of lithium-nickel-manganese-cobalt composite oxides including lithium-nickel-manganese composite oxides which contain no cobalt.

Here, lamellar structures are described in more detail. Among representative crystal systems having a lamellar structure are crystal systems belonging to the $\alpha$-NaFeO$_2$ type, such as LiCoO$_2$ and LiNiO$_2$, These crystal systems are hexagonal systems and, because of the symmetry thereof, are assigned to the space group

[Math. 2]

$$\mathrm{R\,\overline{3}\,m}$$

(hereinafter often referred to as "lamellar R(-3)m structure").

However, the lamellar LiMeO$_2$ should not be construed as being limited to the lamellar R(-3)m structure. Other examples thereof include LiMnO$_2$ which is called lamellar manganese. This compound is a lamellar compound having a rhombic system and belonging to the space group Pm2m. Examples thereof further include Li$_2$MnO$_3$ which is called 213 phase and can be expressed also as Li[Li$_{1/3}$Mn$_{2/3}$]O$_2$. Although having a monoclinic structure belonging to the space group C2/m, this compound also is a lamellar compound in which lithium layers, [Li$_{1/3}$Mn$_{2/3}$] layers, and oxygen layers have been stacked.

Furthermore, spinel structures are described in more detail. Among representative crystal systems having a spinel structure are crystal systems belonging to the MgAl$_2$O$_4$ type, such as LiMn$_2$O$_4$. These crystal systems are cubic systems and, because of the symmetry thereof, are assigned to the space group

[Math. 3]

$$\mathrm{Fd\overline{3}m}$$

(hereinafter often referred to as "spinel Fd(-3)m structure"). However, the spinel LiMeO$_4$ should not be construed as being limited to the spinel Fd(-3)m structure. Besides this structure, there is spinel LiMeO$_4$ which belongs to a different space group (P4$_3$32).

<Composition>

It is preferred that the lithium-containing transition metal compound powder according to the invention should be a lithium-transition metal compound powder represented by the following empirical formula (A) or (B).

$$\mathrm{Li_{1+x}MO_2} \qquad \qquad \mathrm{(A)}$$

$$Li[Li_aM_bMn_{2-b-a}]O_{4+\delta} \qquad (B)$$

Furthermore, in the case of lamellar compounds, the amount of manganese which dissolves away is relatively small and the influence of manganese on cycle characteristics is slight, as compared with spinel compounds. There is hence a clearer difference in the effects of the invention therebetween. Consequently, it is more preferred that the powder according to the invention should be a lithium-transition metal compound powder which is represented by the following empirical formula (A).

1) In the Case of Lithium-transition Metal Compound Powder represented by the following Empirical Formula (A)

$$Li_{1+x}MO_2 \qquad (A)$$

In formula (A), x is generally 0 or larger, preferably 0.01 or larger, more preferably 0.02 or larger, most preferably 0.03 or larger, and is generally 0.5 or less, preferably 0.4 or less, more preferably 0.3 or less, most preferably 0.2 or less. M is elements configured of Ni and Mn or of Ni, Mn, and Co. The Mn/Ni molar ratio is generally 0.1 or greater, desirably 0.3 or greater, preferably 0.5 or greater, more preferably 0.6 or greater, even more preferably 0.7 or greater, especially preferably 0.8 or greater, most preferably 0.9 or greater, and is generally 5 or less, preferably 4 or less, more preferably 3 or less, even more preferably 2.5 or less, most preferably 1.5 or less. The Ni/M molar ratio is generally 0 or greater, preferably 0.01 or greater, more preferably 0.02 or greater, even more preferably 0.03 or greater, most preferably 0.05 or greater, and is generally 0.50 or less, preferably 0.49 or less, more preferably 0.48 or less, even more preferably 0.47 or less, most preferably 0.45 or less. The Co/M molar ratio is generally 0 or greater, preferably 0.01 or greater, more preferably 0.02 or greater, even more preferably 0.03 or greater, most preferably 0.05 or greater, and is generally 0.50 or less, preferably 0.40 or less, more preferably 0.30 or less, even more preferably 0.20 or less, most preferably 0.15 or less. There are cases where the excess portion of lithium which is represented by x has been incorporated as a substituent into the transition metal sites M.

Although the oxygen amount in terms of molar ratio (atomic ratio) in empirical formula (A) is 2 for reasons of convenience, the composition may be non-stoichiometric to some degree. In the case where the composition is non-stoichiometric, the molar ratio (atomic ratio) of oxygen is generally in the range of $2\pm0.2$, preferably in the range of $2\pm0.15$, more preferably in the range of $2\pm0.12$, even more preferably in the range of $2\pm0.10$, especially preferably in the range of $2\pm0.05$.

It is preferred that the lithium-transition metal compound powder according to the invention should be a powder produced through burning conducted at a high temperature in an oxygen-containing gas atmosphere in order to enhance the crystallinity of the positive active material.

The lower limit of the burning temperature, especially in the case of the lithium-transition metal compound which has a composition represented by empirical formula (A), is generally 950°C or higher, preferably 960°C or higher, more preferably 970°C or higher, most preferably 980°C or higher. The upper limit thereof is 1,200°C or lower, preferably 1,175°C or lower, more preferably 1,150°C or lower, most preferably 1,125°C or lower. In case where the burning temperature is too low, different phases come to coexist and the crystal structure does not develop, resulting in enhanced lattice distortion. In addition, too large a specific surface area results. Conversely, in case where the burning temperature is too high, the primary particles grow excessively and sintering between particles proceeds too much, resulting in too small a specific surface area.

2) In the Case of Lithium-transition Metal Compound represented by the following Empirical Formula (B).

$$Li[Li_aM_bMn_{2-b-a}]O_{4+\delta} \qquad (B)$$

In the formula, M is at least one transition metal selected from Ni, Cr, Fe, Co, Cu, Zr, Al, and Mg. Most preferred of these is Ni from the standpoint of high-potential charge/discharge capacity.

The value of b is generally 0.4 or larger, preferably 0.425 or larger, more preferably 0.45 or larger, even more preferably 0.475 or larger, most preferably 0.49 or larger, and is generally 0,6 or less, preferably 0.575 or less, more preferably 0.55 or less, even more preferably 0.525 or less, most preferably 0.51 or less.

So long as the value of b is within that range, the energy density per unit weight of the lithium-transition metal compound is high. Such values of b are hence preferred.

The value of a is generally 0 or larger, preferably 0.01 or larger, more preferably 0.02 or larger, even more preferably 0.03 or larger, most preferably 0.04 or larger, and is generally 0.3 or less, preferably 0.2 or less, more preferably 0.15 or less, even more preferably 0.1 or less, most preferably 0.075 or less.

So long as the value of a is within that range, satisfactory load characteristics are obtained without considerably impairing the energy density per unit weight of the lithium-transition metal compound. Such values of a are hence preferred.

Furthermore, the value of 5 is generally in the range of $\pm0.5$, preferably in the range of $\pm0.4$, more preferably in the range of ±0.2, even more preferably in the range of ±0.1, especially in the range of ±0.05.

So long as the value of δ is in that range, the crystal structure is highly stable and the battery having an electrode produced using this lithium-transition metal compound has satisfactory cycle characteristics and high-temperature storability. Such values of δ are hence preferred.

The chemical meaning of the lithium composition in the lithium-nickel-manganese composite oxide as a composition of the lithium-transition metal compound according to the invention is explained below in detail.

The values of a and b in the empirical formula of the lithium-transition metal compound are determined by analyzing the compound with an inductively coupled plasma emission spectroscope (ICP-AES) for the contents of each transition metal and lithium to determine a Li/Ni/Mn ratio and calculating the values of a and b therefrom.

From the standpoint of structure, it is thought that the lithium which is expressed using the affix a has been incorporated as a substituent into sites of the same transition mental. On the principle of charge neutralization, the average valence of M and manganese is higher than 3.5 because of the lithium expressed using the affix a.

<Carbon Content C>

The value of carbon content C (% by weight) of the lithium-transition metal compound powder according to the invention is generally 0.005% by weight or higher, preferably 0.01% by weight or higher, more preferably 0.015% by weight or higher, most preferably 0.02% by weight or higher, and is generally 0.25% by weight or less, preferably 0.2% by weight or less, more preferably 0.15% by weight or less, even more preferably 0.1% by weight or less, most preferably 0.07% by weight or less. In case where the carbon content C thereof is less than the lower limit, there is the possibility of resulting in a decrease in battery performance. In case where the carbon content C thereof exceeds the upper limit, there is a possibility that the battery produced using this powder might suffer enhanced swelling due to gas evolution or have reduced battery performance.

In the invention, the carbon content C of a lithium-nickel-manganese-cobalt composite oxide powder is determined through combustion in an oxygen stream (with a high-frequency heating furnace) and a measurement made by infrared absorption spectrometry, as will be shown in the section Examples given later.

Incidentally, the carbon component contained in a lithium-nickel-manganese-cobalt composite oxide powder determined by the carbon analysis which will be described later can be regarded as indicative of information about the amount of adherent carbonic acid compounds, in particular, lithium carbonate. This is because when a carbon amount determined by the carbon analysis is assumed to be the amount of carbon wholly derived from carbonate ions, this value agrees approximately with a carbonate ion concentration obtained through analysis by ion chromatography.

Meanwhile, when a treatment for combining with conductive carbon was performed as a technique for enhancing electronic conductivity, there are cases where carbon is detected in an amount exceeding the range specified above. However, the value of C in the case where such a treatment was conducted should not be construed as being limited to the range specified above.

<Suitable Composition>

It is especially preferred that the lithium-transition metal composite oxide powder according to the invention to be used as a positive-electrode material for lithium secondary batteries should be represented by empirical formula (A) in which the configuration of atoms located at the M sites is represented by the following formula (I) or formula (I').

$$M = Li_{z/(2+z)}\{(Ni_{(1+y)/2}Mn_{(1-y)/2})_{1-x}Co_x\}_{2/(2+z)} \qquad (I)$$

(In formula (I),

$$0 \leq x \leq 0.1,$$

$$-0.1 \leq y \leq 0.1,$$

$$(1-x)(0.05-0.98y) \leq z \leq (1-x)(0.20-0.88y).)$$

$$M = Li_{z'/(2+z')}\{(Ni_{(1+y')/2}Mn_{(1-y')/2})_{1-x'}Co_{x'}\}_{2/(2+z')} \qquad (I')$$

(In empirical formula (I'),

$$0.1 < x' \leq 0.35,$$

$$-0.1 \leq y' \leq 0.1,$$

$$(1-x')(0.02-0.98y') \leq z' \leq (1-x')(0.20-0.88y').)$$

In formula (I), the value of x is generally 0 or larger, preferably 0.01 or larger, more preferably 0.02 or larger, even more preferably 0.03 or larger, most preferably 0.04 or larger, and is generally 0.1 or less, preferably 0.099 or less, most preferably 0.098 or less.

The value of y is generally -0.1 or larger, preferably -0.05 or larger, more preferably -0.03 or larger, most preferably -0.02 or larger, and is generally 0.1 or less, preferably 0.05 or less, more preferably 0.03 or less, most preferably 0.02 or less.

The value of z is generally (1-x)(0.05-0.98y) or larger, preferably (1-x)(0.06-0.98y) or larger, more preferably (1-x)(0.07-0.98y) or larger, even more preferably (1-x)(0.08-0.98y) or larger, most preferably (1-x)(0.10-0.98y) or larger, and is generally (1-x)(0.20-0.88y) or less, preferably (1-x)(0.18-0.88y) or less, more preferably (1-x)(0.17-0.88y), most preferably (1-x)(0.16-0.88y) or less. In case where z is less than the lower limit, a decrease in electrical conductivity results. In case where z exceeds the upper limit, the amount of the lithium which has been incorporated as a substituent into transition metal sites is too large and, hence, there is a possibility that the lithium secondary battery employing this composite oxide might have reduced performance, e.g., a reduced battery capacity. Meanwhile, in case where z is too large, this active-material powder has enhanced carbon dioxide-absorbing properties and is hence apt to absorb the carbon dioxide contained in the air. Consequently, this powder is presumed to have an increased carbon content.

In formula (I'), the value of x' is generally 0.1 or larger, preferably 0.15 or larger, more preferably 0.2 or larger, even more preferably 0.25 or larger, most preferably 0.30 or larger, and is generally 0.35 or less, preferably 0.345 or less, most preferably 0.34 or less.

The value of y' is generally -0.1 or larger, preferably -0.05 or larger, more preferably -0.03 or larger, most preferably -0.02 or larger, and is generally 0.1 or less, preferably 0.05 or less, more preferably 0.03 or less, most preferably 0.02 or less.

The value of z' is generally (1-x')(0.02-0.98y') or larger, preferably (1-x')(0.03-0.98y) or larger, more preferably (1-x')(0.04-0.98y') or larger, most preferably (1-x')(0.05-0.98y') or larger, and is generally (1-x')(0.20-0.88y') or less, preferably (1-x')(0.18-0.88y') or less, more preferably (1-x')(0.17-0.88y'), most preferably (1-x')(0.16-0.88y') or less. In case where z' is less than the lower limit, a decrease in electrical conductivity results. In case where z' exceeds the upper limit, the amount of the lithium which has been incorporated as a substituent into transition metal sites is too large and, hence, there is a possibility that the lithium secondary battery employing this composite oxide might have reduced performance, e.g., a reduced battery capacity, Meanwhile, in case where z' is too large, this active-material powder has enhanced carbon dioxide-absorbing properties and is hence apt to absorb the carbon dioxide contained in the air. Consequently, this powder is presumed to have an increased carbon content.

There is a tendency that the closer the value of z or z' to the lower limit, which is a constant ratio, within the range of composition represented by formula (I) or (I'), the lower the rate characteristics or output characteristics of the battery produced using this powder. Conversely, as the value of z or z' becomes closer to the upper limit, the battery produced using this powder tends to increase in rate characteristics or output characteristics but decrease in capacity. There is also a tendency that as the value of y or y' becomes closer to the lower limit, i,e., as the manganese/nickel molar ratio (atomic ratio) becomes smaller, a satisfactory capacity becomes more apt to be obtained at a low charging voltage but the battery in which the charging voltage has been set at a high value decreases in cycle characteristics and safety. Conversely, as the value of y or y' becomes closer to the upper limit, the battery in which the charging voltage has been set at a high value tends to Improve in cycle characteristics and safety but decrease in discharge capacity, rate characteristics, and output characteristics. Furthermore, there is a tendency that as the value of x or x' becomes closer to the lower limit, the battery produced using this powder tends to decrease in load characteristics such as rate characteristics and output characteristics. Conversely, as the value of x or x' becomes closer to the upper limit, the battery produced using this powder increases in rate characteristics and output characteristics. However, in case where the value thereof exceeds the upper limit, not only the battery in which a high charging voltage has been set has reduced cycle characteristics and reduced safety but also an increase in raw-material cost results. To regulate the composition parameters x, x', y, y', z, and z' to the specified ranges is an important constituent element of the invention.

The chemical meaning of the lithium composition (z, z', x, and x') in the lithium-nickel-manganese-cobalt composite oxide as a suitable composition of the lithium-transition metal compound powder according to the invention is explained below in more detail.

Although the lamellar structure is not always limited to the R(-3)m structure as stated above, it is preferred, from the standpoint of electrochemical performance, that the composite oxide should have a structure belonging to the R(-3)m structure.

The values of x, x', y, y', z, and z' in the empirical formulae of the lithium-transition metal compound are determined by analyzing the compound with an inductively coupled plasma emission spectroscope (ICP-AES) for the contents of each transition metal and lithium to determine a Li/Ni/Mn/Co ratio and calculating the values of those.

From the standpoint of structure, it is thought that the lithium which is expressed using z or z' has been incorporated as a substituent into sites of the same transition metal. On the principle of charge neutralization, the average valence of the nickel is higher than 2 (trivalent nickel generates) because of the lithium expressed using z or z'. Since z or z' increases the average valence of the nickel, the value of z or z' is an index to the valence of the nickel (proportion of Ni(III)).

When the valence of the nickel (m), which changes as z or z' changes, is calculated from the empirical formulae on the assumption that the valence of the cobalt is 3 and the valence of the manganese is 4, then the nickel valence (m) is expressed by the following equations.

[Math. 4]

$$m = 2\left[2 - \frac{1 - x - z}{(1 - x)\ (1 + y)}\right]$$

$$m = 2\left[2 - \frac{1 - x' - z'}{(1 - x')\ (1 + y')}\right]$$

The calculation results mean that the valence of the nickel is not governed only by z or z' but is a function of x or x' and of y or y'. When z or z' is 0 and y or y' is 0, the nickel valence remains 2 regardless of the value of x or x'. When the value of z or z' is negative, this means that the amount of the lithium contained in the active material is stoichiometrically insufficient; and there is a possibility that the active material in which z or z' is too large a negative value might be ineffective in producing the effects of the invention. Meanwhile, the calculation results mean that even when the composition has the same value of z or z', the nickel valence increases as the composition becomes more Ni-rich (has larger values of y or y') and/or more Co-rich (has larger values of x or x'). Namely, when such a powder is used in a battery, this battery has enhanced rate characteristics and output characteristics but is apt to have a reduced capacity. Consequently, it is more preferred that upper and lower limits of the value of z or z' should be defined as a function of x or x' and of y or y'.

When the value of x is 0≤x≤0.1, i.e., the amount of cobalt is small, then not only a reduction in cost is attained but also improvements in charge/discharge capacity, cycle characteristics, and safety are attained in the case where this powder is used in a lithium secondary battery designed to be charged at a high charge potential.

On the other hand, when the value of x' is 0.10<x'≤0.35, i.e., the amount of cobalt is relatively large, then well balanced improvements in charge/discharge capacity, cycle characteristics, load characteristics, safety, etc. are attained in the case where this powder is used in a lithium secondary battery.

<X-ray Powder Diffraction Peaks>

In the invention, it is preferred that the lithium-nickel-manganese-cobalt composite oxide powders which have compositions satisfying empirical formulae (I) and (II), when examined by X-ray powder diffractometry using a CuKα line, should give a diffraction pattern in which when the half-value width of a (110) diffraction peak present at a diffraction angle $2\theta$ of about 64.5° is expressed by FWHM(110), this half-value width is in the range of $0.1 \leq \text{FWHM}(110) \leq 0.3$.

Since the half-value width of an X-ray diffraction peak is generally used as a measure of crystallinity, the inventors diligently made investigations on a correlation between crystallinity and battery performance. As a result, the inventors have found that a lithium-nickel-manganese-cobalt composite oxide powder in which the (110) diffraction peak present at a diffraction angle $2\theta$ of about 64.5° has a half-value width within the specified range brings about satisfactory battery performance.

In the invention, the FWHM(110) is generally 0.01 or larger, preferably 0.05 or larger, more preferably 0.10 or larger, even more preferably 0.12 or larger, most preferably 0.14 or larger, and is generally 0.3 or less, preferably 0.28 or less, more preferably 0.26 or less, even more preferably 0.24 or less, most preferably 0.22 or less.

Furthermore, it is preferred in the invention that the lithium-nickel-manganese-cobalt composite oxide powders which have compositions satisfying empirical formulae (I) and (II), when examined by X-ray powder diffractometry using a CuK$\alpha$ line, should show a (018) diffraction peak at a diffraction angle $2\theta$ of about 64°, a (110) diffraction peak at a $2\theta$ of about 64.5°, and a (113) diffraction peak at a $2\theta$ of about 68° and satisfy the following: each peak has, on the larger-angle side thereof, no diffraction peak assigned to a different phase; or when each peak has, on the larger-angle side thereof, a diffraction peak assigned to a different phase, then the ratio of the integrated intensity of each different-phase peak to the integrated intensity of the corresponding diffraction peak assigned to the proper crystalline phase is in the following range.

$$0 \leq I_{018}^{*}/I_{018} \leq 0.20$$

$$0 \leq I_{110}^{*}/I_{110} \leq 0.25$$

$$0 \leq I_{113}^{*}/I_{113} \leq 0.30$$

(In these expressions, $I_{018}$, $I_{110}$, and $I_{113}$ respectively represent the integrated intensities of the (018), (110), and (113) diffraction peaks, and $I_{018}^{*}$, $I_{110}^{*}$, and $I_{113}^{*}$ respectively represent the integrated intensities of the diffraction peaks assigned to a different phase and appearing on the larger-angle side of the peak tops of the (018), (110), and (113) diffraction peaks.)

Incidentally, the substance which is causative of each diffraction peak assigned to a different phase has not been elucidated in detail. However, when a different phase is contained, the battery obtained using this powder is reduced in capacity, rate characteristics, cycle characteristics, etc. Consequently, although the diffraction peaks may have diffraction peaks to such a degree that the performance of the battery of the invention is not adversely affected thereby, it is preferred that the proportions thereof should be within the ranges shown above. The integrated-intensity ratios of the diffraction peaks assigned to a different phase to the corresponding diffraction peaks are generally $I_{018}^{*}/I_{018} \leq 0.20$, $I_{110}^{*}/I_{110} \leq 0.25$, and $I_{113}^{*}/I_{113} \leq 0.30$, preferably $I_{018}^{*}/I_{018} \leq 0.15$, $I_{110}^{*}/I_{110} \leq 0.20$, and $I_{113}^{*}/I_{113} \leq 0.25$, more preferably $I_{018}^{*}/I_{018} \leq 0.10$, $I_{110}^{*}/I_{110} \leq 0.15$, and $I_{113}^{*}/I_{113} \leq 0.20$, even more preferably $I_{018}^{*}/I_{018} \leq 0.05$, $I_{110}^{*}/I_{110} \leq 0.10$, and $I_{113}^{*}/I_{113} \leq 0.15$. It is most preferred that there should be no peak assigned to a different phase.

[Process for Producing Lithium-transition Metal Compound Powder for Positive-electrode Material for Lithium Secondary Battery]

Processes for producing the lithium-transition metal compound powder according to the invention should not be construed as being limited to specific processes. However, a production process which is suitable for producing the lithium-transition metal compound powder according to the invention for use as a positive-electrode material for lithium secondary batteries includes: a slurry preparation step in which a lithium compound, one or more compounds of at least one transition metal selected from V, Cr, Mn, Fe, Co, Ni, and Cu, additive 1, and additive 2 are pulverized in a liquid medium to obtain a slurry which contains these ingredients evenly dispersed therein; a spray drying step in which the slurry obtained is spray-dried; and a burning step in which the resultant spray-dried material is burned.

For example, in the case of a lithium-nickel-manganese-cobalt composite oxide powder as an example, this powder can be produced by spray-drying a slurry obtained by dispersing a lithium compound, a nickel compound, a manganese compound, a cobalt compound, additive 1, and additive 2 in a liquid medium and then burning the resultant spray-dried material in an oxygen-containing gas atmosphere.

The process for producing the lithium-transition metal compound powder according to the invention is explained below in detail with respect to, as an example, a process for producing a lithium-nickel-manganese-cobalt composite oxide powder according to a preferred embodiment of the invention.

<Slurry Preparation Step>

Examples of the lithium compound, among the starting-material compounds to be used for preparing a slurry when a lithium-transition metal compound powder is produced by the process according to the invention, include $Li_2CO_3$, $LiNO_3$, $LiNO_2$, LiOH, $LiOH \cdot H_2O$, LiH, LiF, LiCl, LiBr, LiI, $CH_3OOLi$, $Li_2O$, $Li_2SO_4$, the lithium salts of dicarboxylic acids, lithium citrate, the lithium salts of fatty acids, and alkyllithiums. Preferred of these lithium compounds are the lithium compounds which contain neither a nitrogen atom nor a sulfur atom nor a halogen atom, from the standpoint of preventing any harmful substance, e.g., $SO_x$ or $NO_x$, from generating during the burning. Also preferred are compounds which are apt to form interstices in the secondary particles of the spray-dried powder, for example, by generating a decomposition gas in the secondary particles during the burning. When these points are taken into account, $Li_2CO_3$, LiOH, and $LiOH \cdot H_2O$ are preferred, and $Li_2CO_3$ is especially preferred. One of these lithium compounds may be used alone, or two or more thereof may be used in combination.

Examples of the nickel compound include $Ni(OH)_2$, NiO, NiOOH, $NiCO_3$, $2NiCO_3 \cdot 3Ni(OH)_2 \cdot 4H_2CO$, $NiC_2O_4 \cdot 2H_2O$, $Ni(NO_3)_2 \cdot 6H_2O$, $NiSO_4$ $NiSO_4 \cdot 6H_2O$, the nickel salts of fatty acids, and nickel halides. Preferred of these are nickel compounds such as $Ni(OH)_2$, NiO, NiOOH, $NiCO3$, $2NiCO_3 \cdot 3Ni(OH)_2 \cdot 4H_2O$, and $NiC_2O_4 \cdot 2H_2O$, from the standpoint of preventing any harmful substance, e.g., $SO_x$ or $NO_x$, from generating during the burning. Furthermore, Ni$(OH)_2$, NiO, NiOOH, and $NiCO_3$ are preferred from the standpoint that these compounds are inexpensively available as industrial starting materials and have high reactivity. Moreover, $Ni(OH)_2$, NiOOH, and $NiCO_3$ are especially preferred from the standpoint that these compounds are apt to form interstices in the secondary particles of the spray-dried powder, for example, by generating a decomposition gas during the burning. One of these nickel compounds may be used alone, or two or more thereof may be used in combination.

Examples of the manganese compound include manganese oxides such as $Mn_2O_3$, $MnO_2$, and $Mn_3O_4$, manganese salts such as $MnCO_3$, $Mn(NO_3)_2$, $MnSO_4$, manganese acetate, manganese dicarboxylates, manganese citrate, and the manganese salts of fatty acids, the oxyhydroxide, and halides such as manganese chloride. Preferred of these manganese compounds are $MnO_2$, $Mn_2O_3$, $Mn_3O_4$, and $MnCO_3$, because these compounds not only do not generate a gas such as $SO_x$ or $NO_x$ during the burning but also are inexpensively available as industrial starting materials. One of these manganese compounds may be used alone, or two or more thereof may be used in combination.

Examples of the cobalt compound include $Co(OH)_2$, CoOOH, CoO, $Co_2O3$, $Co_3O_4$, $Co(OCOCH_3)_2 \cdot 4H_2O$, $CoCl_2$, $Co(NO_3)_2 \cdot 6H_2O$, $Co(SO_4)_2 \cdot 7H_2O$, and $CoCO_3$. Preferred of these are $Co(OH)_2$, CoOOH, CoO, $Co_2O_3$, $Co_3O_4$, and $CoCO_3$, from the standpoint that these compounds do not generate a harmful substance, e.g., $SO_x$ or $NO_x$, during the burning step. $Co(OH)_2$ and CoOOH are more preferred from the standpoint that these compounds are inexpensively available industrially and have high reactivity. Especially preferred are $Co(OH)_2$, CoOOH, and $CoCO_3$, from the standpoint that these compounds are apt to form interstices in the secondary particles of the spray-dried powder, for example, by generating a decomposition gas during the burning. One of these cobalt compounds may be used alone, or two or more thereof may be used in combination.

Besides the lithium, nickel, manganese, and cobalt source compounds, other compounds can be used for the purpose of conducting substitution with other elements to introduce the different elements described above or of efficiently forming interstices in the secondary particles to be formed through the spray drying which will be described later. The timing of adding a compound for efficiently forming interstices in the secondary particles can be selected from between before and after starting-material mixing in accordance with the properties of the compound. Especially in the case of compounds which are apt to decompose when mechanical shear stress is applied thereto in the mixing step, it is preferred to add the compounds after the mixing step.

Additive 1 is as described above, and additive 2 is as described above.

Methods for mixing the starting materials are not particularly limited, and may be a wet process or a dry process. Examples thereof include methods in which a device such as, for example, a ball mill, a vibrating mill, or a bead mill is used. Wet mixing in which the starting-material compounds are mixed in a liquid medium, e.g., water or an alcohol, is preferred because more even mixing is possible and because the resultant mixture can be made to show enhanced reactivity in the burning step.
The period of mixing varies depending on mixing methods, and is not limited so long as the starting materials come to be in an evenly mixed state on a particulate level. For example, the period of mixing with a ball mill (wet or dry) is generally about 1-2 hours, and the period of mixing with a bead mill (wet continuous process) is generally about 0.1-6 hours in terms of residence time.

It is preferred that in the stage of starting-material mixing, the starting materials should be pulverized while being mixed. With respect to the degree of pulverization, the diameters of the starting-material particles which have been pulverized are usable as an index. The average particle diameter (median diameter) thereof is regulated to generally

0.7 μm or less, preferably 0.6 μm or less, more preferably 0.55 μm or less, most preferably 0.5 μm or less. In case where the average particle diameter of the pulverized starting-material particles is too large, not only the particles have reduced reactivity in the burning step but also it is difficult to obtain an even composition. It is, however, noted that excessively reducing the particle size results in an increase in pulverization cost. Consequently, to pulverize the starting materials to an average particle diameter of generally 0.01 μm or larger, preferably 0.02 μm or larger, more preferably 0.05 μm or larger, suffices. Although means for attaining such a degree of pulverization are not particularly limited, wet pulverization methods are preferred. Examples thereof include Dyno Mill.

In the invention, the median diameter of the pulverized particles in a slurry is a median diameter determining through a measurement made with a known laser diffraction/scattering type particle size distribution analyzer while setting the refractive index at 1.24 and setting the basis of particle diameter at volume basis. In the invention, a 0.1% by weight aqueous solution of sodium hexametaphosphate was used as a dispersion medium for the measurement, and the measurement was made after a 5-minute ultrasonic dispersion treatment (output, 30 W; frequency, 22.5 kHz).

<Spray Drying Step>

After the wet mixing, the slurry is subsequently subjected usually to a drying step. Methods for the drying are not particularly limited. However, spray drying is preferred, for example, from the standpoints of the evenness, powder flowability, and powder handleability of the particulate material to be yielded and of the ability to efficiently produce dry particles.

(Spray-dried Powder)

In the process for producing the lithium-transition metal compound powder according to the invention, e.g., a lithium-nickel-manganese-cobalt composite oxide powder, the slurry obtained by wet-pulverizing the starting-material compounds together with additive 1 and additive 2 is spray-dried to thereby obtain a powder in which the primary particles have aggregated to form secondary particles. A spray-dried powder in which the primary particles have aggregated to form secondary particles is a feature of the shape of the spray-dried powder according to the invention. Examples of methods for ascertaining the shape include an examination with an SEM and an examination of sections with an SEM.

The median diameter (here, a value measured without an ultrasonic dispersion treatment) of the powder to be obtained by the spray drying, which is a burning precursor for the lithium-transition metal compound powder according to the invention, e.g., a lithium-nickel-manganese-cobalt composite oxide powder, is regulated to generally 25 μm or less, more preferably 20 μm or less, even more preferably 18 μm or less, most preferably 16 μm or less. However, since too small particle diameters tend to be difficult to obtain, the median diameter thereof is generally 3 μm or larger, preferably 4 μm or larger, more preferably 5 μm or larger. In the case where particulate matter is to be produced by a spray drying method, the particle diameter thereof can be regulated by suitably selecting a mode of spraying, a pressurized-gas feed rate, a slurry feed rate, a drying temperature, etc.

Specifically, when a slurry obtained by dispersing a lithium compound, a nickel compound, a manganese compound, a cobalt compound, additive 1, and additive 2 in a liquid medium is spray-dried and the resultant powder is burned to produce a lithium-nickel-manganese-cobalt composite oxide powder, then the spray drying is conducted, for example, under the conditions of a slurry viscosity V of 50 cP≤V≤10,000 cP and a gas-liquid ratio G/S of 500≤SG/S≤10,000, wherein V (cP) is the viscosity of the slurry being subjected to the spray drying, S (L/min) is the slurry feed rate, and G (L/min) is the gas feed rate.

In case where the slurry viscosity V (cP) is too low, there is a possibility that a powder configured of secondary particles formed by aggregation of primary particles might be difficult to obtain. In case where the slurry viscosity is too high, there is a possibility that the feed pump might go wrong or the nozzle might clog. Consequently, the lower limit of the slurry viscosity V (cP) is generally 50 cP or higher, preferably 100 cP or higher, more preferably 300 cP or higher, most preferably 500 cP, and the upper limit thereof is generally 10,000 cP or less, preferably 7,500 cP or less, more preferably 6,500 cP or less, most preferably 6,000 cP or less.

Meanwhile, in case where the gas-liquid ratio G/S is less than the lower limit, this arouses troubles, for example, that too large secondary particles are apt to be yielded and the sprayed slurry is less apt to be dried. In case where the gas-liquid ratio G/S exceeds the upper limit, there is the possibility of resulting in a decrease in productivity. Consequently, the lower limit of the gas-liquid ratio G/S is generally 400 or greater, preferably 600 or greater, more preferably 700 or greater, most preferably 800 or greater, and the upper limit thereof is generally 10,000 or less, preferably 9,000 or less, more preferably 8,000 or less, most preferably 7,500 or less.

The slurry feed rate S and the gas feed rate G are suitably set in accordance with the viscosity of the slurry being subjected to the spray drying, the specifications of the spray dryer to be used, etc.

In the process according to the invention, methods for the spray drying are not particularly limited so long as the spray drying is conducted so as to satisfy the slurry viscosity V (cP) described above and the slurry feed rate and the gas feed rate are regulated so as to be suitable for the specifications of the spray dryer used and so long as the gas-liquid ratio G/S described above is satisfied. Although other conditions are suitably set in accordance with the kinds of devices used, etc., it is preferred to further select the following conditions.

Namely, it is preferred to conduct the spray drying of the slurry at a temperature which is generally 50°C or higher, preferably 70°C or higher, more preferably 120°C or higher, most preferably 140°C or higher, and is generally 300°C or lower, preferably 250°C or lower, more preferably 230°C or lower, most preferably 210°C or lower. In case where the temperature is too high, there is a possibility that the granule particles obtained might have hollow structures in a large amount and the powder might show a reduced loading density. On the other hand, in case where the temperature is too low, there is the possibility of posing problems of, for example, powder sticking/clogging due to water condensation at the powder outlet.

<Burning Step>

The burning precursor thus obtained is subsequently burned.
The term "burning precursor" in the invention means an unburned precursor for a lithium-transition metal compound, e.g., lithium-nickel-manganese-cobalt composite oxide, the unburned precursor being obtained by treating the spray-dried powder. For example, a compound which, during the burning, generates a decomposition gas or sublimes and which thereby forms interstices in the secondary particles may be incorporated into the spray-dried powder to obtain a burning precursor.

Conditions for this burning depend also on the composition and on the starting materials for the lithium compound which were used. However, there is a tendency that too high a burning temperature results in excessive growth of the primary particles and excessive interparticle sintering and hence in too small a specific surface area. Conversely, in case where the burning temperature is too low, different phases come to coexist and the crystal structure does not develop, resulting in enhanced lattice distortion. In addition, too large a specific surface area results. The burning temperature is generally 1,050°C or higher, preferably 1,060°C or higher, more preferably 1,070°C or higher, even more preferably 1,080°C or higher, most preferably 1,090°C or higher, and the upper limit thereof is generally 1,200°C or lower, preferably 1,190°C or lower, more preferably 1,180°C or lower, most preferably 1,170°C or lower.

For the burning, use can be made, for example, of a box furnace, tube furnace, tunnel kiln, rotary kiln, or the like. The burning step usually is divided into three parts, i.e., temperature rising, maximum-temperature holding, and temperature declining. The second part, i.e., maximum-temperature holding, need not be always conducted once, and may be performed in two or more stages according to purposes. The steps of temperature rising, maximum-temperature holding, and temperature declining may be conducted two times or further repeated while performing a disaggregation step, which is a step for eliminating the aggregation to such a degree that the secondary particles are not destroyed, or a pulverization step, which is a step for pulverizing the powder to the primary particles or to a finer powder, before each repetition.

In the case where the burning is conducted in two stages, it is preferred that in the first stage, the precursor should be held at a temperature which is not lower than the temperature at which the lithium source begins to decompose and which is not higher than the temperature at which the lithium source melts. For example, in the case where lithium carbonate is used, the holding temperature in the first stage is preferably 400°C or higher, more preferably 450°C or higher, even more preferably 500°C or higher, most preferably 550°C or higher, and is generally 850°C or lower, more preferably 800°C or lower, even more preferably 780°C or lower, most preferably 750°C or lower.

In the temperature rising step, which precedes the maximum-temperature holding step, the internal temperature of the furnace is elevated generally at a heating rate of 1-15 °C/min. Too low heating rates are industrially disadvantageous because too much time is required. However, too high heating rates pose a problem in some furnaces that the internal temperature does not follow a set temperature. The heating rate is preferably 2 °C/min or higher, more preferably 3 °C/min or higher, and is preferably 10 °C/min or less, more preferably 8 °C/min or less.

The holding period in the maximum-temperature holding step varies depending on temperature. However, so long as the temperature is within that range, the holding period usually is 30 minutes or longer, preferably 1 hour or longer, more preferably 2 hours or longer, most preferably 3 hours or longer, and is 50 hours or less, preferably 25 hours or less, more preferably 20 hours or less, most preferably 15 hours or less. In case where the burning period is too short, it is difficult to obtain a lithium-transition metal compound powder having satisfactory crystallinity. Meanwhile, too long periods are impracticable. Too long burning periods are disadvantageous because the resultant burned powder necessitates disaggregation or is difficult to disaggregate.

In the temperature declining step, the internal temperature of the furnace is lowered usually at a cooling rate of 0.1-15 °C/min. Too low cooling rates require much time and are industrially disadvantageous, while too high cooling rates tend to give a product having poor evenness or to accelerate deterioration of the vessel. The cooling rate is preferably 1 °C/min or higher, more preferably 3 °C/min or higher, and is preferably 10 °C/min or less, more preferably 8 °C/min or less.

The atmosphere to be used for the burning has a suitable range of partial oxygen pressure according to the composition of the lithium-transition metal compound powder to be obtained. Consequently, various suitable gas atmospheres for satisfying the range are used. Examples of the gas atmospheres include oxygen, air, nitrogen, argon, hydrogen, carbon dioxide, and gaseous mixtures thereof. For producing a lithium-nickel-manganese-cobalt composite oxide powder according to an embodiment of the invention, use can be made of an oxygen-containing gas atmosphere, e.g., air. The atmosphere is usually regulated so as to have an oxygen concentration which is 1% by volume or higher, preferably 10% by volume or higher, more preferably 15% by volume or higher, and is 100% by volume or less, preferably 50% by volume or less, more preferably 25% by volume or less.

In the case where the lithium-transition metal compound powder according to the invention, e.g., a lithium-nickel-manganese-cobalt composite oxide powder having the specific composition described above, is produced by such a production process using production conditions which are kept constant, the Li/Ni/Mn/Co molar ratio can be regulated to a target value by regulating the mixing ratio among the lithium compound, nickel compound, manganese compound, and cobalt compound when these compounds and additive 1 and additive 2 are dispersed in a liquid medium to prepare a slurry.

The lithium-transition metal compound powder according to the invention thus obtained, e.g., a lithium-nickel-manganese-cobalt composite oxide powder, makes it possible to provide a positive-electrode material for lithium secondary batteries which have a high capacity, are excellent in terms of low-temperature output characteristics and storability, and have a satisfactory performance balance.

[Conductive Material]

The conventionally known carbonaceous materials, including carbon black, for use as conductive materials have had the following drawback. When the nitrogen adsorption specific surface area thereof is increased, an increase in the amount of dehydrogenation results. Conversely, when the amount of dehydrogenation is rendered small, the carbonaceous materials have a reduced specific surface area and hence a reduced 24M4 DBP absorption. It has been difficult to heighten the electrical conductivity of a conductive material itself and simultaneously improve the life.
In the invention, carbon black production conditions are regulated to attain a nitrogen adsorption specific surface area and a 24M4 DBP absorption which are within the ranges shown above, thereby making it possible to obtain a positive electrode which has an increased electrical conductivity to conform to high outputs and which further has a prolonged electrochemical life and to thereby provide a lithium secondary battery having a high output and a long life.

Property parameters of the conductive material in the invention are explained below.

<Nitrogen Adsorption Specific Surface Area ($N_2SA$)>

Nitrogen adsorption specific surface area ($N_2SA$) is defined in accordance with JIS K6217 (unit, $m^2/g$).

The nitrogen adsorption specific surface area ($N_2SA$) of the carbon black to be used in the invention is as follows. The lower limit thereof is generally 70 $m^2/g$ or larger, preferably 80 $m^2/g$ or larger, more preferably 100 $m^2/g$ or larger, even more preferably 150 $m^2/g$ or larger. The upper limit thereof is generally 300 $m^2/g$ or less, preferably 290 $m^2/g$ or less, more preferably 280 $m^2/g$ or less.

From the standpoint of ensuring conduction paths among the active-material particles within the positive electrode of a lithium secondary battery to enable the battery to have high-output performance, it is preferred that the conductive material should have a larger specific surface area. Meanwhile, in case where the specific surface area thereof is too large, there is a possibility that a molding trouble might arise when a positive electrode is produced. In addition, there is a possibility that irreversible reactions due to electrochemical side reaction, etc. might be apt to occur, resulting in a decrease in life.
It is therefore preferred that the nitrogen adsorption specific surface area ($N_2SA$) of the carbon black to be used as the conductive material should be within that range.

<Average Particle Diameter>

Average particle diameter in the invention is an average diameter determined through an examination with a scanning electron microscope (SEM).

The average particle diameter of the carbon black according to the invention may be as follows. The lower limit thereof is 10 nm or larger, preferably 12 nm or larger, especially preferably 15 nm or larger. The upper limit thereof is 35 nm or less, preferably 33 nm or less, especially preferably 31 nm or less. In case where the average particle diameter thereof is too small, a decrease in solid concentration results during dispersion in a positive-electrode slurry and it is necessary to use a larger amount of solvent for slurry preparation. Conversely, when the average particle diameter thereof is too large, there are cases where close contact with the positive active material is insufficient.

<Volatile Content>

The volatile content of the carbon black to be used as the conductive material according to the invention is as follows. The lower limit thereof is generally 0.8% or higher, preferably 0.9% or higher, especially preferably 1.0% or higher. The upper limit thereof is generally 5% or less, preferably 4% or less, especially preferably 3% or less. When the volatile content thereof is too low, there are cases where this conductive material might show a reduced interaction with the active material, resulting in insufficient contact between this conductive material and the active material. Conversely, when the volatile content thereof is too high, there are cases where this carbon black poses problems, for example, that the slurry during positive-electrode production shows insufficient stability and is apt to suffer aggregation.

<24M4 DBP Absorption and DBP Absorption>

DBP absorption is an amount defined in accordance with JIS K6217 (unit, $cm^3/100$ g).
24M4 DBP absorption, which is a parameter different from DBP absorption, is the DBP absorption of a compressed sample (the unit is $cm^3/100$ g in this case also), which is in accordance with JIS K6217 like DBP absorption.
The carbon black in the invention has a 24M4 DBP absorption of generally 100 $cm^3/100$ g or more, preferably 105 $cm^3/100$ g, more preferably 110 $cm^3/100$ g or more.
In case where the 24M4 DBP absorption thereof is less than the lower limit, the structure is apt to be destroyed by stress imposed during positive-electrode production or by stress imposed during cycling or storage. There are hence cases where a sufficient amount of conduction paths are not formed, resulting in a decrease in capacity or output, or where the conduction paths which have been formed are destroyed, resulting in a decrease in life. Although there is no particular upper limit on the 24M4 DBP absorption thereof, the 24M4 DBP absorption thereof is generally 200 $cm^3/100$ g or less from the standpoint of handleabilty during positive-electrode production.
In general, carbon black is in the form of secondary particles each constituted of a peculiar chain morphology, called a structure (aggregate structure), that is composed of primary particles which have been clustered like a bunch of grapes. From the standpoint of easily ensuring conduction paths, carbon black in which the structure has grown is preferred. Carbon black having a reduced primary-particle diameter also is effective in improving electrical conductivity. Furthermore, electrical conductivity is improved also by reducing the amount of functional groups (oxygen compounds) present on the surface of the primary particles of the carbon black.
DBP (dibutyl phthalate) is absorbed in interstices within the carbon black, including the interstices of each cluster structure in the form of a bunch of grapes. Consequently, 24M4 DBP absorption and DBP absorption are important indexes to the degree of growth of the structure possessed by the carbon back.
Ordinary DBP absorption is measured after the carbon black as such is allowed to absorb DBP. In contrast, 24M4 DBP absorption is measured after stress is imposed on the carbon black to destroy the easy-to-break parts of the carbon black before DBP is absorbed therein. In the case where carbon black is used in a positive electrode, the carbon black usually receives various kinds of stress during mixing with an active material, during positive-electrode molding, etc. It is therefore thought that 24M4 DBP absorption is more important for indicating the structures of the carbon black than DBP absorption.
Since there is a correlation between the 24M4 DBP absorption of the carbon black and the amount of structures which are effective in forming conduction paths in a positive electrode, the 24M4 DBP absorption correlates with battery improvements. In addition, it is thought that the 24M4 DBP absorption indicates the amount of structures present in the carbon black which are less apt to break even when the active material or the positive electrode undergoes expansion/contraction, etc. when the lithium secondary battery is examined for cycle characteristics, storability, etc. The 24M4 DBP absorption hence correlates also with life. Namely, it is thought that a 24M4 DBP absorption which is below a certain degree is less apt to bring about those electrochemical properties.
For the reasons shown above, the carbon black in the invention has a 24M4 DBP absorption not less than the given value.

<(1,500°C × 30 min) Dehydrogenation Amount>

(1,500°C × 30 min) dehydrogenation amount is the amount of hydrogen contained in the gas which is evolved during the 30-minute period when the carbon black is heated in a vacuum at 1,500°C. Specifically, this amount is measured in the manner which will be described later.
It is preferred that the dehydrogenation amount of the carbon black to be used as the conductive material according to the invention (hereinafter also referred to simply as "carbon black") should be generally 1.8 mg/g or less, preferably 1.7 mg/g or less, more preferably 1.6 mg/g or less.
The dehydrogenation amount is considerably affected by the heat history which the carbon black has undergone. Hydrogen remains in a large amount when the heat treatment was insufficient, and this residual hydrogen is thought to significantly affect electrical conductivity. Carbon black having a large dehydrogenation amount has not undergone sufficient carbonization of the carbon black surface, and it is therefore thought that this carbon black cannot improve the electrical conductivity in an electrode and, hence, cannot bring about an improvement in output. It is also thought that when this carbon black is used in a battery, the carbon black affects the electrochemical stability also and governs the life. In view of these points, it is thought that smaller values of the dehydrogenation amount of the carbon black are usually preferred. However, since too small values thereof lead to an increase in cost in the case of industrial production, it is generally desirable that the dehydrogenation amount of the carbon black should be usually 0.1 mg/g or more, more preferably 0.3 mg/g or more.

(Measuring Method)

An about 0.5-g portion of carbon black is precisely weighed and placed in an alumina tube. The tube is evacuated to 0.01 Torr (1.3 Pa) and then closed. This tube is held in a 1,500°C electric furnace for 30 minutes to decompose or volatilize the oxygen compounds and hydrogen compounds present in the carbon black. The volatilized components are collected through a constant-delivery suction pump in a gas collection tube having a given capacity. The amount of the gas is determined from the pressure and the temperature, and the gas is analyzed for composition with a gas chromatograph to determine the amount (mg) of hydrogen ($H_2$) generated, which is converted to the amount of hydrogen generated per gram of the carbon black (unit, mg/g).

<Crystallite Size Lc>

It is preferred that the carbon black to be used in the invention should have the following crystallite size Lc. The lower limit of the crystallite size Lc thereof is 10 angstrom or larger, more preferably 13 angstrom or larger, and the upper limit thereof is 40 angstrom or less, preferably 25 angstrom or less, more preferably 17 angstrom or less. By regulating the carbon black so as to have a crystallite size Lc within this specific range, the electrical conductivity of the positive electrode can be maximized. In case where the value thereof is too large or too small, there is a possibility that sufficient electrical conductivity might not be obtained.

Incidentally, the crystallite size Lc according to the invention is determined using an X-ray diffractometer (Type RINT-1500, manufactured by Rigaku Industrial Corp.). With respect to the measuring conditions, Cu is used in the tube, and the tube voltage and the tube current are 40 kV and 250 mA, respectively. A carbon black sample is packed into a sample plate which is an accessory of the apparatus, and a measurement is made over the measuring angle ($2\theta$) range of 10°-60° at a measuring speed of 0.5 °/min. Peak positions and half-value widths are calculated by means of the software of the apparatus. For measuring-angle calibration, silicon for an X-ray standard is used. From the results thus obtained, the crystallite size Lc is determined using the Scherrer equation: $Lc$ (angstrom) $= K \times \lambda/(\beta \times \cos\theta)$ (wherein $K$ is the shape factor constant, 0.9: $\lambda$ is the wavelength of characteristic X-ray line of CuK$\alpha$, 1.5418 (angstrom); $\beta$ is half-value width (radian); and $\theta$ is peak position (degrees)).

In the invention, carbon black which further has a value of Dmod/24M4 DBP in the range of 0.6-0.9 is preferred. Carbon black is in the form of secondary particles (aggregates) each constituted of a plurality of primary particles which have been clustered, as stated above, and 24M4 DBP absorption is used as an index to the degree of growth of the aggregate structure (structure). Known as another index to the properties of carbon black is Stokes' diameter. Generally used as this Stokes' diameter is the diameter (mode diameter; Dmod) determined by a centrifugal precipitation method (DCP) in which the carbon black aggregates are regarded as pseudo-spheres which are in accordance with Stokes' law. As a Dmod distribution index, Dmod half-value width (D1/2) is used.

Hitherto, these indexes, the ratio therebetween (D1/2/Dmod), other property values, etc. have been used as indexes to the properties of carbon blacks to improve carbon blacks themselves and the properties, processability, etc. of rubbers and resin compositions. In such conventional techniques, however, use of these indexes has been limited to evaluation in which individual numerical values of the indexes are separately evaluated, and it has been impossible to sufficiently grasp the properties of the carbon black. For example, even when the Stokes mode diameter (Dmod) of carbon black is used alone, the degree of growth of the structures thereof is not determined unconditionally, resulting in cases, for example, where carbon blacks which are equal in Dmod differ in electrical conductivity. Consequently, there has been a problem that sufficient improvements have not been made in carbon blacks to be added especially to electrically conductive resin compositions.

The present inventors hence diligently made investigations. As a result, the inventors have found that an electrically conductive resin composition having a highly excellent balance between electrical conductivity and flowability can be rendered possible by using, as a filler for the conductive resin composition, carbon black in which the Dmod is in a specific numerical-value range with respect to the 24M4 DBP absorption, which indicates the degree of structure growth, namely, carbon black in which the value of Dmod/24M4 DBP is in a specific range.

The numerical value of Dmod/24M4 DBP indicates the dimension of the aggregate diameter relative to the degree of growth of the carbon black structures. The smaller the numerical value thereof, namely, the higher the degree of structure growth relative to the same aggregate diameter, the more densely the primary carbon black particles have gathered. When the numerical value thereof is too small, there are cases where this carbon black has a reduced affinity for resins, resulting in a resin composition which has reduced flowability or which shows reduced electrical conductivity due to a decrease in the dispersibility of the carbon black in the resin composition. Conversely, when the numerical value thereof is too large, there are cases where the carbon black itself has reduced electrical conductivity and the amount of the carbon black to be added to a conductive resin composition in order to impart desired electrical conductivity should be increased, resulting in decreases in the mechanical and other properties of the resin composition. Consequently, it is preferred in the carbon black according to the invention that the value of Dmod/24M4 DBP should be 0.6-0.9.

It is also preferred in the carbon black according to the invention that the aggregate diameter distribution relative to the degree of structure growth should be narrower. Specifically, it is preferred that the numerical value of the ratio of the Stokes' mode half-value width (D1/2) to the 24M4 DBP absorption (D1/2/24M4 DBP) should be smaller. When the numerical value thereof is too large, there are cases where the carbon black itself has reduced electrical conductivity and the amount of the carbon black to be added to a conductive resin composition in order to impart desired electrical conductivity should be increased, resulting in decreases in the mechanical and other properties of the resin composition. Consequently, it is preferred in the carbon black according to the invention that the value of D1/2/24M4 DBP should be 0.9 or less.

Although there is no particular lower limit thereon, the value of that ratio is preferably 0.45 or larger for reasons of the economic efficiency of production, etc.

Furthermore, it is preferred in the invention that the carbon black should have a CTAB adsorption specific surface area regulated to 120-220 $m^2/g$, in particular, 150-200 $m^2/g$. By regulating this specific surface area to a value within that specific range, both the electrical conductivity and the flowability of the resin composition can be further enhanced. Too small CTAB specific surface areas thereof may result in a decrease in electrical conductivity, while too large CTAB specific surface areas thereof may result in reduced dispersibility in the resin composition.

In addition, it is preferred in the invention that the population density of oxygen-containing functional groups which is defined by the following equation should be 3 $\mu mol/m^2$ or less.

$$\text{Population density of oxygen-containing functional groups } (\mu mol/m^2)$$
$$= [(\text{amount of CO generated } (\mu mol/g)) + (\text{amount of CO}_2 \text{ generated}$$
$$(\mu mol/g))]/(\text{nitrogen adsorption specific surface area } (m^2/g))$$

An explanation is given here on numerical values thereof. Carbon blacks have surface functional groups to some degree, and carbon monoxide (CO) and carbon dioxide ($CO_2$) generate when the functional groups are heated. For example, when carbonyl groups (ketones, quinones, etc.) are present, these groups mainly yield CO through decomposition. When carboxyl groups and derivatives thereof (esters, lactones, etc.) are present, $CO_2$ generates similarly. In other words, the amount of functional groups present on the surface of carbon black can be estimated by determining the amount of the gases generated therefrom. Meanwhile, it has conventionally been known that from the standpoint of improving the electrical conductivity of carbon black, it is desirable that the amount of those functional groups should be small. However, the amount of those functional groups has conventionally been expressed using numerical values based on the amount of gases generated per unit weight of the carbon black. In other words, it has commonly been thought that the amount of functional groups relative to the weight of the carbon black affects the electrical conductivity.

The inventors diligently made further investigations on that common view. As a result, the inventors have found that also with respect to electrical conductivity on the basis of a conception different from dispersibility, the amount of those functional groups which is expressed not by a numerical value per unit weight of the carbon black but by the number of the functional groups per unit specific surface area is effective in improving the electrical conductivity of a resin composition and, hence, in enabling the composition to combine electrical conductivity and flowability.

Although unclear, the reasons therefor are thought to be as follows. When a current flows through the resin composition, the functional groups which localize on the surface of the carbon black inhibit electron transfer between the secondary particles of the carbon black. Consequently, the number (population density) of the functional groups per unit surface area more affects the electrical conductivity than the absolute amount thereof per unit weight.

Namely, the population density of oxygen-containing functional groups indicates the number of functional groups per unit surface area of the carbon black. Smaller numerical values thereof are hence preferred. In case where the numerical value thereof is too large, the resin composition containing this carbon black has reduced electrical conductivity for those reasons. The smaller the numerical value thereof, the more the carbon black is preferred from the standpoint of electrical conductivity. However, in case where the numerical value thereof is too small, there is a possibility that this carbon black might have reduced dispersibility and the electrical conductivity and the flowability might be impaired, rather than improved, as stated above. In addition, such too small values thereof are disadvantageous for reasons of industrial profitability, etc., as in the case of dehydrogenation amount. Consequently, it is preferred that the population density of oxygen-containing functional groups should be 0.1 $\mu$mol/m$^2$ or more.

<Production Process>

For producing the carbon black to be used as the conductive material according to the invention, any desired process may be used. Examples thereof include an oil furnace process, an acetylene process, and an activation process for producing Ketjen Black. Of these, the oil furnace process is preferred because carbon black can be produced at low cost in satisfactory yield.

Specific methods for synthesizing carbon black having the specific properties described above are as described in JP-A-2006-52237.

An apparatus for carbon black production by the oil furnace process is equipped with: a first reaction zone in which a fuel is burned to yield a high-temperature combustion gas stream; a second reaction zone which has been disposed subsequently to the first reaction zone and in which a hydrocarbon feedstock (hereinafter often referred to as "oil") as a raw material for carbon black is introduced and caused to undergo a carbon black formation reaction; and a third reaction zone which has been disposed subsequently to the second reaction zone and which has a cooling means for terminating the carbon black formation reaction.

When carbon black is produced using this carbon black production apparatus, a high-temperature combustion gas stream is generated in the first reaction zone and a hydrocarbon feedstock (oil) for carbon black is sprayed in the second reaction zone to yield carbon black in the second reaction zone. This gas stream which contains the carbon black is introduced into the third reaction zone, in which the gas stream is quenched by water spraying from spray nozzles. The gas stream in the third reaction zone, which contains the carbon black, is whereafter introduced through a flue into a collection means such as, for example, a cyclone or a bag filter. Thus, the carbon black is collected.

Oil-furnace carbon black can be produced by designing such a production apparatus and controlling production conditions. The properties thereof can be relatively easily controlled. This carbon black hence is more advantageous than other conductive materials from the standpoint of designing the properties of the carbon black to be used in the positive electrode of a lithium secondary battery.

For example, the following method may be used. The position of a nozzle for introducing a raw material for carbon black in the second reaction zone and the position of a cooling water feed nozzle in the third reaction zone are adjusted to regulate the in-furnace residence time of the carbon black to a value within a specific range, thereby regulating the resultant carbon black so as to have a 24M4 DBP absorption and a specific surface area which are in the specific ranges, to have a crystallite size Lc which is not excessively large and is the specific small value, and to be in such a state that the surface of the carbon black particles has sufficiently undergone dehydrogenation, as described above. More specifically, the internal temperature of the furnace may be regulated to generally 1,500-2,000°C, preferably 1,600-1,800°C, and the residence time of the carbon black in the furnace, i.e., the time period required for the reaction mixture to move from the feedstock introduction point to the position where the reaction is terminated (the period required for the reaction mixture to move from the position distance where a raw material for carbon black is introduced to the position distance where the reaction is terminated), may be regulated to generally 40-500 milliseconds, preferably 50-200 milliseconds. In the case where the internal temperature of the furnace is as low as below 1,500°C, the in-furnace residence time may be regulated to more than 500 milliseconds but 5 seconds or less, preferably 1-3 seconds.

Since the carbon black according to the invention has an especially small dehydrogenation amount, it is preferred that the carbon black should be produced using a method in which the high-temperature combustion gas stream in the furnace is regulated so as to have a high temperature of 1,700°C or above or a method in which oxygen is further introduced into the furnace on the downstream side of the nozzle for introducing the raw material for carbon black and the hydrogen and other substances present on the surface of the resultant carbon black are burned to prolong the high-temperature residence time by means of the resultant heat of reaction. Such methods are preferred because crystallization in the vicinity of the surface of the carbon black and the dehydrogenation of inner parts of the carbon black are effectively carried out.

[Method for Producing the Positive Electrodes]

A positive active layer is usually produced by mixing the positive-electrode material to be used in the invention, the conductive material to be used in the invention, a binder, a thickener, etc. by a dry process, forming the mixture into a sheet, and press-bonding the sheet to a positive current collector, or by dissolving or dispersing those materials in a liquid medium to obtain a slurry, applying the slurry to a positive current collector, and drying the slurry applied.

<Mixing Proportion between Positive Active Material and Conductive Material>

The mixing proportion between the positive active material according to the invention and the conductive material (=(weight of the conductive material)/(weight of the positive active material)) is generally 0,1% by weight or higher, preferably 0.5% by weight or higher, more preferably 1% by weight or higher, especially preferably 1.5% by weight or higher, and is generally 20% by weight or less, preferably 18% by weight or less, more preferably 15% by weight or less, especially preferably 10% by weight or less. So long as the mixing proportion is within that range, conduction paths can be sufficiently ensured while maintaining a charge/discharge capacity. That mixing proportion range is hence preferred.

<Mechanochemical Treatment>

It is preferred that the positive active material according to the invention and the conductive material should be subjected to a mechanochemical treatment. By subjecting the positive active material and the conductive material to a mechanochemical treatment, close contact between these materials is improved, thereby bringing about the effects of the invention. In addition, when a mechanochemical treatment is conducted, the amount of the conductive material to be used and subjected to the mechanochemical treatment can be reduced. Furthermore, even when a general-purpose conductive material such as, for example, acetylene black is used in positive-electrode production after a mechanochemical treatment, the resultant positive electrode brings about the same effects as a positive electrode employing the conductive material according to the invention.
The weight proportion of the conductive material to be subjected to the mechanochemical treatment ((conductive material) /[(positive active material)+(conductive material)]) is generally 10% or less. From the standpoint that too high proportions of the conductive material may result in a decrease in bulk density, a decrease in battery capacity, and an adverse influence on electrode preparation, the weight proportion thereof is preferably 7% or less, more preferably 5% or less, especially preferably 3% or less. The weight proportion thereof is generally 0.1% or higher. From the standpoint that too low proportions of the conductive material result in a possibility that the number of points of contact between particles of the conductive material which covers the surface of the active material might be too small to fully produce the effects of the invention, the weight proportion of the conductive material is preferably 0.2% or higher, more preferably 0.3% or higher, especially preferably 0.5% or higher.
Any method for the mechanochemical treatment may be used so long as the morphological features of the invention can be attained therewith. Examples thereof include treatment methods in which compression/shear stress is imposed using, for example, "Mechanofusion System" or "Nobilta System", manufactured by Hosokawa Micron Corp., "Hybridization System", manufactured by Nara Machinery Co., Ltd., etc. However, usable methods should not be construed as being limited thereto.
The period required for the mechanochemical treatment is generally 1 minute or longer. Since some degree of prolongation of treatment period enables the conductive material to spread evenly over the surface of the active material, the treatment period is preferably 2 minutes or longer, more preferably 3 minutes or longer, especially preferably 5 minutes or longer. The treatment period is generally 5 hours or shorter. However, since too long a treatment period may cause surface damage to the active material itself to make it impossible to obtain the desired effects, the treatment period is preferably 3 hours or shorter, more preferably 2 hours or shorter, especially preferably 1 hour or shorter.

<Binder>

The binder to be used for producing the positive active layer is not particularly limited. In the case of layer formation through coating fluid application, use may be made of a material which is soluble or dispersible in the liquid medium to be used for positive-electrode production. Examples thereof include resinous polymers such as polyethylene, polypropylene, poly(ethylene terephthalate), poly(methyl methacrylate), aromatic polyamides, cellulose, and nitrocellulose, rubbery polymers such as SBR (styrene/butadiene rubbers), NBR (acrylonitrile/butadiene rubbers), fluororubbers, isoprene rubbers, butadiene rubbers, and ethylene/propylene rubbers, thermoplastic elastomeric polymers such as styrene/butadiene/styrene block copolymers and products of hydrogenation thereof, EPDM (ethylene/propylene/diene terpolymers), styrene/ethylene/butadiene/ethylene copolymers, and styrene/isoprene/styrene block copolymers and products of hydrogenation thereof, flexible resinous polymers such as syndiotactic 1,2-polybutadiene, poly(vinyl acetate), ethylene/vinyl acetate copolymers, and propylene/$\alpha$-olefin copolymers, fluorochemical polymers such as poly(vinylidene fluoride) (PVdF), polytetrafluoroethylene, fluorinated poly(vinylidene fluoride), and polytetrafluoroethylene/ethylene copolymers, and polymer compositions having the property of conducting alkali metal ions (especially lithium ions). One of these substances may be used alone, or any desired two or more thereof may be used in combination in any desired proportion.
The proportion of the binder in the positive active layer is generally 0.1% by weight or higher, preferably 1% by weight or higher, more preferably 3% by weight or higher, and is generally 80% by weight or less, preferably 60% by weight or less, more preferably 40% by weight or less, most preferably 10% by weight or less. In case where the proportion of the binder is too low, there is a possibility that the positive active material cannot be sufficiently held and the positive electrode might have insufficient mechanical strength, resulting in a decrease in battery performance, e.g., cycle characteristics. On the other hand, in case where the proportion thereof is too high, there is a possibility that such too high a proportion might lead to a decrease in battery capacity or electrical conductivity.

<Conductive Material>

As the conductive material, the carbon black described above is used. However, the following substances may be used in combination with the carbon black: metallic materials such as copper and nickel and carbon materials such as graphites, e.g., natural graphites and artificial graphites, carbon blacks, e.g., acetylene black, and amorphous carbon, e.g., needle coke. One of these substances may be used alone, or a mixture of two or more thereof may be used.

In the case where a conductive material other than the carbon black according to the invention is contained as a conductive material, it is preferred that the proportion thereof should be up to 90% by weight of all conductive materials, from the standpoint of sufficiently obtaining the effects of the carbon black.

In the case where a positive-electrode material obtained by subjecting the positive active material according to the invention and a conductive material to a mechanochemical treatment is used, the effects are produced even when one or more of the carbon black described above, metallic materials such as copper and nickel, and carbon materials such as graphites, e.g., natural graphites and artificial graphites, carbon blacks, e.g., acetylene black, and amorphous carbon, e.g., needle coke, are used alone.

<Liquid Medium>

The liquid medium to be used for forming a slurry is not particularly limited in the kind thereof so long as the liquid medium is a solvent in which the lithium-nickel composite oxide powder as a positive active material, a conductive material, a binder, and a thickener, which is used according to need, can be dissolved or dispersed. Either an aqueous solvent or an organic solvent may be used. Examples of the aqueous solvent include water and alcohols. Examples of the organic solvent include N-methylpyrrolidone (NMP), dimethylformamide, dimethylacetamide, methyl ethyl ketone, cyclohexanone, methyl acetate, methyl acrylate, diethyltriamine, N-N-dimethylaminopropylamine, ethylene oxide, tetrahydrofuran (THF), toluene, acetone, dimethyl ether, dimethylacetamide, hexamethylphosphoramide, dimethyl sulfoxide, benzene, xylene, quinoline, pyridine, methylnaphthalene, and hexane. Especially when an aqueous solvent is used, a dispersant is added in combination with a thickener to slurry the mixture using a latex of, for example, an SBR.

One of those solvents may be used alone, or any desired two or more thereof may be used in combination in any desired proportion.

<Current Collector>

As the material of the positive current collector, use is usually made of a metallic material such as aluminum, stainless steel, a nickel-plated material, titanium, or tantalum or a carbon material such as a carbon cloth or a carbon paper. Preferred of these are metallic materials. Especially preferred is aluminum. With respect to shape, examples of shapes in the case of metallic materials include metal foils, metal cylinders, metal coils, metal plates, thin metal films, expanded metals, punching metals, and metal foam. In the case of carbon materials, examples of the shapes thereof include carbon plates, thin carbon films, and carbon cylinders, Preferred of these are thin metal films because these films are currently in use in products produced industrially. The thin films may be suitably processed into a mesh form.

In the case where a thin film is used as the positive current collector, this thin film may have any desired thickness. However, it is preferred that the thickness thereof should be generally 1 $\mu$m or larger, preferably 3 $\mu$m or larger, more preferably 5 $\mu$m or larger, and be generally 100 mm or less, preferably 1 mm or less, more preferably 50 $\mu$m or less. In case where the thin film has a thickness less than that range, there is a possibility that this film might be insufficient in the strength required of current collectors. On the other hand, in case where the film has a thickness larger than that range, there is a possibility that this film might have impaired handleability.

The content of the lithium-transition metal compound powder according to the invention, as a positive-electrode material, in the positive active layer is generally

10% by weight or higher, preferably 30% by weight or higher, more preferably 50% by weight or higher, and is generally 99.9% by weight or less, preferably 99% by weight or less. In case where the content of the lithium-transition metal compound powder in the positive active layer is too high, this positive electrode tends to have insufficient strength. When the content thereof is too low, there are cases where an insufficient capacity results.

The thickness of the positive active layer is generally about 10-200 $\mu$m.
With respect to the electrode density of the positive electrode which has been pressed, the lower limit thereof is generally 2.2 g/cm$^3$ or higher, preferably 2.4 g/cm$^3$ or higher, especially preferably 2.6 g/cm$^3$ or higher, and the upper limit thereof is generally 4.2 g/cm$^3$ or less, preferably 4.0 g/cm$^3$ or less, especially preferably 3.8 g/cm$^3$ or less.
It is preferred that the positive active layer obtained through coating fluid application and drying should be densified with a roller press or the like in order to heighten the loading density of the positive active material.
Thus, a positive electrode of the invention for lithium secondary batteries can be prepared.

<Reasons why the Positive Electrodes for Lithium Secondary Batteries according to First Aspect of the Invention bring about those Effects>

The reasons why the positive electrodes for lithium secondary batteries according to the first aspect of the invention bring about the effects described above are presumed to be as follows.
The lithium-transition metal compound powder to be used in the invention has a surface which is highly basic, and this active material is presumed to have a negative $\zeta$-potential, Meanwhile, the conductive material to be used in the invention comes into satisfactory contact with the active material and, hence, the $\zeta$-potential of this conductive material is presumed to be positive. It is therefore presumed that use of a positive electrode for lithium secondary battery which has been obtained using the positive active material and the conductive material, which have such properties, brings about the effects of the invention including a prolongation of battery life due to improvements in electrode strength, cycle characteristics, etc.
Furthermore, as stated above, when the active material and the conductive material have undergone a mechanochemical treatment, a necessary amount of the conductive material can be efficiently disposed on the surface of the active material. Consequently, not only the amount of the conductive material to be used can be reduced but also this effect can be maintained even when another conductive material is used in combination therewith. It is hence preferred to conduct the treatment.

[Positive Electrodes for Lithium Secondary Batteries according to Second Aspect]

The positive electrodes for lithium secondary batteries according to the second aspect of the invention are explained next.
The positive electrodes for lithium secondary batteries according to the second aspect of the invention are the same as the positive electrodes according to the first aspect, except that the following binder is used as the binder.

[Binder]

The binder to be used for producing the positive active layer is not particularly limited. In the case of layer formation through coating fluid application, use may be made of a material which is soluble or dispersible in the liquid medium to be used for positive-electrode production. Examples thereof include resinous polymers such as polyethylene, polypropylene, poly(ethylene terephthalate), poly(methyl methacrylate), aromatic polyamides, cellulose, and nitrocellulose, rubbery polymers such as SBR (styrene/butadiene rubbers), NBR (acrylonitrile/butadiene rubbers), fluororubbers, isoprene rubbers, butadiene rubbers, and ethylene/propylene rubbers, thermoplastic elastomeric polymers such as styrene/butadiene/styrene block copolymers and products of hydrogenation thereof, EPDM (ethylene/propylene/diene terpolymers), styrene/ethylene/butadiene/ethylene copolymers, and styrene/isoprene/styrene block copolymers and products of hydrogenation thereof, flexible resinous polymers such as syndiotactic 1,2-polybutadiene, poly(vinyl acetate), ethylene/vinyl acetate copolymers, and propylene/$\alpha$-olefin copolymers, fluorochemical polymers such as poly(vinylidene fluoride) ((PVdF), polytetrafluoroethylene, fluorinated poly(vinylidene fluoride), and polytetrafluoroethylene/ethylene copolymers, and polymer compositions having the property of conducting alkali metal ions (especially lithium ions). One of these substances may be used alone, or any desired two or more thereof may be used in combination in any desired proportion.
With respect to the weight-average molecular weight of the binder according to the invention, the lower limit thereof is usually preferably 200,000 or higher, more preferably 250,000 or higher, even more preferably 270,000 or higher, most preferably 280,000 or higher. Meanwhile, in case where the weight-average molecular weight thereof is too high, the slurry for positive-electrode production may become unstable. Consequently, the upper limit of the weight-average molecular weight thereof is usually preferably 600,000 or less, more preferably 550,000 or less, even more preferably 500,000 or less, most preferably 450,000 or less.

The proportion of the binder in the positive active layer is generally 0.1% by weight or higher, preferably 1% by weight or higher, more preferably 3% by weight or higher, and is generally 80% by weight or less, preferably 60% by weight or less, more preferably 40% by weight or less, most preferably 10% by weight or less. In case where the proportion of the binder is too low, there is a possibility that the positive active material cannot be sufficiently held and the positive electrode might have insufficient mechanical strength, resulting in a decrease in battery performance, e.g., cycle characteristics. On the other hand, in case where the proportion thereof is too high, there is a possibility that such too high a proportion might lead to a decrease in battery capacity or electrical conductivity.

[Combination of Conductive Material and Binder]

The positive electrodes of the invention are characterized in that when the nitrogen adsorption specific surface area ($N_2SA$; unit, $m^2/g$) of the conductive material is expressed by S and the weight-average molecular weight of the binder is expressed by M, the S and the M satisfy the following expression (1).

$$(S \times M)/10,000 \leq 7,500 \qquad (1)$$

The lower limit of $(S \times M)/10,000$ is usually preferably 1,500 or larger, more preferably 1,700 or larger, even more preferably 1,900 or larger, most preferably 1,930 or larger, because it is necessary to sufficiently maintain the strength of the positive electrode. Meanwhile, since it is necessary to sufficiently ensure slurry stability during positive-electrode production, the upper limit thereof is usually characterized by being 7,500 or less, and is more preferably 7,300 or less, even more preferably 7,100 or less, most preferably 7,000 or less.

<Reasons why the Positive Electrodes for Lithium Secondary Batteries according to Second Aspect of the Invention bring about those Effects>

The reasons why the positive electrodes for lithium secondary batteries according to the second aspect of the invention bring about the effects described above are presumed to be as follows.
In case where the conductive material to be used in the invention is used together with a binder having an ordinary molecular weight and these materials are mixed with the active material and slurried in a solvent, the slurry gels undesirably.
In contrast, when the binder and conductive material which are to be used in the invention are used in combination, it is possible to prevent the resultant positive-electrode slurry from gelling. Although still unclear, the reasons why the gelation can be prevented are presumed to be as follows. In the case where a conductive material which has a large nitrogen adsorption specific surface area or a small average particle diameter or which has a high volatile content is used, an increased amount of water is carried into the positive-electrode slurry by this conductive material and, hence, the binder comes to have reduced solubility in the organic solvent, e.g., NMP, contained in the positive-electrode slurry,
In this case, when the binder has a high molecular weight, sufficient solubility in the organic solvent is not ensured and the binder precipitates or crystallizes, thereby causing a decrease in pot life, e.g., slurry aggregation, Furthermore, since this conductive material has an increased reaction area due to the large Nitrogen adsorption specific surface area or small average particle diameter thereof or since this conductive material has a high volatile content even when the reaction area thereof remains substantially the same, reactions such as a reaction for chemically bonding the conductive material to the binder are accelerated. As a result, aggregation of the positive-electrode slurry and the like are apt to be caused. In this case, when the binder has a high molecular weight, dispersion in the slurry is apt to be inhibited even when the number of sites of bonding to the conductive material is small, resulting in a decrease in pot life. In the case where a conductive material which has a large nitrogen adsorption specific surface area or a small average particle diameter or has a high volatile content is used in order to overcome those problems, the stability of the positive-electrode slurry can be improved by using a binder having a molecular weight which is low to such a degree that the strength of the positive electrode can be sufficiently ensured.

[Positive electrode for lithium secondary battery according to Third Aspect]

The positive electrode for lithium secondary battery according to the third aspect of the invention is explained next.

[Active Material]

The positive electrode for lithium secondary battery according to the third aspect of the invention is the same as the positive electrodes for lithium secondary batteries according to the first aspect of the invention, except that the active material has the following powder properties.

<Volume Resistivity>

In the invention, the lithium-transition metal compound powder as an active material is characterized in that when compacted at a pressure of 40 MPa, the powder has a value of volume resistivity of $5 \times 10^5$ $\Omega \cdot$cm or higher. It is thought that the higher the volume resistivity, the higher the effects of the invention. Consequently, the volume resistivity thereof is preferably $5.5 \times 10^5$ $\Omega \cdot$cm or higher, more preferably $6 \times 10^5$ $\Omega \cdot$cm or higher, especially preferably $6.5 \times 10^5$ $\Omega \cdot$cm or higher. When the volume resistivity thereof is higher than the lower limit, the effects of the invention are produced. The upper limit of the volume resistivity thereof is generally $5 \times 10^6$ $\Omega \cdot$cm or less, preferably $4.5 \times 10^6$ $\Omega \cdot$cm or less, more preferably $4 \times 10^6$ $\Omega \cdot$cm or less, most preferably $3.8 \times 10^6$ $\Omega \cdot$cm or less. When the volume resistivity thereof is less than the upper limit, the battery obtained using this powder has preferred rate characteristics, low-temperature characteristics, etc. It is preferred that the lithium-transition metal compound powder should be a lamellar lithium-nickel-manganese-cobalt composite oxide powder.

In the invention, the lithium-transition metal compound powder as an active material is characterized by having an angle of repose of 50° or larger. It is thought in the invention that as the angle of repose increases, bonding to the conductive material becomes stronger and the battery characteristics become better. Consequently, the angle of repose of the powder is preferably 50.5° or larger, more preferably 51° or larger, especially preferably 52° or larger, When the angle of repose thereof is larger than the lower limit, the effects of the invention are produced. The upper limit of the angle of repose thereof is 65° or less, preferably 60° or less, more preferably 58° or less, most preferably 55° or less. The powder having an angle of repose smaller than the upper limit is preferred because this powder has satisfactory handleability.

<Method for Measuring Angle of Repose>

(1) A standard sieve is oscillated to supply the powder through a funnel onto a table under the conditions of a sieve oscillation frequency of 3,600 min$^{-1}$, a sieving amplitude of 2 mm, a sieving period of 4 minutes, and a funnel tip diameter of 8 mm.
(2) The angle of repose of the powder is measured through an angle calculation (least square method) by means of a displacement sensor based on a semiconductor laser (wavelength, 670 nm). The resolution for minimum reading is set at 0.1 degree.

<Bulk Density>

The bulk density of the lithium-transition metal compound powder according to the invention is generally 1.2 g/cc or higher, preferably 1.3 g/cc or higher, more preferably 1.4 g/cc or higher, most preferably 1.5 g/cc or higher, and is generally 2.6 g/cc or less, preferably 2.5 g/cc or less, more preferably 2.4 g/cc or less, most preferably 2.3 g/cc or less. Bulk densities thereof higher than the upper limit are preferred from the standpoints of powder loading characteristics and electrode density improvement, but pose the possibility of resulting in too small a specific surface area and the possibility of resulting in a decrease in battery performance. In case where the bulk density thereof is less than the lower limit, there is a possibility that an adverse influence might be exerted on powder loading characteristics or positive-electrode preparation.

In the invention, the bulk density of a lithium-transition metal compound powder is determined by placing 5-10 g of the powder in a 10-mL measuring cylinder made of glass, tapping the measuring cylinder 200 times over a stroke length of about 20 mm, and calculating the density of the densified powder (tap density) in g/cc as the bulk density.

<BET Specific Surface Area>

The lithium lithium-transition metal compound powder according to the invention has a BET specific surface area which is generally 0.6 m$^2$/g or larger, preferably 0.7 m$^2$/g or larger, more preferably 0.8 m$^2$/g or larger, most preferably 0.9 m$^2$/g or larger, and is generally 3 m$^2$/g or less, preferably 2.8 m$^2$/g or less, more preferably 2.5 m$^2$/g or less, most preferably 2.0 m$^2$/g or less. In case where the BET specific surface area thereof is less than that range, battery performance is apt to decrease. In case where the BET specific surface area thereof exceeds that range, such a powder is less apt to have a high bulk density and there is a possibility that this powder is apt to pose a problem concerning applicability required for forming a positive active material.

Incidentally, BET specific surface area can be determined with a known BET specific surface area measuring apparatus for powders. In the invention, fully automatic specific surface area measuring apparatus for powders Type AMS 8000, manufactured by Ohkura Riken Co., Ltd., was used to conduct a measurement by the continuous-flow BET one-point method using nitrogen as an adsorbate gas and helium as a carrier gas. Specifically, a powder sample was degassed by heating to a temperature of 150°C with a mixture gas and subsequently cooled to a liquid-nitrogen temperature to adsorb the mixture gas. Thereafter, this sample was heated to room temperature with water to desorb the adsorbed nitrogen gas. The amount of the nitrogen gas thus desorbed was measured with a thermal conductivity detector, and the specific surface area of the sample was calculated therefrom.

<Reasons why the Positive electrode for lithium secondary battery according to Third Aspect of the Invention brings about those Affects>

The reasons why the positive electrode for lithium secondary battery according to the third aspect of the invention brings about the effects described above are presumed to be as follows.

It is presumed that since the lithium-transition metal compound powder to be used in the invention has a large angle of repose, the secondary particles have high surface roughness and the particles are more tenaciously bonded to the conductive material. It is therefore presumed that the conduction paths are inhibited from being lost due to, for example, the shedding of conductive-material particles during long-term use of the battery and that the desired effect of prolonging battery life is thus produced.

[Negative Electrode for Lithium Secondary Batteries]

The negative electrode for lithium secondary batteries is explained next.

The negative electrode for lithium secondary batteries in the invention is usually configured by forming a negative active layer on a negative current collector, in the same manner as for the positive electrodes for lithium secondary batteries described above.

The negative active layer can be produced usually by slurrying a negative active material, a conductive material, a binder, and a thickener, which is used according to need, with a liquid medium, applying the slurry to a negative current collector, and drying the slurry applied, as in the case of the positive active layer. With respect to the liquid medium, binder, thickener, and other ingredients including the conductive material which are used for forming the slurry, the same ingredients as those described above with regard to the positive active layer can be used in the same proportions.

<Active Material>

The negative active material is not limited in the kind thereof so long as the active material is capable of electrochemically occluding and releasing lithium ions. Usually, however, a carbon material capable of occluding and releasing lithium is used from the standpoint of high safety.

The carbon material is not particularly limited in the kind thereof. Examples thereof include graphites, such as artificial graphites and natural graphites, and pyrolysis residues obtained by pyrolyzing organic substances under various pyrolysis conditions. Examples of the residues of pyrolysis of organic substances include products of carbonization of coal coke, petroleum coke, and coal pitch, products of carbonization of petroleum pitch, products of carbonization of these pitches which have been oxidized, products of carbonization of needle coke, pitch coke, phenol resins, and crystalline cellulose, carbon materials obtained by partly graphitizing such carbonization products, and pitch-based carbon fibers. Preferred of these are graphites. It is especially suitable to mainly use a carbon material which is an artificial graphite produced by subjecting a readily graphitizable pitch obtained from any of various starting materials to a high-temperature heat treatment, a purified natural graphite, a graphite material including either of these graphites and a pitch incorporated thereinto, or the like and which has undergone any of various surface treatments. Those carbon materials each may be used alone, or two or more thereof may be used in combination.

In the case where a graphite material is used as the negative active material, it is preferred that the value of d (interplanar spacing) for the lattice planes (002) thereof, as determined by X-ray diffractometry in accordance with the method of the Japan Society for Promotion of Scientific Research, should be generally 0.335 nm or larger, and be generally 0.340 nm or less, especially 0.337 nm or less.

It is also preferred that the graphite material should have an ash content of generally 1% by weight or less, in particular 0.5% by weight or less, especially 0.1% by weight or less, based on the weight of the graphite material.

Furthermore, it is preferred that the crystallite size ($L_c$) of the graphite material, as determined by X-ray diffractometry in accordance with the method of the Japan Society for Promotion of Scientific Research, should be generally 30 nm or larger, in particular 50 nm or larger, especially 100 nm or larger.

It is preferred that the median diameter of the graphite material, as determined by the laser diffraction/scattering method, should be generally 1 $\mu$m or larger, in particular 3 $\mu$m or larger, preferably 5 $\mu$m or larger, especially 7 $\mu$m or larger, and be generally 100 $\mu$m or less, in particular 50 $\mu$m or less, preferably 40 $\mu$m or less, especially 30 $\mu$m or less.

The graphite material has a BET specific surface area which is generally 0.5 $m^2$/g or larger, preferably 0.7 $m^2$/g or larger, more preferably 1.0 $m^2$/g or larger, even more preferably 1.5 $m^2$/g or larger, and is generally 25.0 $m^2$/g or less, preferably 20.0 $m^2$/g or less, more preferably 15.0 $m^2$/g or less, even more preferably 10.0 $m^2$/g or less.

Moreover, it is preferred that when the graphite material is analyzed by Raman spectroscopy using argon laser light, then the ratio of the intensity $I_A$ of a peak $P_A$ observed in the range of 1,580-1,620 $cm^{-1}$ to the intensity $I_B$ of a peak $P_B$ observed in the range of 1,350-1,370 $cm^{-1}$, $I_A/I_B$, should be 0-0.5. Furthermore, the half-value width of the peak $P_A$ is preferably 26 $cm^{-1}$ or less, more preferably 25 $cm^{-1}$ or less.

Besides the various carbon materials described above, other materials capable of occluding and releasing lithium can be used as negative active materials. Examples of negative active materials other than carbon materials include elements, e.g., tin and silicon, that form alloys with lithium, compounds of these elements, elemental lithium, and lithium alloys such as lithium-aluminum alloys. One of these materials other than carbon materials may be used alone, or two or more thereof may be used in combination. Any of these materials may be used in combination with any of the carbon materials described above.

<Current Collector>

As the material of the negative current collector, use is made of a metallic material such as copper, nickel, stainless steel, or nickel-plated steel or a carbon material such as a carbon cloth or a carbon paper. In the case of metallic materials among these, examples thereof include metal foils, metal cylinders, metal coils, metal plates, and thin metal films. In the case of carbon materials, examples thereof include carbon plates, thin carbon films, and carbon cylinders. Preferred of these are thin metal films because these films are currently in use in products produced industrially. The thin films may be suitably processed into a mesh form.

In the case where a thin metal film is used as the negative current collector, the range of preferred thicknesses thereof is the same as the range described above with regard to the positive current collector.

[Lithium Secondary Batteries]

The lithium secondary batteries of the invention are explained next.

The lithium secondary batteries each are equipped with a positive electrode, a negative electrode, and a nonaqueous electrolyte including a lithium salt as an electrolyte salt, and are characterized in that either or both of the positive and negative electrodes are any of the positive electrodes of the invention for lithium secondary batteries described above.

The lithium secondary batteries of the invention each may be further equipped with a separator for holding the nonaqueous electrolyte, between the positive electrode and the negative electrode. It is desirable to thus interpose a separator in order to effectively prevent a short-circuit due to contact between the positive electrode and the negative electrode.

The lithium secondary batteries of the invention each are usually produced by assembling any of the positive electrodes of the invention for lithium secondary batteries described above and/or the negative electrode, an electrolyte, and a separator, which is used according to need, into a suitable shape. It is also possible to further use other constituent elements, e.g., an outer case, according to need.

<Electrolyte>

As the electrolyte, use can be made of a known organic electrolytic solution, solid polymer electrolyte, gel electrolyte, solid inorganic electrolyte, or the like. Preferred of these is an organic electrolytic solution. The organic electrolytic solution is configured by dissolving a solute (electrolyte) in an organic solvent.

The kind of the organic solvent is not particularly limited. For example, use can be made of carbonates, ethers, ketones, sulfolane compounds, lactones, nitriles, chlorinated hydrocarbons, amines, esters, amides, phosphoric acid ester compounds, and the like. Representative examples thereof include dimethyl carbonate, diethyl carbonate, ethyl methyl carbonate, propylene carbonate, ethylene carbonate, vinylene carbonate, tetrahydrofuran, 2-methyltetrahydrofuran, 1,4-dioxane, 4-methyl-2-pentanone, 1,2-dimethoxyethane, 1,2-diethoxyethane, $\gamma$-butyrolactone, 1,3-dioxolane, 4-methyl-1,3-dioxolane, diethyl ether, sulfolane, methylsulfolane, acetonitrile, propionitrile, benzonitrile, butyronitrile, valeronitrile, 1,2-dichloroethane, dimethylformamide, dimethyl sulfoxide, trimethyl phosphate, and triethyl phosphate.

These compounds may be used either alone or as a mixed solvent compound of two or more thereof.

It is preferred that the organic solvent described above should include a high-permittivity solvent from the standpoint of dissociating the electrolyte salt. The term high-permittivity solvent herein means a compound which has a relative permittivity at 25°C of 20 or higher. It is preferred that among such high-permittivity solvents, any of ethylene carbonate, propylene carbonate, and compounds formed by replacing hydrogen atoms of these carbonates with other element(s), e.g., a halogen, or with an alkyl group or the like should be contained in the electrolytic solution. The proportion of the high-permittivity solvent in the electrolytic solution is preferably 10% by weight or higher, more preferably 20% by weight or higher, most preferably 30% by weight or higher. When the content of the high-permittivity solvent is less than that range, there are cases where desired battery characteristics are not obtained.

The kind of the electrolyte salt also is not particularly limited, and any desired conventionally known solutes can be used. Examples thereof include $LiClO_4$, $LiAsF_6$, $LiPF_6$, $LiBF_4$, $LiB(C_6H_5)_4$, $LiCl$, $LiBr$, $CH_3SO_3Li$, $CF_3SO_3Li$, $LiN(SO_2CF_3)_2$, $LiN(SO_2C_2F_5)_2$, $LiC(SO_2CF_3)_3$, and $LiN(SO_3CF_3)_2$. Any desired one of these electrolyte salts may be used alone, or any desired two or more thereof may be used in combination in any desired proportion.

Such a lithium salt as an electrolyte salt may be incorporated into the electrolytic solution so as to result in a concentration thereof of generally 0.5-1.5 mol/L. In case where the concentration thereof is either less than 0.5 mol/L or higher than 1.5 mol/L, this electrolytic solution has a reduced electrical conductivity and this may exert an adverse influence on battery characteristics. In particular, the lower limit of the concentration thereof preferably is 0.75 mol/L or higher, and the upper limit thereof preferably is 1.25 mol/L or less.

An additive which forms, on the surface of the negative electrode, a satisfactory coating film that renders efficient charge/discharge of lithium ions possible, such as vinylene carbonate, vinylethylene carbonate, a gas, e.g., $CO_2$, $N_2O$, $CO$, or $SO_2$, or a polysulfide-$S_x^{2-}$, may be added to the electrolytic solution in a small amount.

Furthermore, an additive which has the effect of improving cycle life or output characteristics, such as, for example, lithium difluorophosphate, and an additive which has the effect of inhibiting gas evolution during high-temperature storage, such as, for example, propanesultone or propenesultone, may be added to the organic electrolytic solution in any desired proportion.

Also in the case where a solid polymer electrolyte is used, the kind thereof is not particularly limited. Use can be made of any desired crystalline or amorphous inorganic substance which is known as a solid electrolyte. Examples of crystalline inorganic solid electrolytes include $LiI$, $Li_3N$, $Li_{1+x}J_xTi_{2-x}(PO_4)_3$ (J = Al, Sc, Y, La), and $Li_{0.5-3x}RE_{0.5+x}TiO_3$ (RE = La, Pr, Nd, Sm). Examples of amorphous inorganic solid electrolytes include oxide glasses such as $4.9LiI-34.1Li_2O-61B_2O_5$ and $33.3Li_2O-66.7SiO_2$. Any desired one of these may be used alone, or any desired two or more thereof may be used in combination in any desired proportion.

<Separator>

In the case where the organic electrolytic solution described above is used as an electrolyte, a separator is interposed between the positive electrode and the negative electrode in order to prevent a short-circuit between the electrodes. Although the separator is not particularly limited in the material and shape thereof, it is preferred to use a separator which is stable to the organic electrolytic solution to be used and has excellent liquid retentivity and which can reliably prevent a short-circuit from occurring between the electrodes, Preferred examples thereof include microporous films or sheets, nonwoven fabric, and the like which are made of various polymeric materials. Examples of the polymeric materials which are usable include nylons, cellulose acetate, nitrocellulose, polysulfones, polyacrylonitrile, poly(vinylidene fluoride), and polyolefin polymers such as polypropylene, polyethylene, and polybutene. In particular, from the standpoint of chemical and electrochemical stability, which is an important factor in separators, polyolefin polymers are preferred. From the standpoint of self-shutoff temperature, which is one of the purposes of the use of a separator in batteries, polyethylene is especially desirable,

In the case where a separator constituted of polyethylene is used, it is preferred to employ ultrahigh-molecular polyethylene from the standpoint of high-temperature shape retentivity. The lower limit of the molecular weight thereof is preferably 500,000, more preferably 1,000,000, most preferably 1,500,000. On the other hand, the upper limit of the molecular weight thereof is preferably 5,000,000, more preferably 4,000,000, most preferably 3,000,000. The reason for this is as follows: when the polyethylene has too high a molecular weight, the flowability thereof is so low that there are cases where the pores of the separator do not close upon heating.

<Shapes>

The shapes of the lithium secondary batteries of the invention are not particularly limited, and can be suitably selected, according to the intended use thereof, from various shapes in general use. Examples of the shapes in general use include: a cylinder type in which sheet electrodes and separators have been spirally wound; a cylinder type of the inside-out structure which includes a combination of pellet electrodes and a separator; and a coin type in which pellet electrodes and a separator have been stacked. Methods for assembling the batteries also are not particularly limited, and a method suitable for the desired battery shape can be selected from various methods in common use.

<Charging Potential of the Positive Electrode in Fully Charged State>

In the following Examples, the lithium secondary batteries of the invention were used so that the positive electrodes had a charging potential lower than 4.4 V when the batteries were in a fully charged state. However, it is possible to use the positive electrodes in batteries which have been designed so that the charging potential is 4.4 V (vs. $Li/Li^+$) or higher. Namely, the lithium-nickel-manganese-cobalt composite oxide powder according to the invention, which is for use as a positive-electrode material for lithium secondary batteries, should effectively bring about the effects of the invention even when used in lithium secondary batteries which have been designed so as to be charged at a high charging potential.

General embodiments of the lithium secondary batteries of the invention were explained above. However, the lithium secondary batteries of the invention should not be construed as being limited to the embodiments, and the invention can be variously modified unless the modifications depart from the spirit of the invention.

Examples

The invention will be explained below in more detail by reference to Examples and Comparative Examples. However, the invention should not be construed as being limited by the following Examples unless the invention departs from the spirit thereof.

[Active Materials]

[Methods for Determining Properties]

Properties of the lithium-transition metal compound powder produced in each of the Examples and Comparative Examples which will be given later, etc. were determined in the following manners.

<Composition (Li/Ni/Mn/Co)>

The composition was determined by ICP-AES analysis.

<Quantitative Determination of Additive Elements (Mo, W, Nb, B, and Sn)>

The amounts of the additive elements were determined by ICP-AES analysis.

<Surface Composition Analysis of Primary Particles by X-ray Photoelectron Spectroscopy (XPS)>

The analysis was conducted using X-ray photoelectron spectroscope "ESCA-5700", manufactured by Physical Electronics, Inc., under the following conditions.
X-ray source: monochromatic Alk$\alpha$ Analysis area: 0.8 mm in diameter
Pickup angle: 65°
Method for quantitative analysis: The areas of the peaks B1s, $Mn2P_{1/2}$, $Co2P_{3/2}$, $Ni2P_{3/2}$, and W4fwere corrected with sensitivity.

<Median Diameter and d50 of Secondary Particles>

A measurement was made with a known laser diffraction/scattering type particle size distribution analyzer while setting the refractive index at 1.60a-0.10i and setting the basis of particle diameter at volume basis. A 0.1% by weight aqueous solution of sodium hexametaphosphate was used as a dispersion medium to conduct the measurement. Incidentally, an ultrasonic dispersion treatment was not conducted.

<Average Primary-particle Diameter>

The diameter was determined from an SEM image having a magnification of 30,000 diameters.

<Bulk Density>

The bulk density of a powder was determined by placing 4-10 g of a sample of the powder in a 10-mL measuring cylinder made of glass, tapping the measuring cylinder 200 times over a stroke length of about 20 mm, and calculating the density of the densified powder.

<Specific Surface Area>

The specific surface area was determined by the BET method.

<Volume Resistivity>

A powder resistivity meter (powder low-efficiency measurement system Roresta GP PD-41, manufactured by DIA Instruments Co., Ltd.) was used to examine a sample which weighed 3 g. The powder which was being pressed at any of various pressures was examined for volume resistivity [$\Omega \cdot cm$] with the probe unit for powders (four-probe ring electrode; electrode spacing, 5.0 mm; electrode radius, 1.0 mm; sample radius, 12.5 mm) using an applied-voltage limiter set at 90 V. A comparison was made with respect to the value of volume resistivity measured under a pressure of 40 MPa.

<Surface-enhanced Raman Spectroscopy (SERS)>

Apparatus: Nicoret Almega XR, manufactured by Thermo Fisher Scientific
Pretreatment: silver deposition (10 nm)
Excitation wavelength: 532 nm
Excitation output: 0.1 mW or less at the sample position
Analysis method: The height of each peak from which the linear background has been excluded and the half-value width thereof are measured.
Spectral resolution: 10 $cm^{-1}$

<Median Diameter of Pulverized Particles in Slurry>

A measurement was made with a known laser diffraction/scattering type particle size distribution analyzer while setting the refractive index at 1.24 and setting the basis of particle diameter at volume basis. A 0.1% by weight aqueous solution of sodium hexametaphosphate was used as a dispersion medium, and the measurement was made after a 5-minute ultrasonic dispersion treatment (output, 30 W; frequency, 22.5 kHz).

<Median Diameter, as Average Particle Diameter, of Starting-material $Li_2CO_3$ Powder>

A measurement was made with a known laser diffraction/scattering type particle size distribution analyzer (LA-920, manufactured by HORIBA Ltd.) while setting the refractive index at 1.24 and setting the basis of particle diameter at volume basis. Ethyl alcohol was used as a dispersion medium, and the measurement was made after a 5-minute ultrasonic dispersion treatment (output, 30 W; frequency, 22.5 kHz).

<Properties of Particulate Powder obtained by Spray Drying>

The morphology was ascertained through an examination with an SEM and a cross-section examination with an SEM. The median diameter as an average particle diameter and the 90%-cumulative diameter ($D_{90}$) were determined through an examination with a known laser diffraction/scattering type particle size distribution analyzer (LA-920, manufactured by HORIBA Ltd.) in which the refractive index had been set at 1.24 and the basis of particle diameter had been set at volume basis. A 0.1% by weight aqueous solution of sodium hexametaphosphate was used as a dispersion medium, and the measurement was made after an ultrasonic dispersion treatment (output, 30 W; frequency, 22.5 kHz) performed for 0 minute, 1 minute, 3 minutes, or 5 minutes. The specific surface area was determined by the BET method. The bulk density was determined by placing 4-6 g of a sample of the powder in a 10-mL measuring cylinder made of glass, tapping the measuring cylinder 200 times over a stroke length of about 20 mm, and calculating the density of the densified powder.

<EXAMPLES A1 TO A5 AND COMPARATIVE EXAMPLES A1 TO A4>

[Production of Lithium-transition Metal Compound Powders (Examples)] (Synthesis of Active Material 1)

$Li_2CO_3$, $NiCO_3$, $Mn_3O_4$, $CoOOH$, $H_3BO_3$, and $WO_3$ were weighed out and mixed together so as to result in a Li:Ni:Mn:Co:B:W molar ratio of 1.15:0.45:0.45:0.10:0.0025:0.015. Thereafter, pure water was added thereto to prepare a slurry. A circulating wet-process pulverizer of the dispersing medium agitation type was used to pulverize the solid matter contained in the slurry to a median diameter of 0.5 $\mu$m while stirring the slurry.
Subsequently, this slurry (solid content, 50% by weight; viscosity, 5,500 cP) was spray-dried using a four-fluid nozzle type spray dryer (Type MDP-50, manufactured by Fujisaki Electric Co., Ltd.). The dryer inlet temperature was set at 200°C. The particulate powder obtained by the spray drying with the spray dryer had a median diameter of 11 $\mu$m. This powder was introduced into a burning pot made of alumina. In an air atmosphere, the powder was burned at 650°C for 2 hours (heating rate, 7.7 °C/min), subsequently burned at 1,100C for 3.5 hours (heating rate, 7.7 °C/mm), and then disaggregated to obtain a lithium-nickel-manganese-cobalt composite oxide (x=0.1, y=0.00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 7.5 $\mu$m, a total content of particles of 5 $\mu$m and smaller of 28.7%, a bulk density of 1.9 g/cc, and a BET specific surface area of 0.9 m$^2$/g.
This sample was further examined by surface-enhanced Raman spectroscopy (SERS). As a result, the spectrum was ascertained to have a peak top at around 1,000 cm$^{-1}$. This peak had a half-value width of 85 cm$^{-1}$. The ratio of the intensity of a peak appearing at 800-1,000 cm$^{-1}$ to the intensity of a peak appearing at around 600$\pm$50 cm$^{-1}$ was 2.0.
Furthermore, the concentrations of B and W in the surface were determined by XPS, and the concentrations of B and W in the whole were calculated from the composition ratio of the feed materials. A comparison therebetween revealed that the surface concentrations were 30 times for B and 10 times for W.

(Synthesis of Active Material 2)

$Li_2CO_3$, $NiCO_3$, $Mn_3O_4$, $CoOOH$, $H_3BO_3$, and $WO_3$ were weighed out and mixed together so as to result in a Li:Ni:Mn:Co:B:W molar ratio of 1.15:0.45:0.45:0.10:0,0025:0.015. Thereafter, pure water was added thereto to prepare a slurry. A circulating wet-process pulverizer of the dispersing medium agitation type was used to pulverize the solid matter contained in the slurry to a median diameter of 0.5 $\mu$m while stirring the slurry.
Subsequently, this slurry (solid content, 50% by weight; viscosity, 5,500 cP) was spray-dried using a four-fluid nozzle type spray dryer (Type MDP-690, manufactured by Fujisaki Electric Co., Ltd.). The dryer inlet temperature was set at 200°C. The particulate powder obtained by the spray drying with the spray dryer had a median diameter of 17 $\mu$m. This powder was introduced into a burning pot made of alumina. In an air atmosphere, the powder was burned at 650°C for 2 hours (heating rate, 7.7 °C/min), subsequently burned at 1,150°C for 3.5 hours (heating rate, 7.7 °C/min), and then disaggregated to obtain a lithium-nickel-manganese-cobalt composite oxide (x=0.1, y=0,00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 9.9 $\mu$m, a bulk density of 2.7 g/cc, and a BET specific surface area of 0.5 m$^2$/g.
This sample was further examined by surface-enhanced Raman spectroscopy (SERS). As a result, the spectrum was ascertained to have a peak top at around 900 cm$^{-1}$. This peak had a half-value width of 85 cm$^{-1}$. The ratio of the intensity of the peak appearing at 800-1,000 cm$^{-1}$ to the intensity of a peak appearing at around 600$\pm$50 cm$^{-1}$ was 2.5.
Furthermore, the concentrations of B and W in the surface were determined by XPS, and the concentrations of B and W in the whole were calculated from the composition ratio of the feed materials. A comparison therebetween revealed that the surface concentrations were 60 times for B and 10 times for W.

(Synthesis of Active Material 3)

$Li_2CO_3$, $NiCO_3$, $Mn_3O_4$, $CoOOH$, $H_3BO_3$, and $WO_3$ were weighed out and mixed together so as to result in a Li:Ni:Mn:Co:B:W molar ratio of 1.15:0.45:0.45:0.10:0.0025:0.015. Thereafter, pure water was added thereto to prepare a slurry. A circulating wet-process pulverizer of the dispersing medium agitation type was used to pulverize the solid matter contained in the slurry to a median diameter of 0.5 $\mu$m while stirring the slurry.
Subsequently, this slurry (solid content, 50% by weight; viscosity, 5,500 cP) was spray-dried using a four-fluid nozzle type spray dryer (Type MDP-690, manufactured by Fujisaki Electric Co., Ltd.). The dryer inlet temperature was set at 200°C. The particulate powder obtained by the spray drying with the spray dryer had a median diameter of 17 $\mu$m. This powder was introduced into a burning pot made of alumina. In an air atmosphere, the powder was burned at 650°C for 2 hours (heating rate, 7.7 °C/min), subsequently burned at 1,125°C for 3.5 hours (heating rate, 7.7 °C/min), and then disaggregated to obtain a lithium-nickel-manganese-cobalt composite oxide (x=0.1, y=0.00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 10.0 $\mu$m, a bulk density of 2.1 g/cc, and a BET specific surface area of 1.0 $m^2$/g.

This sample was further examined by surface-enhanced Raman spectroscopy (SERS). As a result, the spectrum was ascertained to have a peak top at around 900 $cm^{-1}$. This peak had a half-value width of 78 $cm^{-1}$. The ratio of the intensity of the peak appearing at 800-1,000 $cm^{-1}$ to the intensity of a peak appearing at around 600$\pm$50 $cm^{-1}$ was 0.65.

Furthermore, the concentrations of B and W in the surface were determined by XPS, and the concentrations of B and W in the whole were calculated from the composition ratio of the feed materials. A comparison therebetween revealed that the surface concentrations were 50 times for B and 10 times for W.

(Comparative Active Material 1)

Use was made of a lithium-nickel-manganese-cobalt composite oxide which had the composition $Li_{1.05}$ $(Ni_{0.33}Mn_{0.33}Co_{0.33})O_2$ and had been produced by the coprecipitation method. This powder had a median diameter of 10.1 $\mu$m, a total content of particles of 5 $\mu$m and smaller of 0.0%, a bulk density of 2.2 g/cc, and a BET specific surface area of 0.4 $m^2$/g.

This sample was examined by surface-enhanced Raman spectroscopy (SERS). As a result, the spectrum was ascertained to have no peak top around 900 $cm^{-1}$.

The compositions and property values of the lithium-transition metal compound powders are shown in Table 1.

[Table 1]

Table 1

| | Composition (molar ratio) | d50 ($\mu$m) | Cumulation to 5 $\mu$m (%) | Powder resistivity ($\Omega\cdot$cm) | Specific surface area ($m^2$/g) | Tap density (g/cm$^3$) |
|---|---|---|---|---|---|---|
| Active material 1 | Ni/Mn/Co= 45/45/10 | 7.5 | 28.7 | 2.24E+06 | 0.9 | 1.9 |
| Active material 2 | Ni/Mn/Co= 45/45/10 | 9.9 | 16.6 | 2.70E+06 | 0.5 | 2.7 |
| Active material 3 | Ni/Mn/Co= 45/45/10 | 10.0 | 22.2 | 3.68E+06 | 1.0 | 2.1 |
| Comparative active material 1 | Ni/Mn/Co= 33/33/33 | 10.1 | 0.5 | 7.20E+04 | 0.4 | 2.2 |

[Conductive Materials]

[Methods for Determining Properties]

The kinds and properties of the conductive materials used in the following Examples and Comparative Examples are as follows.

With respect to the properties of the conductive materials, the following properties were determined in accordance with the methods described above: (1,500°C $\times$30 min) dehydrogenation amount, 24M4 DBP absorption, nitrogen adsorption specific surface area ($N_2$SA), crystallite size Lc, and DBP absorption.

[Table 2]

Table 2

| | | Conductive material 1 | Conductive material 2 | Conductive material 3 | Conductive material 4 | Conductive material 5 |
|---|---|---|---|---|---|---|
| Nitrogen adsorption specific surface area | $m^2$/g | 169 | 254 | 153 | 39 | 68 |
| DBP absorption | cm$^3$/100g | 173 | 166 | 130 | 215 | 164 |

(continued)

|  |  | Conductive material 1 | Conductive material 2 | Conductive material 3 | Conductive material 4 | Conductive material 5 |
|---|---|---|---|---|---|---|
| 24M4 DBP absorption | cm$^3$/100g | 134 | 119 | - | 95 | 125 |
| Crystallite size Lc | angstrom | 13.8 | 15.8 | 13 | 22.7 | 35 |
| Dehydrogenation amount | mg/g | 1.05 | 1.44 | - | 0.82 | 0.32 |
| Dmod | nm | 98 | - | - | 161 | 146 |
| D1/2 | nm | 65 | - | - | 675 | 192 |
| Dmod/24M4 DBP | | 0.73 | - | - | 1.69 | 1.17 |
| D1/2/24M4 DBP | | 0.48 | - | - | 7.11 | 1.54 |
| Powder resistivity | $\Omega \cdot$cm | 0.312 | - | - | 0.286 | 0.406 |
| CTAB adsorption specific surface area | m$^2$/g | 128 | - | - | - | 70 |
| Population density of oxygen-containing functional groups | $\mu$mol/m$^2$ | 2.23 | - | - | - | 3.44 |
| Average particle diameter | nm | 21 | 30 | 19 | 48 | 36 |

Conductive material 1, which was used in some of the Examples, was a conductive material produced by the oil furnace process described above. Conductive material 2 was VULCAN XC72-R (manufactured by Cabonet Corp.). Conductive material 3 was HIBLACK 40B1 (manufactured by Evonik-Degussa GmbH). Conductive material 4 and conductive material 5, which were used in some of the Comparative Examples, were commercial products (acetylene black manufactured by Denki Kagaku Kogyo K.K.) that are frequently used as conductive materials for conventional positive electrodes for lithium batteries.

[Fabrication of Test Cells]

Test cells were fabricated in the following manner.

<Kinds of Conductive Materials and Active Materials, and Combinations thereof>

The kinds and combination of the conductive material and active material used for the positive electrode in each of the Examples and Comparative Examples are as follows.

| | |
|---|---|
| Example A1 | conductive material 1/active material 1 |
| Comparative Example A1 | conductive material 4/active material 1 |
| Example A2 | conductive material 1/active material 2 |
| Example A3 | conductive material 2/active material 2 |
| Comparative Example A2 | conductive material 5/active material 2 |
| Comparative | Example A3 conductive material I/comparative active material I |
| Example A4 | conductive material 3/active material 3 |
| Example A5 | conductive material 5/[mechanochemically treated (active material 3 + conductive material 3)] |
| Comparative Example A4 | conductive material 5/active material 3 |

<Production of Positive Electrodes>

<EXAMPLE A1>

First, positive active material 1 and conductive material 1 were used, and these materials and a binder (PVdF solution in NMP; KF Polymer #1120, manufactured by Kureha Chemical, Industry Co., Ltd.) were weighed out and mixed together so as to result in an active material/conductive material/PVdF (on solid basis) ratio by mass of 94/3/3. Furthermore, NMP as a solvent was added thereto in such an amount as to result in a solid content of about 45% by weight. The resultant mixture was treated with a planetary centrifugal mixer to obtain an even slurry. Subsequently, this slurry was applied with a roll coater to an aluminum foil (thickness, 15 $\mu$m) as a current collector and dried. The deposition amount was 8.5 mg/cm$^2$. The resultant coating film was pressed with a roller press to 2.6 mg/cm$^3$.

<COMPARATIVE EXAMPLE A1>

A positive electrode was obtained in the same manner as in Example A1, except that conductive material 4 was used as the conductive material,

<EXAMPLE A2>

Positive active material 2 and conductive material 1 were used, and these materials and a binder (PVdF solution in NMP; KF Polymer #1120, manufactured by Kureha Chemical Industry Co., Ltd.) were weighed out and mixed together so as to result in an active material/conductive material/PVdF (on solid basis) ratio by mass of 92/5/3. Furthermore, NMP as a solvent was added thereto in such an amount as to result in a solid content of about 50% by weight. The resultant mixture was treated with a planetary centrifugal mixer to obtain an even slurry. Subsequently, this slurry was applied with a roll coater to an aluminum foil (thickness, 15 $\mu$m) as a current collector and dried. The deposition amount was 15.2 mg/cm$^2$.
The resultant coating film was pressed with a roller press to 2.9 mg/cm$^3$.

<EXAMPLE A3>

Positive active material 2 and conductive material 2 were used, and these materials and a binder (PVdF solution in NMP; KF Polymer #1120, manufactured by Kureha Chemical Industry Co., Ltd.) were weighed out and mixed together so as to result in an active material/conductive material/PVdF (on solid basis) ratio by mass of 92/5/3. Furthermore, NMP as a solvent was added thereto in such an amount as to result in a solid content of about 50% by weight. The resultant mixture was treated with a planetary centrifugal mixer to obtain an even slurry. Subsequently, this slurry was applied with a roll coater to an aluminum foil (thickness, 15 $\mu$m) as a current collector and dried. The deposition amount was 15.0 mg/cm$^2$.
The resultant coating film was pressed with a roller press to 2.9 mg/cm$^3$.

<COMPARATIVE EXAMPLE A2>

A positive electrode was obtained in the same manner as in Example A2, except that conductive material 5 was used as the conductive material.

<COMPARATIVE EXAMPLE A3>

A positive electrode was obtained in the same manner as in Example A2, except that comparative active material 1 was used as the active material.

<EXAMPLE A4>

A positive electrode was obtained in the same manner as in Example A2, except that conductive material 3 was used as the conductive material and active material 3 was used as the active material.

<EXAMPLE A5>

Positive active material 3 and conductive material 3 were added in an active material 3/conductive material 3 ratio of 95/1 (by weight), and this mixture was subjected to a mechanochemical treatment in which Mechanofusion System "AM-20FS", manufactured by Hosokawa Micron Corp., was used at a rotation speed of 2.600 rpm to apply compression/shear stress thereto for 30 minutes, thereby obtaining a positive-electrode material. This positive-electrode material and conductive material 5 were used, and these materials and a binder (PVdF solution in NMP; KF Polymer #1120, manufactured by Kureha Chemical Industry Co., Ltd.) were weighed out and mixed together so as to result in an active material 3/(mechanochemically treated conductive material 5 + conductive material 4)/(PVdF (on solid basis) ratio by mass of 92/5/3. Furthermore, NMP as a solvent was added thereto in such an amount as to result in a solid content of about 50% by weight. The resultant mixture was treated with a planetary centrifugal mixer to obtain an even slurry. Subsequently, this slurry was applied with a roll coater to an aluminum foil (thickness, 15 $\mu$m) as a current collector and dried. The deposition amount was 15.2 mg/cm$^2$.

The resultant coating film was pressed with a roller press to 2.9 mg/cm$^3$.

<COMPARATIVE EXAMPLE A4>

A positive electrode was obtained in the same manner as in Example A2, except that conductive material 5 was used as the conductive material and active material 3 was used as the active material.

<Production of Negative Electrode>

[Production of Negative Electrode]

A graphite powder having an average particle diameter of 8-10 $\mu$m (d$_{002}$ = 3.35 angstrom) was used as a negative active material, and carboxymethyl cellulose and a styrene/butadiene copolymer were used as binders. These materials were weighed out in a weight ratio of 98:1:1 1 and mixed together in water to obtain a negative-electrode mix slurry. This slurry was applied to one surface of a copper foil having a thickness of 10 $\mu$m and dried to vaporize the solvent. Thereafter, the coated foil was pressed so that the coating layer had a density of 1.45 g/cm$^3$, and a piece having dimensions of 3 cm $\times$ 4 cm was cut out of the coated foil. Thus, a negative electrode was obtained. The coating operation was conducted so that the amount of the negative active material present in the electrode was about 52-100 mg.

<Fabrication of Laminate Cells>

All the test cells used were laminate cells.
Each laminate cell was fabricated by interposing a separator between any of the positive electrodes and the negative electrode, adding a suitable amount of an electrolytic solution thereto, and conducting deaeration and sealing.
As the electrolytic solution was used an electrolytic solution obtained by dissolving LiPF$_6$ in a concentration of 1 mol/L in a solvent composed of EC (ethylene carbonate)/DMC (dimethyl carbonate)/EMC (ethyl methyl carbonate) = 3/3/4 (by volume). As the separator was used a piece cut out of a porous polyethylene film having a thickness of 25 $\mu$m.
Incidentally, the members to be used for the cell fabrication were vacuum-dried, and the whole cell fabrication was conducted in an argon box in order to exclude the influence of moisture.

[Determination of Capacity of Positive Electrodes and Negative Electrode]

The capacity of each positive electrode and that of the negative electrode were determined in the following manners.

<Initial Charge Capacity Qf of Negative Electrode>

In order to first determine the initial charge capacity Qf(c) (mAh/g) of the negative electrode, the negative electrode and a lithium metal foil were used as a test electrode and a counter electrode, respectively, to fabricate a coin cell in the manner described above. A constant current was permitted to flow through the electrodes at a current density per unit weight of the active material of 0.2 mA/cm$^2$ in the direction which caused the negative electrode to occlude lithium ions, namely, so that the following reaction took place.

$$C \text{ (graphite)} + xLi \rightarrow C \cdot Lix$$

Furthermore, at the time when 3 mV was reached, the charging was changed to constant-voltage charging in order to avoid lithium metal deposition. At the time when the current became about 0.05 mA, the charging was stopped. The initial charge capacity Qf(c) was determined from the total quantity of electricity which had flowed.
The negative electrode used in the Examples had an initial charge capacity Qf(c) of 390 mAh/g.

<Initial Charge Capacity Qs(c) and Initial Discharge Capacity Qs(d) of Positive Electrode>

In order to determine the initial charge capacity Qs(c) (mAh/g) and initial discharge capacity Qs(d) (mAh/g) of each positive electrode, the positive electrode and a lithium metal foil were used as a test electrode and a counter electrode, respectively, to fabricate a coin cell in the manner described above. A constant current was permitted to flow through the electrodes at a current density per unit weight of the active material of 0.2 mA/cm$^2$ in the direction which caused the positive electrode to release lithium ions, namely, so that the following charging reaction took place.

$$LiMeO_2 \rightarrow Li_{1-m}MeO_2 + mLi \text{ (Me means transition metal)}$$

At the time when the voltage reached 4.2 V, the charging was stopped. The initial charge capacity Qs(c) was determined from the quantity of electricity which had flowed during the charging.

Successively, a constant current was permitted to flow through the electrodes at a current density of 0.2 mA/cm$^2$ in the direction which caused the positive electrode to occlude lithium ions, namely, so that the following discharging reaction took place.

$$Li_{1-n}MeO_2 + bLi \rightarrow Li_{1-3+b}MeO_2$$

At the time when the voltage dropped to 3.0 V, the discharging was stopped. The initial discharge capacity Qs(d) was determined from the quantity of electricity which had flowed during the discharging.

[Cell Evaluation (Tests for Characteristics Determination)]

Tests for determining evaluation characteristics of the test coin cells were conducted by the following methods.

<Measurement of Initial Resistivity>

First, at 25°C, the coil cell was subjected to initial conditioning in which the coin cell was charged and discharged twice at a constant current of 0.2 C under the conditions of an upper limit of 4.2 V and a lower limit of 3.0 V. "1 C" was defined as 1 C = [Qs(d)×(weight of the positive active material)] (mA). However, the discharge capacity (mAh) determined through the second cycle was used to newly determine the value of 1 C (mA), which was used for setting the current value used in the cycle test.

After the initial conditioning, the coin cell was charged and discharged at a constant current of 1/3 C to regulate the state of charge thereof to 50%. At the ordinary temperature of 25°C, this coin cell was discharged at a constant current of 0.5 C [mA] for 10 seconds. When the voltage measured after the 10 seconds was expressed by V [mV] and the voltage measured before the discharging was expressed by $V_0$ [mV], then the resistance R [Ω] was calculated from ΔV=V-V$_0$ using the following equation:

$$R\,[\Omega] = \Delta V\,[mV]/0.5\,C\,[mA]$$

The same measurement was made after the coin cell was held for 1 hour or longer in a low-temperature atmosphere of -30°C.

<Evaluation of Cycle Characteristics (life test)>

Cycle characteristics were evaluated by conducting charge/discharge cycling at a constant current of 1 C under the conditions of an upper limit of 4.2 V and a lower limit of 3.0 V. In Example A1 and Comparative Example A1, the charging was conducted to 4.2 V at a constant current of 2 C and the discharging was conducted at a constant current of 2 C, and a 10-minute pause was inserted between each charging termination and the termination of the succeeding discharging.

With respect to Example A2, Comparative Example A2, and Comparative Example A3, the charging was conducted at 1 C at a constant voltage of 4.2 V and the discharging was conducted at a constant current of 1 C, and a 10-minute pause was inserted between each charging termination and the termination of the succeeding discharging.

The results of the cell evaluation are summarized in Table 3 and Table 4.

[Measurement of Resistance after Cycling]

A measurement was made in the same manner as the method for measuring initial resistance described above.

[Table 3]

Table 3

| | Active material | Conductive material | Composition ratio | Initial resistance | | Cycle characteristics*1 | Resistance after cycling | |
|---|---|---|---|---|---|---|---|---|
| | | | | 25°C | -30°C | Retention (%) | 25°C | -30°C |
| Example A1 | active material 1 | conductive material 1 | 94/3/3 | 1.5 | 68.3 | 71.8 | 3.5 | 113.9 |
| Comparative Example A1 | active material 1 | conductive material 4 | 94/3/3 | 2.4 | 78.2 | 43.6 | 13.4 | 126.8 |
| *1: 60°C, 2C cc/2C cc, 500 cycles | | | | | | | | |

[Table 4]

Table 4

| | Active material | Conductive material | Composition ratio | Initial resistance | | Cycle characteristics*2 | Resistance after cycling*3 | | Increase in resistance (%) | |
|---|---|---|---|---|---|---|---|---|---|---|
| | | | | 25°C | -30°C | Retention (%) | 25°C | -30°C | 25°C | -30°C |
| Example A2 | active material 2 | conductive material 1 | 92/5/3 | 1.2 | 42.5 | 79.5 | 2.3 | 67.1 | 192.4 | 158.1 |
| Example A3 | active material 2 | conductive material 2 | 92/5/3 | 1.3 | 43.5 | 77.2 | 2.8 | 75.4 | 213.8 | 173.4 |
| Comparative Example A2 | active material 2 | conductive material 5 | 92/5/3 | 1.3 | 50.4 | 63.4 | 3.3 | 92.0 | 246.4 | 182.7 |
| Comparative Example A3 | comparative active material 1 | conductive material 1 | 92/5/3 | 1.7 | 50.2 | 84.9 | 4.1 | 75.0 | 248.0 | 199.3 |
| Example A4 | active material 3 | conductive material 3 | 92/5/3 | 1.2 | 42.0 | 87.6 | 2.1 | 55.0 | 169.9 | 131.1 |
| Example A5 | active material 3 + conductive material 3 (mechanochemical treatment) | conductive material 5 | 92/5/3 | 1.3 | 49.1 | 85.6 | 2.6 | 70.4 | 194.7 | 143.4 |
| Comparative Example A4 | active material 3 | conductive material 5 | 92/5/3 | 1.2 | 42.8 | 71.4 | 2.5 | 77.0 | 207.4 | 179.7 |
| *2 and *3: 60°C, 1C cv/1C cc, 200 cycles | | | | | | | | | | |

<Measurement of Electrode Strength

As a measurement of positive electrode strength, a scratch strength test was conducted using TRIBOGEAR manufactured by HEIDON Co., Ltd. A coating film which had not been pressed was used as a sample, and a sapphire needle having a point diameter of 0.3 mm was used as a probe. The sample was moved while changing the load, and the value of load measured at the time when scratch dust began to generate was taken as the strength.
The results of the electrode strength test are shown in Table 5.
[Table 5]

Table 5

| | Active material | Conductive material | Composition ratio | Electrodes strength (gf) |
|---|---|---|---|---|
| Example A1 | active material 1 | conductive material 1 | 94/3/3 | 90 |
| Comparative Example A1 | active material 1 | conductive material 4 | 94/3/3 | 80 |
| Example A2 | active material 2 | conductive material 1 | 92/5/3 | 170 |
| Example A3 | active material 2 | conductive material 2 | 92/5/3 | 145 |
| Comparative Example A2 | active material 2 | conductive material 5 | 92/5/3 | 40 |
| Comparative Example A3 | comparative active material 1 | conductive material 1 | 92/5/3 | 50 |
| Example A4 | active material 3 | conductive material 3 | 92/5/3 | 240 |
| Example A5 | active material 3 + conductive material 3 (mechanochemical treatment) | conductive material 4 | 92/5/3 | 110 |
| Comparative Example A4 | active material 3 | conductive material 5 | 92/5/3 | 25 |

Table 5 shows the following. From a comparison between each Example and the Comparative Example in which the same active material was used, it can be seen that the Examples are clearly superior to the Comparative Examples in both output characteristics, such as initial resistance and resistance after cycling, and cycle characteristics. Furthermore, Table 5 shows the following. From a comparison between each Example and the Comparative Example in which the same active material was used, it can be seen that the Examples are clearly higher in film strength than the Comparative Examples.
Namely, it can be seen that the positive electrodes of the invention have a higher electrode strength than the conventional positive electrodes and combine improved output characteristics and improved cycle characteristics. It can also be seen that the increase in resistance through the cycling is also diminished.

<EXAMPLES B1 AND B2 AND COMPARATIVE EXAMPLES B1 AND B2>

(Synthesis of Active Material)

$Li_2CO_3$, $NiCO_3$, $Mn_3O_4$, $CoOOH$, $H_3BO_3$, and $WO_3$ were weighed out and mixed together so as to result in a Li:Ni:Mn:Co:B:W molar ratio of 1.15:0.45:0.45:0.10:0.0025:0.015. Thereafter, pure water was added thereto to prepare a slurry. A circulating wet-process pulverizer of the dispersing medium agitation type was used to pulverize the solid matter contained in the slurry to a median diameter of 0.5 $\mu$m while stirring the slurry.
Subsequently, this slurry (solid content, 50% by weight; viscosity, 5,500 cP) was spray-dried using a four-fluid nozzle type spray dryer (Type MDP-690, manufactured by Fujisaki Electric Co., Ltd.). The dryer inlet temperature was set at 200°C. The particulate powder obtained by the spray drying with the spray dryer had a median diameter of 17 $\mu$m, This powder was introduced into a burning pot made of alumina. In an air atmosphere, the powder was burned at 650°C for 2 hours (heating rate, 7.7 °C/min), subsequently burned at 1,125°C for 3.5 hours (heating rate, 7.7 °C/min), and then disaggregated to obtain a lithium-nickel-manganese-cobalt composite oxide (x=0.1, y=(0.00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 10.0 $\mu$m, a bulk density of 2.1 g/cc, and a BET specific surface area of 1.0 m$^2$/g.

This sample was further examined by surface-enhanced Raman spectroscopy (SERS). As a result, the spectrum was ascertained to have a peak top at around 900 cm$^{-1}$. This peak had a half-value width of 78 cm$^{-1}$. The ratio of the intensity of the peak appearing at 800-1,000 cm$^{-1}$ to the intensity of a peak appearing at around 600±50 cm$^{-1}$ was 0.65.

Furthermore, the concentrations of B and W in the surface were determined by XPS, and the concentrations of B and W in the whole were calculated from the composition ratio of the feed materials. A comparison therebetween revealed that the surface concentrations were 50 times for B and 10 times for W.

[Preparation of Slurries (Examples and Comparative Examples)]

(EXAMPLE B1)

The positive active material produced was mixed with a conductive material, a binder, and NMP using Thinky Mixer (manufactured by THINK) to prepare a positive-electrode slurry.

HIBLACK 40 B1 (manufactured by Evonik Degussa Japan Co., Ltd.) was used as the conductive material, and PVdF binder #1120 (manufactured by Kureha) was used as the binder. The materials were weighed out so as to result in a positive active material/conductive material/binder ratio of 92/5/3 by weight. With respect to the PVdF binder #1120, however, this material was weighed out so that the solid matter dissolved in the NMP accounted for 3 wt% of the weight of all solid components of the positive-electrode slurry.

The mixing was conducted in the following sequence. First, the conductive material was mixed with NMP, and the binder is subsequently mixed therewith. Finally, the positive active material was mixed therewith. In each step, the mixing operation was conducted at 1,000 rpm for 3 minutes. The NMP which was to be mixed first with the conductive material was weighed out so that the final N/V ratio of the positive-electrode slurry including the amount of NMP to be carried thereinto by the PVdF binder was 60%.

(EXAMPLE B2)

A positive-electrode slurry was prepared in the same manner as in Example B1, except that powdery acetylene black (manufactured by Nippon Chemical Industrial) was used as the conductive material and PVdF binder #7208 (manufactured by Kureha) was used as the binder.

(COMPARATIVE EXAMPLE B1)

A positive-electrode slurry was prepared in the same manner as in Example B1, except that PVdF binder #1710 (manufactured by Kureha) was used as the binder.

(COMPARATIVE EXAMPLE B2)

A positive-electrode slurry was prepared in the same manner as in Example B1, except that PVdF binder #7208 (manufactured by Kureha) was used as the binder.

[Determination of Elastic Change Behavior of the Slurries]

The elastic change behavior of each slurry prepared was determined with a rheometer (manufactured by Rheometric Scientific). In the examination with the rheometer, the strain and the frequency were set at 100% and 10, respectively, and the change in elasticity through 15 minutes from just after the slurry preparation was determined. The elasticity (A) of the slurry measured just after the preparation was compared with the elasticity (B) of the slurry which had been allowed to stand for 15 minutes after the preparation, and the change ratio was calculated using the following expression (1):

$$\text{Expression (1)} \qquad B/A \times 100$$

The value of viscosity behavior change ratio of each of the slurries prepared in Examples B1 and B2 and Comparative Examples B1 and B2, which was calculated using expression (1), is shown in Table 6.

[Table 6]

Table 6. Compositions and property values of the lithium-transition metal compounds synthesized in Examples and Comparative Examples

| | Specific surface area of conductive material ($m^2/g$) | Molecular weight of binder | Integrated value | Elasticity change ratio (%) |
|---|---|---|---|---|
| Example B1 | 153 | 28 | 4284 | 112 |
| Example B2 | 69 | 63 | 4347 | 145 |
| Comparative Example B1 | 153 | 50 | 7650 | gelation |
| Comparative Example B2 | 153 | 63 | 9639 | gelation (458) |

Table 6 shows that although the viscosity increase ratio in each Example was low, the ratios in the Comparative Examples were too high to be explained using a correlation with the integrated values. This is attributable to the gelation of the slurries.

<EXAMPLES C1 TO C4 AND COMPARATIVE EXAMPLES C1 AND C2>

(Synthesis of Active Material 1)

$Li_2CO_3$, $NiCO_3$, $Mn_3O_4$, $CoOOH$, $H_3BO_3$ and $WO_3$ were weighed out and mixed together so as to result in a Li:Ni:Mn:Co:B:W molar ratio of 1.15:0.45:0.45:0.10:0.0025:0.015. Thereafter, pure water was added thereto to prepare a slurry. A circulating wet-process pulverizer of the dispersing medium agitation type was used to pulverize the solid matter contained in the slurry to a median diameter of 0.5 $\mu$m while stirring the slurry.

Subsequently, this slurry (solid content, 50% by weight; viscosity, 5,500 cP) was spray-dried using a four-fluid nozzle type spray dryer (Type MDP-690, manufactured by Fujisaki Electric Co., Ltd.). The dryer inlet temperature was set at 200°C. The particulate powder obtained by the spray drying with the spray dryer had a median diameter of 17 $\mu$m.

This powder was introduced into a burning pot made of alumina. In an air atmosphere, the powder was burned at 650°C for 2 hours (heating rate, 7.7 °C/min), subsequently burned at 1,125°C for 3.5 hours (heating rate, 7.7 °C/min), and then disaggregated to obtain a lithium-nickel-manganese-cobalt composite oxide (x=0.1, y=0.00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 10.0 $\mu$m, a total content of particles of 5 $\mu$m and smaller of 22.2%, a bulk density of 2.1 g/cc, a BET specific surface area of 1.4 $m^2/g$, and an angle of repose of 53°.

This sample was further examined by surface-enhanced Raman spectroscopy (SERS). As a result, the spectrum was ascertained to have a peak top at around 900 $cm^{-1}$. This peak had a half-value width of 78 $cm^{-1}$. The ratio of the intensity of the peak appearing at 800-1,000 $cm^{-1}$ to the intensity of a peak appearing at around 600$\pm$50 $cm^{-1}$ was 0.65.

Furthermore, the concentrations of B and W in the surface were determined by XPS, and the concentrations of B and W in the whole were calculated from the composition ratio of the feed materials. A comparison therebetween revealed that the surface concentrations were 50 times for B and 10 times for W.

(Synthesis of Active Material 2)

Active material 2 was synthesized in the same manner as for active material 1, except that $Li_2CO_3$, $NiCO_3$, $Mn_3O_4$, $CoOOH$, $H_3BO_3$, $WO_3$, and $Li_2SO_4$ were weighed out so as to result in a Li:Ni:Mn:Co:B.W:S molar ratio of 1.15: 0.45:0.45:0.10:0.0025:0.015:0.0075. The composite oxide thus obtained had an average primary-particle diameter of 1 $\mu$m, a median diameter of 10.9 $\mu$m, a total content of particles of 5 $\mu$m and smaller of 17.1%, a bulk density of 1.9 g/cc, a BET specific surface area of 1.0 $m^2/g$, and an angle of repose of 51°.

(Synthesis of Active Material 3)

A powder obtained by spray drying in the same manner as for active material 1 was introduced into a burning pot made of alumina. In an air atmosphere, the powder was burned at 650°C for 2 hours (heating rate, 7.7 °C/min), subsequently burned at 1,150°C for 3.5 hours (heating rate, 7.7 °C/min), and then disaggregated to obtain a lithium-nickel-manganese-cobalt composite oxide (x=0.1, y=0.00, z=0.15) which had the composition $Li_{1.15}(Ni_{0.45}Mn_{0.45}Co_{0.10})O_2$ and had a lamellar structure. This composite oxide had an average primary-particle diameter of 1 $\mu$m, a median diameter of 9.9 $\mu$m, a total content of particles of 5 $\mu$m and smaller of 16.6%, a bulk density of 2.7 g/cc, a BET specific surface area of 0.5 $m^2$/g, and an angle of repose of 48°.

The compositions and property values of the lithium-transition metal compound powders are shown in Table 7.

[Table 7]

Table 7

|  | Composition Ni/Mn/Co (molar ratio) | D50 ($\mu$m) | Cumulation to 5 $\mu$m (%) | Volume resistivity ($\Omega \cdot$cm) | Specific surface area ($m^2$/g) | Bulk density (g/$cm^3$) | Angle of repose (degrees) |
|---|---|---|---|---|---|---|---|
| Active material 1 | 45/45/10 | 10.0 | 22.2 | 3.68E+06 | 1.0 | 2.1 | 53 |
| Active material 2 | 45/45/10 | 10.9 | 17.1 | 7.17E+05 | 1.0 | 1.9 | 51 |
| Active material 3 | 45/45/10 | 9.9 | 16.6 | 2.70E+06 | 0.5 | 2.7 | 48 |

[Conductive Materials]

The kinds and properties of the conductive materials used in the following Examples and Comparative Examples are as shown in the following Table 8.

[Table 8]

Table 8

|  |  | Conductive material 1 | Conductive material 2 |
|---|---|---|---|
| Nitrogen adsorption specific surface area | $m^2$/g | 169 | 68 |
| DBP absorption | $cm^3$/100g | 173 | 164 |
| 24M4 DBP absorption | $cm^3$/100g | 134 | 125 |
| Lc | angstrom | 13.8 | 35 |
| Dehydrogenation amount | mg/g | 1.05 | 0.32 |
| Dmod | nm | 98 | 146 |
| D1/2 | nm | 65 | 192 |
| Dmod/24M4 DBP |  | 0.73 | 1.17 |
| D1/2/24M4 DBP |  | 0.48 | 1.54 |
| Powder resistivity | $\Omega \cdot$cm | 0.312 | 0.406 |
| CTAB absorption specific surface area | $m^2$/g | 128 | 70 |
| Population density of oxygen-containing functional groups | $\mu$mol/$m^2$ | 2.23 | 3.44 |
| Average particle diameter | nm | 21 | 36 |

Conductive material 1, which was used in some of the Examples, was a conductive material produced by the oil furnace process, and conductive material 2 was a commercial product (acetylene black manufactured by Denki Kagaku Kogyo) and is in general use as a conductive material for conventional positive electrodes for lithium batteries.

With respect to the properties of the conductive materials, the following properties were determined in accordance with the methods described above: (1,500°C $\times$30 min) dehydrogenation amount, 24M4 DBP absorption, nitrogen adsorption specific surface area ($N_2$SA), crystallite size Lc, and DBP absorption.

[Fabrication of Test Cells]

Test cells were fabricated in the following manner.

<Kinds of Conductive Materials and Active Materials, and Combinations thereof>

The kinds and combination of the conductive material and active material used for the positive electrode in each of the Examples and Comparative Examples are as follows,

| | |
|---|---|
| Example C1 | conductive material 1/active material 1 |
| Example C2 | conductive material 1/active material 2 |
| Comparative Example C1 | conductive material 1/active material 3 |
| Example C3 | conductive material 2/active material 1 |
| Example C4 | conductive material 2/active material 2 |
| Comparative Example C2 | conductive material 2/active material 3 |

<Production of Positive Electrodes>

<EXAMPLE C1>

First, positive active material 1 and conductive material 1 were used, and these materials and a binder (PVdF solution in NMP; KF Polymer #1120, manufactured by Kureha Chemical Industry Co., Ltd.) were weighed out and mixed together so as to result in an active material/conductive material/PVdF (on solid basis) ratio by mass of 92/5/3. Furthermore, NMP as a solvent was added thereto in such an amount as to result in a solid content of about 50% by weight. The resultant mixture was treated with a planetary centrifugal mixer to obtain an even slurry. Subsequently, this slurry was applied with a roll coater to an aluminum foil (thickness, 15 $\mu$m) as a current collector and dried. The deposition amount was 15.2 mg/cm$^2$. The resultant coating film was pressed with a roller press to 2.9 mg/cm$^3$.

<EXAMPLE C2>

A positive electrode was obtained in the same manner as in Example C1, except that active material 2 was used as the positive active material.

<COMPARATIVE EXAMPLE C1>

A positive electrode was obtained in the same manner as in Example C1, except that active material 3 was used as the positive active material.

<EXAMPLE C3>

A positive electrode was obtained in the same manner as in Example C1 except that conductive material 2 was used as the conductive material and that KF Polymer #7208, which was a PVdF solution in NMP manufactured by Kureha Chemical Industry Co., Ltd., was used as the binder.

<EXAMPLE C4>

A positive electrode was obtained in the same manner as in Example C3, except that active material 2 was used as the positive active material,

<COMPARATIVE EXAMPLE C2>

A positive electrode was obtained in the same manner as in Example C3, except that active material 3 was used as the positive active material.

<Production of Negative Electrodes>

A graphite powder having an average particle diameter of 8-10 $\mu$m ($d_{002}$ = 3.35 angstrom) was used as a negative active material, and carboxymethyl cellulose and a styrene/butadiene copolymer were used as binders. These materials were weighed out in a weight ratio of 98:1:1 and mixed together in water to obtain a negative-electrode mix slurry. This slurry was applied to one surface of a copper foil having a thickness of 10 $\mu$m and dried to vaporize the solvent. Whereafter, the coated foil was pressed so that the coating layer had a density of 1.45 g/cm$^3$, and a piece having dimensions of 3 cm $\times$ 4 cm was cut out of the coated foil. Thus, a negative electrode was obtained. The coating operation was conducted so that the amount of the negative active material present in the electrode was about 103 mg.

<Fabrication of Laminate Cells>

All the test cells used were laminate cells.

Each laminate cell was fabricated by interposing a separator between any of the positive electrodes and the negative electrode, adding a suitable amount of an electrolytic solution thereto, and conducting deaeration and sealing.

As the electrolytic solution was used an electrolytic solution obtained by dissolving LiPF$_6$ in a concentration of 1 mol/L in a solvent composed of EC (ethylene carbonate)/DMC (dimethyl carbonate)/EMC (ethyl methyl carbonate) = 3/3/4 (by volume). As the separator was used a piece cut out of a porous polyethylene film having a thickness of 25 $\mu$m.

Incidentally, the members to be used for the cell fabrication were vacuum-dried, and the whole cell fabrication was conducted in a dry room (dew point, -45°C) in order to exclude the influence of moisture.

[Determination of Capacity of Positive Electrodes and Negative Electrode]

The capacity of each positive electrode and that of the negative electrode were determined in the following manners.

<Initial Charge Capacity Qf of Negative Electrode>

In order to first determine the initial charge capacity Qf(c) (mAh/g) of the negative electrode, the negative electrode and a lithium metal foil were used as a test electrode and a counter electrode, respectively, to fabricate a coin cell of the CR2032 type. A constant current was permitted to flow through the electrodes at a current density per unit weight of the active material of 0.2 mA/cm$^2$ in the direction which caused the negative electrode to occlude lithium ions, namely, so that the following reaction took place.

$$C \text{ (graphite)} + xLi \rightarrow C \cdot Lix$$

Furthermore, at the time when 3 mV was reached, the charging was changed to constant-voltage charging in order to avoid lithium metal deposition. At the time when the current became about 0.05 mA, the charging was stopped. The initial charge capacity Qf(c) was determined from the total quantity of electricity which had flowed.

The negative electrode used in the Examples had an initial charge capacity Qf(c) of 390 mAh/g.

<Initial Charge Capacity Qs(c) and Initial Discharge Capacity Qs(d) of Positive Electrode>

In order to determine the initial charge capacity Qs(c) (mAh/g) and initial discharge capacity Qs(d) (mAh/g) of each positive electrode, the positive electrode and a lithium metal foil were used as a test electrode and a counter electrode, respectively, to fabricate a coin cell of the CR2032 type. A constant current was permitted to flow through the electrodes at a current density per unit weight of the active material of 0.2 mA/cm$^2$ in the direction which caused the positive electrode to release lithium ions, namely, so that the following charging reaction took place.

$LiMeO_2 \rightarrow Li_{1-m}MeO_2 + mLi$ (Me means transition metal)

At the time when the voltage reached 4.2 V, the charging was stopped. The initial charge capacity Qs(c) was determined from the quantity of electricity which had flowed during the charging.

Successively, a constant current was permitted to flow through the electrodes at a current density of 0.2 mA/cm$^2$ in the direction which caused the positive electrode to occlude lithium ions, namely, so that the following discharging reaction took place.

$$Li_{1-n}MeO_2 + bLi \rightarrow Li_{1-a+b}MeO_2$$

At the time when the voltage dropped to 3.0 V, the discharging was stopped. The initial discharge capacity Qs(d) was determined from the quantity of electricity which had flowed during the discharging.

In the positive electrodes used in the Examples, active material 1 had an initial charge capacity Qs(c) of 168 mAh/g and an initial discharge capacity Qs(d) of 139 mAh/g, while active material 2 had an initial charge capacity Qs(c) of 166 mAh/g and an initial discharge capacity Qs(d) of 146 mAh/g.

[Cell Evaluation (Tests for Characteristics Determination)]

<Evaluation of Cycle Characteristics (life test)>

First, at 25°C, the coil cell was subjected to initial conditioning in which the coin cell was charged and discharged twice at a constant current of 0.2 C under the conditions of an upper limit of 4.2 V and a lower limit of 3.0 V. "1 C" was defined as 1 C = [Qs(d)×(weight of the positive active material)] (mA). However, the discharge capacity (mAh) determined through the second cycle was used to newly determine the value of 1 C (mA), which was used for setting the current value used in the cycle test.
Cycle characteristics were evaluated by conducting charge/discharge cycling at a constant current of 1 C under the conditions of an upper limit of 4.2 V and a lower limit of 3.0 V. The charging was conducted at 1 C at a constant voltage of 4.2 V and the discharging was conducted at a constant current of 1 C, and a 10-minute pause was inserted between each charging termination and the termination of the succeeding discharging.
The results of the cell evaluation are summarized in Table 9.
[Table 9]

| | Active material | Conducive material | Cycle characteristics | Increase in resistance through cycling (%) | |
| --- | --- | --- | --- | --- | --- |
| | | | Retention (%) | 25°C | -30°C |
| Examples C1 | active material 1 | conductive material 1 | 87.7 | 167.2 | 144.1 |
| Example C2 | active material 2 | conductive material 1 | 88.0 | 140.7 | 135.3 |
| Comparative Example C1 | active material 3 | conductive material 1 | 79.8 | 196.5 | 167.2 |
| Example C3 | active material 1 | conductive material 2 | 71.4 | 206.0 | 181.0 |
| Example C4 | active material 2 | conductive material 2 | 68.7 | 190.9 | 180.4 |
| Comparative Example C2 | active material 3 | conductive material 2 | 63.4 | 245.8 | 183.7 |

Table 9 shows the following. From a comparison between each Example and the Comparative Example in which the same conductive material was used, it can be seen that the Examples are clearly superior to the Comparative Examples in both cycle capacity retention and cycle output retention.
Namely, it can be seen that the positive active materials according to the invention, in which the secondary particles have high surface roughness and which namely have a large angle of repose, show tenacious bonding to the conductive materials, thereby simultaneously bringing about an improvement in cycle capacity retention and an improvement in cycle output retention.
While the invention has been described in detail and with reference to specific embodiments thereof, it will be apparent to one skilled in the art that various changes and modifications can be made therein without departing from the spirit and scope thereof This application is based on a Japanese patent application filed on July 16, 2010 (Application No. 2010-161815), the contents thereof being incorporated herein by reference.

Industrial Applicability

Applications of lithium secondary batteries employing the lithium-transition metal composite oxide powders according to the invention are not particularly limited, and the batteries can be used in various known applications. Examples thereof include notebook type personal computers, pen-input personal computers, mobile personal computers, electronic-book players, portable telephones, portable facsimile telegraphs, portable copiers, portable printers, headphone stereos, video movie cameras, liquid-crystal TVs, handy cleaners, portable CD players, mini-disk players, transceivers, electronic pocketbooks, electronic calculators, memory cards, portable tape recorders, radios, backup power sources, motors, illuminators, toys, game machines, clocks and watches, stroboscopes, cameras, pace makers, power tools, power sources for motor vehicles, power sources for tracked vehicles, and power sources for artificial satellites.

**Claims**

1. A positive electrode for lithium secondary battery which comprises an active Material and a conductive material, wherein
   the active material comprises a lithium-transition metal compound which has a function of being capable of insertion and desorption of lithium ion,
   the lithium-transition metal compound gives a surface-enhanced Raman spectrum which has a peak at 800-1,000 cm$^{-1}$, and
   the conductive material comprises carbon black which has a nitrogen adsorption specific surface area (N$_2$SA) of 70-300 m$^2$/g and an average particle diameter of 10-35 nm.

2. The positive electrode for lithium secondary battery according to claim 1, wherein in the surface-enhanced Raman spectrum of the lithium-transition metal compound, the peak at 800-1,000 cm$^{-1}$ has a half-value width of 30 cm$^{-1}$ or larger.

3. The positive electrode for lithium secondary battery according to claim 1 or 2, wherein in the surface-enhanced Raman spectrum of the lithium-transition metal compound, a ratio of an intensity of the peak at 800-1,000 cm$^{-1}$ to an intensity of a peak at around 600$\pm$50 cm$^{-1}$ is 0.04 or greater.

4. A positive electrode for lithium secondary battery which includes an active material and a conductive material, wherein the active material comprises: a lithium-transition metal compound having a function of being capable of insertion and desorption of lithium ion; at least one element, as additive element 1, selected from B and Bi; and at least one element, as additive element 2, selected from Mo and W, wherein a molar ratio of a sum of the additive element 1 to a sum of metallic elements other than the lithium and the additive element 1 and additive element 2 in surface part of primary particles of the active material is at least 20 times the molar ratio in the whole particles, and
   the conductive material comprises carbon black which has a nitrogen adsorption specific surface area (N$_2$SA) of 70-300 m$^2$/g and an average particle diameter of 10-35 nm,

5. The positive electrode for lithium secondary battery according to any one of claims 1 to 4, wherein a molar ratio of a sum of the additive element 2 to a sum of metallic elements other than the lithium and the additive element 1 and additive element 2 in surface part of primary particles of the active material is at least 3 times the molar ratio in the whole particles.

6. A positive electrode for lithium secondary battery which comprises an active material and a conductive material, wherein
   the active material is a lithium-transition metal compound powder obtained by adding both one or more compounds, as additive 1, that contain at least one element selected from B and Bi and one or more compounds, as additive 2, that contain at least one element selected from Mo and W to a raw material which comprises a lithium-transition metal compound having a function of being capable of insertion and desorption of lithium ion, in such a proportion that the total amount of the additive 1 and the additive 2 is 0.01% by mole or more but less than 2% by mole based on the total amount of the transition metal element(s) contained in the raw material, and then burning the mixture, and
   the conductive material comprises carbon black which has a nitrogen adsorption specific surface area (N$_2$SA) of 70-300 m$^2$/g and an average particle diameter of 10-35 nm.

7. The positive electrode for lithium secondary battery according to any one of claims 1 to 6, which is obtained by subjecting the active material and the conductive material to a mechanochemical treatment.

8. The positive electrode for lithium secondary battery according to any one of claims 1 to 7, wherein the carbon black has a crystallite size Lc of 10-40 angstrom.

9. The positive electrode for lithium secondary battery according to any one of, claims 1 to 8, wherein the proportion of the conductive material to the weight of the active material is 0.5-15% by weight.

**10.** The positive electrode for lithium secondary battery according to any one of claims 1 to 9, wherein the active material comprises a lithium-nickel-manganese-cobalt composite oxide which includes a crystal structure that belongs to a lamellar structure.

**11.** The positive electrode for lithium secondary battery according to any one of claims 1 to 10, wherein the carbon black is oil-furnace carbon black.

**12.** A lithium secondary battery which comprises a positive electrode, a negative electrode, and a nonaqueous electrolyte that contains a lithium salt, wherein
the positive electrode is the positive electrode for lithium secondary battery according to any one of claims 1 to 11.

**13.** A positive electrode for lithium secondary battery which comprises an active material, a conductive material, and a binder, wherein
the conductive material has a nitrogen adsorption specific surface area ($N_2SA$) of 70 $m^2$/g or larger, and
when the nitrogen adsorption specific surface area ($N_2SA$, unit: $m^2$/g) of the conductive material is expressed by S and a weight-average molecular weight of the binder is expressed by M, the S and the M satisfy the following expression (1).

$$(S \times M)/10,000 \leq 7,500 \tag{1}$$

**14.** A positive electrode for lithium secondary battery which comprises an active material, a conductive material, and a binder, wherein
the conductive material has an average particle diameter of 35 nm or less, and
when the nitrogen adsorption specific surface area ($N_2SA$, unit: $m^2$/g) of the conductive material is expressed by S and the weight-average molecular weight of the binder is expressed by M, the S and the M satisfy the following expression (1).

$$(S \times M)/10,000 \leq 7,500 \tag{1}$$

**15.** A positive electrode for lithium secondary battery which comprises an active material, a conductive material, and a binder, wherein
the conductive material has a volatile content of 0.8% or higher, and
when the nitrogen adsorption specific surface area ($N_2SA$, unit: $m^2$/g) of the conductive material is expressed by S and the weight-average molecular weight of the binder is expressed by M, the S and the M satisfy the following expression (1).

$$(S \times M)/10,000 \leq 7,500 \tag{1}$$

**16.** The positive electrode for lithium secondary battery according to any one of claims 13 to 15, wherein the binder has a weight-average molecular weight of 600,000 or less.

**17.** The positive electrode for lithium secondary battery according to any one of claims 13 to 16, wherein the binder is PVDF.

**18.** The positive electrode for lithium secondary battery according to any one of claims 13 to 17, wherein the conductive material has a nitrogen adsorption specific surface area ($N_2SA$) of 70 $m^2$/g or larger.

**19.** The positive electrode for lithium secondary battery according to any one of claims 13 to 18, wherein the conductive material has an average particle diameter of 35 nm or less.

**20.** The positive electrode for lithium secondary battery according to any one of claims 13 to 19, wherein the conductive material has a volatile content of 0.8% or higher.

**21.** The positive electrode for lithium secondary battery according to any one of claims 13 to 20, wherein the conductive material is oil-furnace carbon black.

**22.** The positive electrode for lithium secondary battery according to any one of claims 13 to 21, wherein the proportion of the conductive material to the weight of the active material is 0.5-15% by weight.

**23.** The positive electrode for lithium secondary battery according to any one of claims 13 to 22, wherein the active material comprises a lithium-transition metal composite oxide.

**24.** The positive electrode for lithium secondary battery according to any one of claims 13 to 23, wherein the active material gives a surface-enhanced Raman spectrum which has a peak at 800-1,000 cm$^{-1}$.

**25.** A lithium secondary battery which comprises a positive electrode, a negative electrode, and a nonaqueous electrolyte that contains a lithium salt, wherein
the positive electrode is the positive electrode for lithium secondary battery according to any one of claims 13 to 24.

**26.** A positive electrode for lithium secondary battery which comprises an active material and a conductive materials, wherein
the active material is a compound which is capable of occluding and releasing lithium,
the active material, when compacted at a pressure of 40 MPa, has a volume resistivity of $5 \times 10^5$ $\Omega \cdot$cm or higher,
the active material has an angle of repose of 50° or larger and has a bulk density of 1.2 g/cc or higher, and
the conductive material has a nitrogen adsorption specific surface area (N$_2$SA) of 20-300 m$^2$/g.

**27.** The positive electrode for lithium secondary battery according to claim 26, wherein the active material has a median diameter of 2 $\mu$m or larger.

**28.** The positive electrode for lithium secondary battery according to claim 26 or 27, wherein the active material has a BET specific surface area of 0.6-3 m$^2$/g.

**29.** The positive electrode for lithium secondary battery according to any one of claims 26 to 28, wherein the active material gives a surface-enhanced Raman spectrum which has speak at 800-1,000 cm$^{-1}$.

**30.** The positive electrode for lithium secondary battery according to any one of claims 26 to 29, wherein the conductive material comprises carbon black which has an average particle diameter of 10-35 nm.

**31.** The positive electrode for lithium secondary battery according to any one of claims 26 to 30, wherein the carbon black has a crystallite size Lc of 10-40 angstrom.

**32.** The positive electrode for lithium secondary battery according to any one of claims 26 to 31, wherein the proportion of the conductive material to the weight of the active material is 0.5-15% by weight.

**33.** The positive electrode for lithium secondary battery according to any one of claims 26 to 32, which contains a lithium-nickel-manganese-cobalt composite oxide which includes a crystal structure that belongs to a lamellar structure.

**34.** The positive electrode for lithium secondary battery according to any one of claims 26 to 33, wherein the carbon black is at least one of acetylene black and oil-furnace carbon black.

**35.** A lithium secondary battery which comprises a positive electrode, a negative electrode, and a nonaqueous electrolyte that contains a lithium salt, wherein
the positive electrode is the positive electrode for lithium secondary battery according to any one of claims 26 to 34.

## INTERNATIONAL SEARCH REPORT

| | International application No. |
|---|---|
| | PCT/JP2011/066109 |

**A. CLASSIFICATION OF SUBJECT MATTER**
*H01M4/131*(2010.01)i, *H01M4/13*(2010.01)i, *H01M4/36*(2006.01)i, *H01M4/505*
(2010.01)i, *H01M4/525*(2010.01)i, *H01M4/62*(2006.01)i

According to International Patent Classification (IPC) or to both national classification and IPC

**B. FIELDS SEARCHED**

Minimum documentation searched (classification system followed by classification symbols)
H01M4/131, H01M4/13, H01M4/36, H01M4/505, H01M4/525, H01M4/62

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-270161 A (Mitsubishi Chemical Corp.), 06 November 2008 (06.11.2008), claims; paragraphs [0138], [0196]; examples & JP 2009-164140 A & JP 2009-289758 A & US 2011/0003200 A1 & EP 2110872 A1 & EP 2337125 A1 & WO 2008/078695 A1 & KR 10-2009-0092268 A & CN 101536220 A & CN 101997114 A & CN 101997115 A | 1-3,5,7-12 |
| A | JP 2009-289726 A (Mitsubishi Chemical Corp.), 10 December 2009 (10.12.2009), abstract; claims; examples & US 2010/0209771 A1 & EP 2202828 A1 & WO 2009/031619 A1 & KR 10-2010-0063041 A & CN 101796672 A | 1-3,5,7-12 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 September, 2011 (28.09.11) | 11 October, 2011 (11.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/066109 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-210007 A (Mitsubishi Chemical Corp.), 10 August 2006 (10.08.2006), abstract; claims; paragraphs [0015] to [0016]; examples (Family: none) | 1-3,5,7-12 |
| A | JP 2006-52237 A (Mitsubishi Chemical Corp.), 23 February 2006 (23.02.2006), abstract; claims; examples & US 2006/0186383 A1    & EP 1666543 A1 & WO 2005/012438 A1    & CN 1829776 A | 1-3,5,7-12 |
| A | JP 2005-276474 A (Sumitomo Osaka Cement Co., Ltd.), 06 October 2005 (06.10.2005), paragraph [0045] (Family: none) | 1-3,5,7-12 |
| A | WO 01/91211 A1 (Mitsubishi Cable Industries, Ltd.), 29 November 2001 (29.11.2001), examples 4 to 7 & US 2003/0165739 A1    & AU 5879001 A & TW 531922 B        & CN 1430796 A | 1-3,5,7-12 |
| A | WO 2008/108360 A1 (Toyo Ink Manufacturing Co., Ltd.), 12 September 2008 (12.09.2008), paragraphs [0065], [0095]; examples 26, 27 & JP 4240157 B        & US 2010/0028773 A1 & US 2010/0233532 A     & EP 2068385 A1 & KR 10-2009-0048652 A   & CN 101548418 A | 1-3,5,7-12 |
| A | JP 2006-107753 A (Dainippon Printing Co., Ltd.), 20 April 2006 (20.04.2006), claims; examples 1 to 7 (Family: none) | 1-3,5,7-12 |
| A | JP 2007-103041 A (Dainippon Printing Co., Ltd.), 19 April 2007 (19.04.2007), abstract; claims; examples (Family: none) | 1-3,5,7-12 |

Form PCT/ISA/210 (continuation of second sheet) (July 2009)

## INTERNATIONAL SEARCH REPORT

| | International application No. |
|---|---|
| | PCT/JP2011/066109 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
    1-3, 5, 7-12

**Remark on Protest**      ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2011/066109 |

Continuation of Box No.III of continuation of first sheet(2)

Document 1: JP 2005-276474 A (Sumitomo Osaka Cement Co., Ltd.) 06 October 2005 (06.10.2005), [0045]

Document 2: WO 01/91211 A1 (Mitsubishi Cable Industries, Ltd.) 29 November 2001 (29.11.2001), examples 4-7

Document 3: WO 2008/108360 A1 (Toyo Ink Manufacturing Co., Ltd.) 12 September 2008 (12.09.2008), [0065], [0095], examples 26, 27

Document 4: JP 2006-107753 A (Dainippon Printing Co., Ltd.) 20 April 2006 (20.04.2006), claims, examples 1-7

i) It is considered that the inventions described in claims 1-35 are common to one another only in a matter "a positive electrode for a lithium secondary battery, which comprises an active material and a conductive material". However, the matter is disclosed in documents 1-4, and is therefore a known technical matter and cannot be regarded as a special technical feature. Further, there is found no other same or corresponding special technical feature.

ii) It is considered that the inventions described in claims 1-12 are common to one another only in a matter "a positive electrode for a lithium secondary battery, which comprises an active material and a conductive material, wherein the active material comprises a lithium transition metal compound and the conductive material comprises a carbon black having an $N_2SA$ value of 70 to 300 $m^2/g$ inclusive and an average particle diameter of 10 to 35 nm inclusive". However, the matter is disclosed in documents 1-3, and is therefore a known technical matter and cannot be regarded as a special technical feature. Further, there is found no other same or corresponding special technical feature.

iii) It is considered that the inventions described in claims 13-25 are common to one another only in a matter "a positive electrode for a lithium secondary battery, which comprises an active material, a conductive material and a binder and fulfils the requirement represented by the formula: $(S \times M)/10000 \leq 7500$". However, the matter is disclosed in document 3 or 4, and is therefore a known technical matter and cannot be regarded as a special technical feature. Further, there is found no other same or corresponding special technical feature.

As stated in items i)-iii) above, the claims include the following 7 inventions.

(Invention 1) The inventions described in claims 1-3, 5, and 7-12.
(Invention 2) The invention described in claim 4.
(Invention 3) The invention described in claim 6.
(Invention 4) The inventions described in claims 13, and 16-25.
(Invention 5) The invention described in claim 14.
(Invention 6) The invention described in claim 15.
(Invention 7) The inventions described in claims 26-35.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008270161 A
- JP 2006210007 A
- JP 2009037937 A
- JP 2005268206 A

- JP 2001307729 A
- JP 2006278031 A
- JP 2006052237 A
- JP 2010161815 A